Europäisches Patentamt

European Patent Office

Office européen des brevets

(19)

(11) **EP 0 679 251 B1**

(12) **EUROPÄISCHE PATENTSCHRIFT**

(45) Veröffentlichungstag und Bekanntmachung des Hinweises auf die Patenterteilung:
**08.04.1998 Patentblatt 1998/15**

(21) Anmeldenummer: **94905081.9**

(22) Anmeldetag: **18.01.1994**

(51) Int Cl.$^6$: **G01N 21/64**

(86) Internationale Anmeldenummer:
**PCT/EP94/00117**

(87) Internationale Veröffentlichungsnummer:
**WO 94/16313 (21.07.1994 Gazette 1994/17)**

(54) **VERFAHREN UND VORRICHTUNG ZUR BEWERTUNG DER FITNESS VON BIOPOLYMEREN**

METHOD AND DEVICE FOR ASSESSING THE SUITABILITY OF BIOPOLYMERS

PROCEDE ET DISPOSITIF PERMETTANT D'EVALUER L'APTITUDE A L'EMPLOI DE BIOPOLYMERES

(84) Benannte Vertragsstaaten:
**AT BE CH DE DK ES FR GB GR IE IT LI LU MC NL PT SE**

(30) Priorität: **18.01.1993 DE 4301005**
**22.05.1993 EP 93912765**
**15.12.1993 DE 4342703**

(43) Veröffentlichungstag der Anmeldung:
**02.11.1995 Patentblatt 1995/44**

(73) Patentinhaber: **Evotec BioSystems GmbH**
**D-22529 Hamburg (DE)**

(72) Erfinder:
- **RIGLER, Rudolf**
  **Am Fassberg D-37077 Göttingen (DE)**
- **EIGEN, Manfred**
  **D-37075 Göttingen (DE)**
- **HENCO, Karsten**
  **D-40699 Erkrath (DE)**

(74) Vertreter:
**Meyers, Hans-Wilhelm, Dr.Dipl.-Chem. et al**
**Patentanwälte**
**von Kreisler-Selting-Werner**
**Postfach 10 22 41**
**50462 Köln (DE)**

(56) Entgegenhaltungen:
**EP-A- 0 245 206       EP-A- 0 319 815**
**EP-A- 0 501 688       WO-A-92/01513**
**US-A- 4 405 237       US-A- 5 223 408**

- **BIOPHYSICAL JOURNAL, Bd.43, Nr.1, Juli 1983 Seiten 103 - 114 N.L. THOMPSON ET AL 'Immunoglobin surface-binding kinetics studied by total internal reflection with fluorescence correlation spectroscopy'**
- **BIOCHIMICA ET BIOPHYSICA ACTA, Bd.610, 1980 Seiten 28 - 46 S.M. SORSCHER ET AL 'The use of fluorescence correlation spectroscopy to probe chromatin in the cell nucleus'**
- **EUROPEAN BIOPHYSICS JOURNAL, Bd.12, Nr.3, 1985 Seiten 163 - 166 P. KASK ET AL 'Fluorescence correlation spectroscopy in the nanosecond time range: photon antibinding in dye fluorescence'**
- **FLUORESCENCE SPECTROSCOPY Herausgeber: O.S. WOLFBEIS, Springer-Verlag, 1992, Seiten 13-24**
- **SPRINGER SERIES IN OPTICAL SCIENCES, Band 38: 5. Int. Conf. Photon Correlation Techniques in Fluid Mechanics, Kiel-Damp, DE, 23-26 Mai 1982**
- **BIOPHYSICAL JOURNAL, Bd.54, Nr.6, Dezember 1988 Seiten 983 - 993 T. MEYER ET AL 'Particle counting by fluorescence correlation spectroscopy'**
- **JOURNAL OF CELL SCIENCE, Bd.88, 1987 Seiten 145 - 149 R. WIEGAND ET AL 'Laser-induced fusion of mammalian cells and plant protoplasts'**
- **BIOPHYSICAL JOURNAL, Bd.51, Nr.2, Februar 1987 Seiten 339 - 343 A.G. PALMER III ET AL 'Theory of sample translation in fluorescence correlation spectroscopy'**

**(Forts. nächste Seite)**

- BIOPHYSICAL JOURNAL, Bd.49, Nr.4, April 1986 Seiten 809 - 815 N.O. PETERSON ET AL 'Scanning fluorescence correlation spectroscopy'
- PROCEEDINGS 46th ANNUAL MEETING ELECTRON MICROSCOPY SOCIETY OF AMERICA, MILWAUKEE, CA, 7-12 August 1988, Seiten 38-39
- AIP CONFERENCE PROCEEDINGS, Nr. 258 48th INT. PHYSICAL CHEMISTRY MEETING: SYCHROTRON RADIATION AND DYNAMIC PHENOMENA, GRENOBLE, FR, 1991,
- BIOPHYSICAL JOURNAL Bd. 41, Nr. 2, Februar 1983, Seiten 119 - 133 O.S. ANDERSEN 'Ion movement through gramicidin A channels. Single-channel measurements at very high potentials'
- APPLIED OPTICS, Bd.32, Nr.6, 20. Februar 1993, NEW YORK US Seiten 794 - 805 A.P. LARSON ET AL 'Semiconductor laser-induced fluorescence detection in picoliter volume flow cells'
- MICROBIOLOGY AND IMMUNOLOGY, Bd.36, Nr.5, 1992 Seiten 479 - 494 S. HARADA ET AL 'Induced CD25 expression in a human B-lymphoma cell line transfected with the Epstein-Barr virus nuclear antigen 2 gene'
- THE JOURNAL OF BIOLOGICAL CHEMISTRY, Bd.267, Nr.6, 25. Februar 1992 Seiten 4084 - 4096 R.D. TEASDALE ET AL 'The signal for Golgi retention of bovine beta-1,4-galactosyltransferase Is in the transmembrane domain'
- JOURNAL OF VIROLOGY, Bd.64, Nr.6, Juni 1990 Seiten 2788 - 2795 A. YASUDA ET AL 'Induction of protective immunity in animals vaccinated with recombinant vaccinia viruses ...'
- EUROPEAN JOURNAL OF IMMUNOLOGY, Bd.22, Nr.11, 1992 Seiten 2777 - 2781 O.T. KEPLER ET AL 'Human Golgi beta-galactoside alpha-2,6-sialyltransferase generates a group of sialylated B lymphocyte differentiation antigens'
- MOLECULAR ENDOCRINOLOGY, Bd.5, Nr.11, 1991 Seiten 1696 - 1706 E.J. PLATT ET AL 'Altered effects of glucocorticoids on the trafficking and processing of mouse mammary tumor virus glycoproteins ...'
- VIROLOGY, Bd.178, Nr.1, 1990 Seiten 263 - 272 V. LITWIN ET AL 'Cell surface expression of the varicella-zoster virus glycoproteins and Fc receptor'
- THE JOURNAL OF CELL BIOLOGY, Bd.108, Nr.2, Februar 1989 Seiten 339 - 353 J. HEARING ET AL 'Isolation of Chinese hamster ovary cell lines temperature conditional for the cell-surface expression of integral membrane glycoproteins'
- BLOOD, Bd.69, Nr.3, März 1987 Seiten 886 - 892 R.A.ASHMUN ET AL 'Expression of the human monocyte membrane antigen gp55 by murine fibroblasts after DNA-mediated gene transfer'

**Beschreibung**

Gegenstand der vorliegenden Erfindung ist ein Verfahren zur Identifizierung von einem oder wenigen Molekülen in einem Meßvolumen, das Teil eines Probenvolumens ist, insbesondere in einer Verdünnung von $\leq$ 1 µM unter Verwendung der laserangeregten Fluoreszenzkorrelationsspektroskopie sowie eine Vorrichtung zur Durchführung des erfindungsgemäßen Verfahrens.

Die Analytik von biologisch aktiven Molekülen wurde in den letzten Jahren bezüglich Spezifität und Sensitivität ständig verbessert und durch grundsätzlich neue Techniken ergänzt. In diesem Zusammenhang sei auf Klonierungsmethoden oder die Methoden der enzymatischen Amplifikation genetischen Materials verwiesen, um einzelne Zellen oder Moleküle zahlenmäßig so zu verstärken, daß sie einer konventionellen Analyse zugänglich werden. Es wäre aber in vielen Fällen vorteilhafter, wenn Analysenverfahren hinreichend empfindlich wären, um einzelne Moleküle oder Ensembles mit wenigen Molekülen direkt qualitativ und quantitativ zu erfassen.

Die Elektronenmikroskopie ist beispielsweise ein Verfahren, mit dem einzelne Moleküle erfaßt werden können. So wird versucht, mit der Tunnelelektronenmikroskopie einzelne DNA-Moleküle zu sequenzieren. Dies ist jedoch sehr aufwendig.

Über die reine Analytik einzelner Moleküle hinaus sind für viele Bereiche Aussagen über Zustandsparameter der Moleküle wichtig wie deren Konformation und Wechselwirkung mit anderen Molekülen oder molekularen Strukturen.

Moderne Methoden der evolutiven Biotechnologie befassen sich mit hochkomplexen Kollektiven von Molekülen. Es gilt dabei, Moleküle mit spezifischen Wechselwirkungseigenschaften gegenüber Zielstrukturen zu identifizieren, das heißt, eine bestimmte Fitness bezüglich einer erwünschten Funktion zu messen. Eine solche Fitness läßt sich auf thermodynamische Parameter wie Bindungskonstanten bzw. Geschwindigkeitskonstanten zurückführen.

Zur Lösung bestimmter Problemstellungen ist es manchmal weniger entscheidend, die Sensitivität einer Bestimmungsmethode zu steigern, wenn zum Beispiel das zu analysierende Moleküle nur in kleinen Konzentrationen vorliegt. Vielmehr muß eine sehr große Probenzahl bewältigt werden, die mehr oder weniger zeitgleich analysiert werden muß. Wenn innerhalb eines Zeitraumes von Stunden z.B. $10^6$ Analysen durchzuführen sind, ist es offensichtlich, daß nur ein Analyseverfahren in Frage kommen kann, dessen Proben in einem Zeitintervall von ca. 1 ms bis maximal 1 s vermessen und ausgewertet werden können. Die der Erfindung zugrunde liegende Aufgabe besteht unter anderem darin, ein Verfahren anzugeben, das es erlaubt, über die reine Detektion einzelner Moleküle hinaus, Informationen über ihre spezifische Wechselwirkung mit anderen Molekülen oder molekularen Strukturen zu erhalten. Darüber hinaus soll eine sehr große Probenzahl quasi gleichzeitig analysiert werden können.

Das erfindungsgemäße Verfahren beruht auf einer Lumineszenzdetektion und nutzt eine Methode, die als Fluoreszenz-Korrelations-Spektroskopie (FCS) an sich bekannt ist. Chromophore Molekülstrukturen mit Fluoreszenzeigenschaften lassen sich nutzen, um Aussagen über die molekulare Umgebung eines chromophoren Liganden zu erhalten. Es lassen sich Rotationsdiffusion und Translationsdiffusion eines Luminophors messen, sowie verschiedene Wege der Energieübertragung auf wechselwirkende Moleküle, chemische Kinetik und die Lebensdauer angeregter Zustände.

Das erfindungsgemäße Verfahren bietet auf der Basis an sich bekannter physikalisch chemischer Phänomene neue Problemlösungen, um an einzelnen oder wenigen Molekülen unter Ausnutzung spektroskopischer Meßparameter Aussagen über die Natur der Moleküle zu erhalten, sowie Aussagen über ihre Fitness bezüglich einer bestimmten Wechselwirkungsfunktion oder über den Besetzungsgrad verschiedener molekular definierter Zustände eines Luminophors.

Thompson und Axelrod (Biophysical Journal, Bd. 43, Nr. 1, S. 103 - 114, 1983) beschreiben die experimentelle Applikation der Methode der Totalreflexion-Fluoreszenzkorrelationsspektroskopie (TIR-FCS) zur Bestimmung von Bindungskinetiken und Oberflächendiffusionskoeffizienten fluoreszenzmarkierter Substanzen.

Sorscher et al. (Biochimica et Biophysica Acta, Bd. 610, S. 28 - 46, 1980) verwenden die Fluoreszenzkorrelationsspektroskopie zur Chromatinuntersuchung in Zellkernen. Basierend auf der Erkenntnis, daß die Stärke einer Farbstoffbindung in solchen Zellkernen erhöht ist, die aus wachstumsstimulierten Zellen isoliert wurden, wird hier ein Verfahren zur Bestimmung des Zellzustandes offenbart.

Die Fluoreszenzkorrelationsspektroskopie im Nanosekundenbereich ist Thema der Untersuchungen von Kask et al. (European Biophysics Journal, Bd. 12, Nr. 3, S. 163 - 166, 1985). Hierbei wird das Phänomen des ,, Antibunching" betrachtet, d.h. der Tatsache, daß zwei Fluoreszenzphotonen, die vom selben fluoreszenten Molekül stammen, nicht beliebig schnell hintereinander emittiert werden.

Rigler et al. (in: Fluorescence Spectroscopy, Herausgeber: O. S. Wolfbeis, Springer-Verlag, S. 13 - 24, 1992) untersuchen mit Hilfe der Fluoreszenzkorrelationsspektroskopie molekulare Interaktionen und Kinetiken unter Verwendung von rhodamin-markiertem $\alpha$-Bungarotoxin und Acetylcholinrezeptor.

Meyer und Schindler (Biophysical Journal, Bd. 54, Nr. 4, S. 983 - 993, 1988) beschreiben ein Verfahren zur simultanen Bestimmung von Molmassen und lateralen Diffusionskonstanten von Partikeln in zwei- und dreidimensionalen Systemen.

Die Europäische Patentanmeldung 0 501 688 A1 (Hitachi) beschreibt die Verwendung eines Laser-Mikroskopes bei der Mikropunktion von Zellen, in die Fremd-DNA eingeschleust werden soll.

Das Verfahren der Korrelationsfluoreszenz-Spektroskopie, wie es von den Gruppen um D. Magde (Elson, E.L. & Magde, D. (1974) Fluorescence correlation spectroscopy; Conceptional basis and theory; Biopolymers 13, 1-27) und R. Rigler (Ehrenberg, M. & Rigler, R. (1974) Rotational Brownian motion and fluorescence intensity fluctuations; Chem. Phys.4, 390 - 401) seit fast zwanzig Jahren verfolgt wurde, konnte technisch bislang nicht ohne weiteres in ein praktikables Analyseverfahren umgesetzt werden. Es war nicht möglich, den oben genannten Anforderungen bzgl. Meßzeiten und der Problematik der licht-induzierten Ausbleichung (Photobleaching) der Farbstoffe gerecht zu werden. Rigler et al. konnten Rotationszeiten von Molekülen bestimmen. Magde et al. konnten einige chemische Reaktionskonstanten über Fluktuationszeiten bestimmen.

Das Meßprinzip der FCS beruht darauf, daß fluorophore Moleküle in äußerst verdünnten Lösungen gemessen werden (≤ 10 nM), indem ein relativ kleines Meßvolumen der Lösung einem starken Anregungslicht eines Laser ausgesetzt wird. Nur die Moleküle entsprechenden Anregungsspektrums, die sich in eben diesem Volumen aufhalten, werden durch das Licht angeregt. Die emittierte Fluoreszenz aus diesem Meßvolumen kann dann auf einen Photomultiplier hoher Sensitivität abgebildet werden. Handelt es sich um verdünnte Lösungen, so ergeben sich nennenswerte Schwankungen der Konzentration der sich in dem jeweiligen Meßvolumen befindlichen Moleküle.

Bei sehr verdünnten Lösungen ergibt sich insbesondere eine Poisson-Verteilung der Zahl der gleichzeitig in dem Meßvolumen vorhandenen Moleküle pro Zeitintervall. Ein Molekül, das einmal in das Meßvolumen diffundiert ist, wird sich gemäß seiner charakteristischen Diffusionsgeschwindigkeit (der Translation) in einer durchschnittlichen, aber für das betreffende Molekül charakteristischen Zeit wieder aus dem Meßvolumen entfernen und somit nicht mehr zu beobachten sein.

Wenn nun die Lumineszenz ein und desselben Moleküls während seiner durchschnittlichen Aufenthaltsdauer in dem entsprechenden Meßvolumen viele Male angeregt werden kann, lassen sich von diesem Molekül viele Lumineszenzsignale erfassen. Mit anderen Worten, die Wahrscheinlichkeit, daß ein einmal in das Meßvolumen diffundiertes Molekül vor seinem Wiederaustritt aus dem Meßvolumen nochmals angeregt werden kann, ist bei verdünnten Lösungen viel größer, als dies für ein neueintretendes Molekül gilt. Das bedeutet aber, daß das entsprechende Lumineszenzsignal mit entsprechend großer Wahrscheinlichkeit von ein und demselben Molekül stammt und nicht von einem neu in das Meßvolumen hineingekommenen Molekül. Somit läßt sich eine Korrelation der zeitlichen Veränderung der auflaufenden Emissionssignale mit den relativen Diffusionszeiten der beteiligten Molekülspezies erstellen.

Wird die Drehung der Polarisationsebene von Anregungslicht und emittiertem Licht als ein weiterer Parameter gemessen, so läßt sich auch der Rotationsdiffusionskoeffizient der beteiligten Moleküle bestimmen, aus dem Aufschlüsse über Molekulargewicht, Formparameter oder die umgebende Matrix gewonnen werden können.

Es wird deutlich, daß es sogar möglich ist, einzelne Moleküle in verdünnten Lösungen dadurch zu erfassen, daß ein und dasselbe Molekül sehr oft (mehrtausendfach) angeregt wird und das entsprechende Lumineszenzsignal in vielen Einzelmessungen akkumuliert wird.

Der Umsetzung dieses Meßprinzips in die Praxis standen viele technische Schwierigkeiten entgegen. Das Meßvolumen war trotz des Einsatzes moderner Lasertechnologie so groß, daß sich biologisch interessante Moleküle mit niedrigen Translations diffusionskoeffizienten in einer Größenordnung von etwa 50 ms im Meßvolumen aufhielten. Diese Zeitdauer ist erheblich zu lange, denn sie bedingt ein starkes Ausbleichen der jeweils eingesetzten Farbstoffliganden, die als Luminophor dienen. Häufige Anregung erhöht die chemische Reaktivität der luminophoren Struktur mit Molekülen der Umgebung, insbesondere mit Sauerstoff, wodurch die Lumineszenz verändert oder gelöscht (Quenching) wird. Natürlich führt auch Ausbleichung (Photobleaching) direkt zu falschen Meßdaten, da ein Verlust der Lumineszenz (Fluoreszenz) den Austritt des Moleküls aus dem Meßvolumen vortäuscht und eine Unterscheidung durch Standardisierung der Meßmethode kaum möglich ist oder sich nur durch unverhältnismäßig großen technischen Aufwand erzielen läßt.

Somit waren der breiten praktischen Umsetzung des Meßprinzips in ein allgemein anwendbares Verfahren bislang enge Grenzen gesetzt, die durch das erfindungsgemäße Verfahren jedoch überwunden werden.

Der entscheidende Durchbruch auf dem Weg zu einem Routineverfahren für die oben definierten Aufgabenstellungen der FCS wird erfindungsgemäß durch die Einführung ultrakleiner Meßvolumina (vorzugsweise $10^{-14}$ - $10^{-17}$ l) bei Probenvolumina im µl-Bereich erreicht, deren Realisierung den gleichzeitigen erfindungsgemäßen Einsatz bestimmter Elemente der Anregungsoptik, der Einzelphotonenregistrierung und der Probenhandhabung voraussetzt. Das Meßvolumen der in den experimentellen Anordnungen beschriebenen Vorrichtung ist mit $2 \times 10^{-16}$ l ca. 1000fach kleiner als die in der Literatur beschriebenen Meßvolumina. Die ausgeleuchtete Fläche hat somit in etwa die Dimension von 0,1 $\mu m^2$. Legt man die Annahme zugrunde, daß die FCS besonders korrekte Daten für eine Konzentration chromophorer Moleküle von 0,1 - 10 Moleküle pro Meßvolumen liefert, so ist die Arbeitskonzentration ca. $10^{-7}$ - $10^{-9}$ M. Technisch realisierbar sind Messungen mit maximaler Detektionseffizienz und Hintergrunddiskriminierung durch Verwendung einer konfokalen Optik hoher Apertur in Kombination mit Einzelphotonendetektion.

Bindungskonstanten können dann über die Translationsdiffusion bestimmt werden, wenn die Reaktionszeit langsam gegenüber der Diffusionszeit ist. Das heißt, ein zu beobachtender Ligand verändert während seines Eintrittes in das Meßvolumen und seinem Austritt seine molekulare Struktur nicht oder nur kaum. Ansonsten wird nur eine Korrelation gemessen, die den gemischten Zustand beschreibt. Hier wird wiederum die Bedeutung des erfindungsgemäßen Verfahrens mit sehr kleinen Meßvolumina deutlich, da die Verweilzeit eines Moleküls ca. 1000-fach kleiner ist als in den bisherigen Meßvolumina und somit die üblichen Dimensionen für Gleichgewichtskonstanten und Geschwindigkeitskonstanten spezifischer, biologischer Erkennungsreaktionen, z.B. Ligand/Rezeptor-Wechselwirkung, für eine Messung erschließt.

1. Die erfindungsgemäße Bedeutung der kleinen Meßvolumina

Erfindungsgemäß haben die kleinen Meßvolumina verschiedene und experimentell unterscheidbare Bedeutung für die Durchführung der erfindungsgemäßen Verfahren und deren Verwendungen.

Die Bedeutung der kleinen Meßvolumina ist unter folgenden Aspekten zu sehen:

- Hintergrunds- Streustrahlung, insbesondere Ramanstrahlung,
- Lebensdauer von Fluoreszenzfarbstoffen unter Lichteinfluß,
- kurze Meßzeiten,
- Diffusionszeiten makromolekularer Komplexe, Viren, Zellen,
- Unversehrtheit/Schonung der nicht im Meßvolumina befindlichen Komplexe und
- Lebensdauer von Komplexen während der Meßzeit.

Aus den untenstehenden Erläuterungen wird deutlich, daß sich mehrere Parameter gleichzeitig im erfindungsgemäß gewünschten Sinne positiv auswirken bei der Realisierung kleiner Meßvolumina und durch kumulative Wirkung zu der erfindungsgemäß nicht linearen/exponentiellen Verbesserung der Methodik geführt haben, die die Lösung der erfindungsgemäßen Aufgabe überhaupt erst ermöglicht haben.

Ein für die Messung einzelner Moleküle notwendiges Signal/Hintergrundsverhältnis von 1000 wird durch kleine Meßvolumina erreicht im fl- und sub-fl-Bereich. Die Verschlechterung dieses Verhältnisses folgt der dritten Potenz des vergrößerten Radius des Meßvolumens ($r^3$). Diesem Verhalten wurde bei früheren experimentellen Vorgehensweisen keine Bedeutung geschenkt, bei der ein Laserstrahl ein langes Säulenvolumen ausgeleuchtet hat und gleichsam nur Diffusion in zwei Dimensionen aus dem Strahl heraus analysiert wurde.

Soll aus meßtechnischen Gründen dennoch ein größeres Volumen analysiert werden, so können erfindungsgemäß viele kleine Meßvolumina durch Multiarraydetektion parallel gemessen werden und/oder verschiedene kleine Meßvolumina mit unterschiedlichen Raumkoordinaten nacheinander gemessen werden. Damit bleibt für jedes Gauss'sche Raumelement als Meßvolumen die Charakteristik des Signal-Rauschverhältnisses erhalten. Erfindungsgemäß wird bevorzugt jedes einzelne Raumelement wie bei einer Einzelmessung eines Raumelementes konfokal mit vorfokussiertem Anregungslicht ausgeleuchtet und das Raumelement mit einer Lochblende in der Bildebene abgebildet.

Der methodische Durchbruch der Technologie zur sicheren Identifizierung und Messung von Einzelmolekülen und der Möglichkeit, Einzelmoleküle zu zählen, wie es auch notwendig ist, um Gleichgewichtskonstanten über die Anzahl von komplexierten und freien Liganden im Meßvolumen über eine bestimmte Meßdauer zu bestimmen, gelang mit der Verwendung von Meßvolumina $\leq 10^{-14}$ l. Dies wurde durch erfindungsgemäßen Einsatz von Lochblenden $\leq 100$ µm Durchmesser, vorzugsweise $\leq 20$ bis $30$ µm Durchmesser möglich, sowie durch Einsatz einer vorfokussierten Laseranregung. Mit Lochblenden dieser Dimension in der Bildebene angeordnet, kann bei einer 60fachen Vergrößerung ein Durchmesser des Gauss'schen Meßvolumens von $0,33$ µm bis $0,5$ µm erreicht werden. Bei Verwendung von Optiken anderen Abbildungsmaßstabes müssen entsprechend angepaßte Lochblenden verwendet werden. Für freies Rhodamin bedeutet dies eine durchschnittliche Diffusionszeit aus dem Meßvolumen von ca. $40$ µs, während gemäß dem Stand der Technik $750$ µs realisiert wurden. Gleichzeitig muß jedoch gesagt werden, daß eine Verkleinerung des Radius des Gauss'schen Meßvolumens um einen Faktor $> 10$ nicht sinnvoll ist, da eine mehr als 1000fach geringere Aufenthaltswahrscheinlichkeit eines Moleküls im mehr als 1000fach kleineren Meßvolumen zu unakzeptabel langen Meßzeiten führen würde. Das erfindungsgemäße Optimum des vorgestellten Verfahrens befindet sich also bei Realisierung von Meßvolumina V von $10^{-14}$ l $\geq 10^{-17}$ l. Mit sichtbarem Licht ist ohnehin die Verkleinerung des Meßvolumens wegen der Diffraktionseigenschaften des Lichtes nicht stark weiter zu verkleinern. Dies könnte jedoch mit erfindungsgemäßem Einsatz von Röntgenstrahlung umgangen werden, wenn Kernfluoreszenzen angeregt werden zur Erzeugung von Meßsignalen.

Unter den Gesichtspunkten,

- daß die Meßzeiten in einem für praktische Anwendungen zumutbaren Bereich (ms bis sec) liegen,
- daß das Verhältnis von (Nutz-)Signal- zu Rauschsignalgröße erheblich $> 1$ und insbesondere im Bereich 100 bis 1.000 liegt und
- daß die durchschnittlichen Diffusionszeiten von kleineren Molekülen, Molekülkomplexen oder Molekülbruchstücken (durch das Meßvolumen) nicht zu groß werden, so daß sie bei Aussetzung der zur Anregung vorgesehenen Strahlung nicht zerstört werden,

ergibt sich das optimale Gauss'sche Meßvolumen bei ≤ $10^{-14}$ l und insbesondere ≤ $10^{-17}$ l.

Das recht hohe Signal-Rausch-Verhältnis ist neben der Tatsache, daß das Meßvolumen klein ist, vorzugsweise auch darauf zurückzuführen, daß geeignete Filter eingesetzt werden. Bei diesen optischen Filtern handelt es sich zweckmäßigerweise um Interferenzbandenfilter zur Unterdrückung des Raman-Streulichtes und/oder um Raman-Kantenfilter, die dicht neben der Wellenlänge der für die Anregung vorgesehenen Strahlung das Streulicht "wegschneiden", und zwar mit optischen Dichten von $10^{-7}$, was einem Unterdrückungsfaktor von $10^7$ entspricht.

Für das erfindungsgemäße Verfahren und die erfindungsgemäße Vorrichtung zur Fluoreszenz-Spektroskopie von einzelnen Molekülen, Molekülkomplexen und/oder Molekülbruchstücken ist neben der extrem scharfen Bündelung der zur Anregung vorgesehenen Strahlung weiterhin von entscheidender Bedeutung, daß sich im Strahlengang der infolge der Anregung ergebenden Strahlung eine konfokal angeordnete Lochblende (Pinhole) mit einer extrem kleinen Öffnung befindet. Die Größe der Öffnung der Lochblende in der Bildebene ist in Abhängigkeit des Abbildungsmaßstabes und der Größe des in der Bildebene abzubildenden Meßvolumens gewählt. Bei einem Abbildungsmaßstab von 40 (100) und einem Radius des Meßvolumens von ≤ 0,1 μm ergibt sich ein Lochblendenradius von 4 μm (10 μm) als unterer Grenzwert.

Hintergrunds-Streustrahlung, insbesondere Ramanstrahlung

Je stärker der die Probe durchdringende Anregungs-Laserstrahl und ein auf den Einzelphotonen-Detektor abgebildetes Volumenelement ist, desto geringer ist die den Detektor erreichende Streustrahlung durch in der Probe befindliche Moleküle oder Festkörper, bzw. sie lassen sich leichter durch Autokorrelation von dem gesuchten Signal diskriminieren.

In einem Meßvolumen von 0,2 fl wird erfindungsgemäß bei Unterdrückung der Raman-Bande für Wasser durch gebräuchliche Filter ein einziges Rhodamin-Molekül mit einem Signal/Hintergrundsverhältnis von 1000 gemessen. Vorherige Messungen ohne Verwendung derart kleiner Meßvolumina konnten nur Signal/Hintergrundsverhältnisse von $10^{-3}$ realisieren.

Lebensdauer von Fluoreszenzfarbstoffen unter Lichteinfluß

Die biologisch, erfindungsgemäß einsetzbaren Fluoreszenzfarbstoffe haben nur eine begrenzte Lebensdauer. Farbstoffe wie Fluorescein sind noch erheblich lichtempfindlicher. Für die exakte Messung durchschnittlicher Verweilzeiten, insbesondere großer Komplexe, wird der Farbstoff jedoch ca. 10.000 bis 1.000.000 mal angeregt, bevor das Molekül das Meßvolumen wieder verlassen hat. Jedes vorzeitige Ausbleichen verschlechtert das Meßergebnis, da ein frühzeitiges Ausbleichen einen zu großen Translationskoeffizienten (kleineres Molekül) vortäuscht.

Diffusionszeiten makromolekularer Komplexe, Viren, Zellen - Kurze Meßzeiten

Insbesondere große Molekülkomplexe, Viren oder Zellen weisen äußerst kleine Translations diffusionskoeffizienten auf. In den erfindungsgemäßen kleinen Meßvolumen sind noch Viren und Zellen ohne bemerkenswertes Ausbleichen gekoppelter Farbstoffmarker handhabbar mit Diffusionskoeffizienten von ca. $10^{-8}$ $cm^2/s$ für freie M13-DNA und ca. $5 \times 10^{-9}$ $cm^2/s$ für ein E.coli Bakterium. Die Verweildauer eines Bakteriums im Meßvolumen beträgt ca. 30 ms. Größere Meßvolumina, wie sie früher nur möglich waren, führen zu unakzeptabel langen Meßzeiten, bis diese großen Komplexen das Meßvolumen wieder über Translationsdiffusion verlassen haben.

Unversehrtheit/Schonung der nicht im Meßvolumen befindlichen Komplexe

Es ist eine statistische Wahrscheinlichkeit, daß ein Farbstoff durch chemische Reaktion aus dem angeregten Zustand heraus reagiert und damit ausbleicht. Geschieht dies durch Licht außerhalb des Meßvolumens, so sollte dies die Messung nicht beeinflussen, da ein inaktivierter Farbstoff überhaupt kein Signal liefert und somit nicht zur Messung beitragen würde. Die Qualität des Verfahrens wird jedoch drastisch dadurch eingeschränkt, daß durch vorzeitiges Ausbleichen von farbstoff-markierten Molekülen, die sich noch außerhalb des Meßvolumens befinden, die effektive Konzentration von meßbaren Molekülen und Molekülkomplexen erniedrigt wird und somit die Sensitivität beeinflußt wird. Sehr unangenehm werden die negativen Auswirkungen bei nicht maximal fokussiertem Laserstrahl, wenn das Markermolekül erfindungsgemäß in bevorzugter Ausführungsform mit mehreren Farbstoffmolekülen versehen ist, von denen ein nicht bestimmbarer Teil unter vorheriger Lichteinwirkung bereits ausgebleicht ist.

Lebensdauer von Komplexen während der Meßzeit

Ein Komplex aus nachzuweisendem Zielmolekül und markiertem Nachweisreagenz ist nur dann als Komplex erfindungsgemäß erkennbar, wenn der Komplex über die gesamte Meßzeit stabil bleibt. Dies würde bei durchschnittlichen Aufenthaltszeiten von Komplexen von Sekunden in großen Meßvolumina nicht mehr gelten, wenn die Komplexe selbst eine Zerfallszeit im Sekundenbereich haben. Dies kann durchaus für biologisch relevante Reaktionen wie Metallionen-Komplexierungen der Fall sein, bei denen z.B. Bindekonstanten von $10^6$ lmol$^{-1}$ relevant sind. Die erfindungsgemäßen kleinen Meßvolumina bedeuten jedoch so kurze durchschnittliche Aufenthaltsdauern (< 1 ms), daß praktisch für alle interessanten Komplexierungsreaktionen ein Komplex während der Aufenthaltsdauer im Meßvolumen stabil bleibt.

Multiarraydetektion

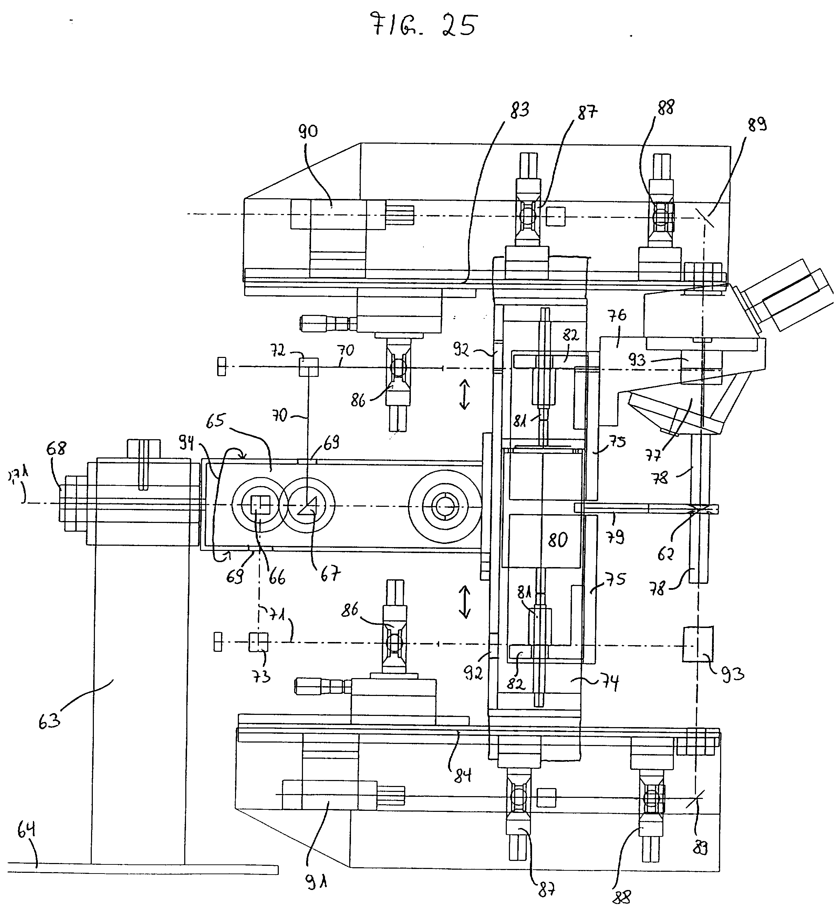

Eine erfindungsgemäße Multi-Array Detektion kann dadurch erfolgen, daß in nicht optimaler Weise ein größeres Volumenelement ausgeleuchtet wird, jedoch verschiedene Volumenelemente auf einem Multi-Array-Detektor getrennt abgebildet werden und die auflaufenden Photonen während einer Messung getrennt registriert und ausgewertet werden. Dies ist durch Verwendung von Multi-Array-Einzelphotonen-Detektoren möglich, wie sie kommerziell erhältlich sind. Nachteil dieser Methode ist, daß unerwünschte Bestrahlung zu erheblicher Photoinaktivierung außerhalb der Meßvolumina führt. Es ist bei einer Multiarraydetektion, d.h. der parallelen FCS-Analyse von Meßvolumina unterschiedlicher Raumkoordinaten oder zeitlich aufeinanderfolgender FCS-Analysen von Meßvolumina unterschiedlicher Raumkoordinaten, im Sinne des oben Gesagten nicht vorteilhaft, wenn in einer experimentellen Anordnung ein relativ großes Volumenelement ausgeleuchtet wird, die Messung der kleinen Raumelemente jedoch dadurch erfolgt, daß in einem 2D-Raster angeordnete kleine Raumelemente parallel abgebildet, vermessen und ausgewertet werden. Bei diesem experimentellen Vorgehen (Fig. 24) bleichen bereits eine Vielzahl von Chromophoren aus, bevor sie das Meßvolumen durch Diffusion erreicht haben.

Bei niedrigeren Konzentrationen müssen entsprechend mehr Volumenelemente einer Messung unterzogen werden. Da die durchschnittliche Meßdauer für eine Messung je nach erforderlicher Qualität der Meßdaten (Signal-/Rauschverhältnis) zwischen 10 und 100 ms beträgt, lassen sich in 1000 s 10.000 bis 100.000 Volumenelemente überprüfen.

Somit lassen sich extrem niedrige Konzentrationen von $10^{-14}$ bis $10^{-15}$ M vermessen. Das bedeutet auch, daß sich spezifische biologische Wechselwirkungen mit Bindungskonstanten $k_{ass} \geq 10^6$ mol/l bis zu $k_{ass} = 10^{15}$ mol/l messen lassen.

In einem Beispiel wird dargestellt, wie sich Bindungskonstanten oder Reaktionsgeschwindigkeitskonstanten mit der erfindungsgemäßen Technik bestimmen lassen. Die erfindungsgemäße Messung eines Bindungsgleichgewichtes zwischen Reaktanden wird gemessen, indem mindestens ein Reaktand mit mindestens einem Farbstoffmolekül vorzugsweise chemisch gekoppelt ist, und sich die Rotationsdiffusionsgeschwindigkeit und/oder die Translationsdiffusionsgeschwindigkeit des Reaktanden durch die Komplexbildung ändert. Wenn sich Gleichgewichtskonstanten experimentell nicht direkt mit der Bedingung hochverdünnter Lösungen in Übereinstimmung bringen lassen, das heißt, wenn niedrige Bindungskonstanten höhere Konzentrationen an Reaktanden erfordern, läßt sich dies z. B. dadurch erreichen, daß der nicht-markierte Reaktionspartner im Überschuß angeboten wird, oder indem der markierten Verbindung ein Überschuß an unmarkiertem Reaktanden zugesetzt wird.

Die Messung einer Reaktionskinetik über molekulare Fluktuation mit FCS, wie sie von Magde beschrieben worden ist, ließ sich wegen der langen Diffusionswege in den bisher realisierten Meßvolumina nicht befriedigend durchführen. Mit der erfindungsgemäßen Meßtechnik ist die Bestimmung der Dissoziationsgeschwindigkeitskonstanten eines Komplexes in einem Bereich von $10^{-6}$ s$^{-1}$ bis zu etwa $10^3$ s$^{-1}$ möglich, ein Bereich, der insbesondere für biochemische Reaktionen relevant ist. Die Messung kann z.B. durch den Austausch von fluoreszenzmarkierten Markermolekülen erfolgen.

Die erfindungsgemäße Technik erlaubt auch die Messung von Konformationsänderungen biologischer Makromoleküle sowie die Bestimmung zugehöriger thermodynamischer und kinetischer Konstanten. Fluktuationen der Struktur lassen sich z.B. über die Messung der Rotationsdiffusion oder über Signaländerungen durch sog. Energy-Transfer (Förster Transfer) erfassen.

Die Methode ist auch für die DNA/RNA Analytik anwendbar (DNA/RNA Analytik, siehe unten) . In der genetischen Analytik, insbesondere zur Bestimmung von infektiösen Erregern ist die Sensitivität des diagnostischen Verfahrens oft von ausschlaggebender Bedeutung. Dies wurde gerade in den letzten Jahren in Zusammenhang mit der Einführung enzymatischer Methoden zur Amplifikation genetischer Zielsequenzen deutlich. Durch den Einsatz dieses Verfahrens ist zu erwarten, daß für eine Reihe diagnostischer Verfahren auf die Notwendigkeit einer vorhergehenden enzymatischen Amplifikation verzichtet werden kann, wodurch z.B. Probleme der Kontamination durch stark amplifizierte Einzelsequenzen umgangen werden könnten.

Das Verfahren kann auch anstelle der bekannten diagnostischen Verfahren des RIA, ELISA oder anderer Verfahren eingesetzt werden (siehe unten, Rezeptor Screening). Ein besonderer Vorteil des erfindungsgemäßen Verfahrens ist darin zu sehen, daß das System selbstkalibrierend ist. Auf Bestimmungen von Eichkurven oder eine interne Standardisierung kann verzichtet werden. Jedes Experiment bezieht seine innere Kalibrierung aus der Bestimmung der betrachteten Moleküle. Beispielsweise haben Schwankungen der Laserintensität keinen Einfluß auf die Meßgenauigkeit. Eine Driftproblematik bei zeitlich aufeinanderfolgenden Messungen tritt nicht in Erscheinung. Messungen sind ohne erneute Kalibrierung zu verschiedenen Zeiten mit gleichem Resultat wiederholbar. Eine Gerätekalibrierung kann entfallen.

Eine bevorzugte Verwendung sind Assays ohne Beteiligung von Antikörpern als Nachweisreagenzien oder für den Ersatz in gängigen Assay-Verfahren, die bislang auf ELISA, RIA oder FIA unter Verwendung von Antikörpern beruhen. Gemeint sind alle Assays, die als spezifisch erkennende Moleküle (Rezeptor-Moleküle, Nachweisreagenz) neben Antikörpern auch andere Moleküle einsetzen, um bestimmte Zielmoleküle (Liganden) zu erkennen. Als potentielle Rezeptormoleküle kommen neben Antikörpern generell alle Moleküle oder Molekülkomplexe in Frage, die an ihrer Oberfläche spezifische Erkennungsstellen (z.B. Antikörper, Einzelstrang-Antikörper, Membranrezeptoren, lösliche Rezeptoren, Enzyme, Strukturproteine, Polysaccharide, Peptide, komplexe Sekundärmetabolite etc.) oder in ihrem Inneren spezifische Erkennungsstellen für Zielmoleküle enthalten (z.B. HDL, VLDL, LDL).

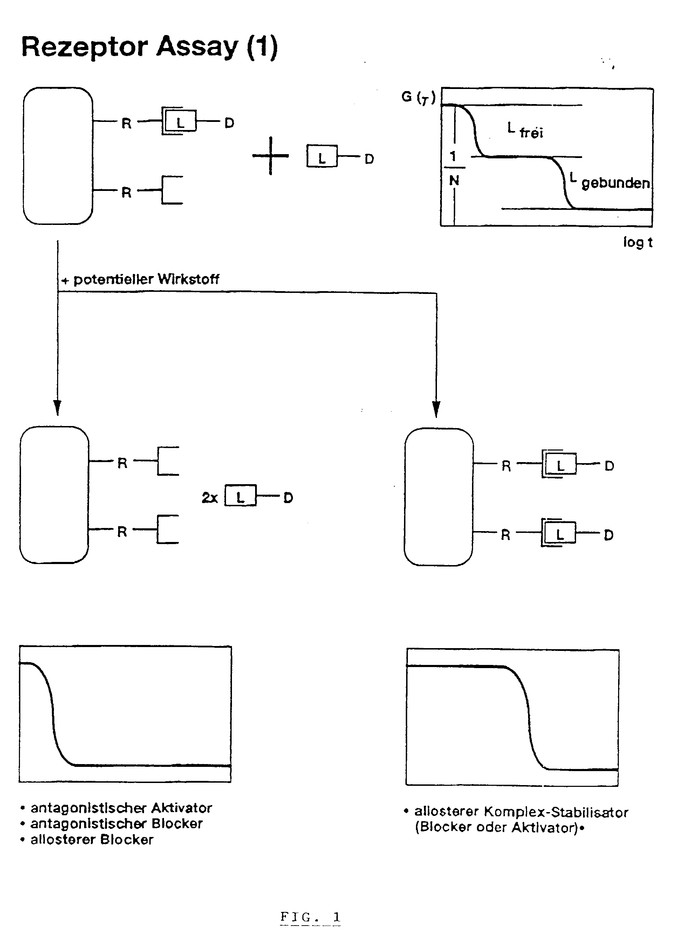

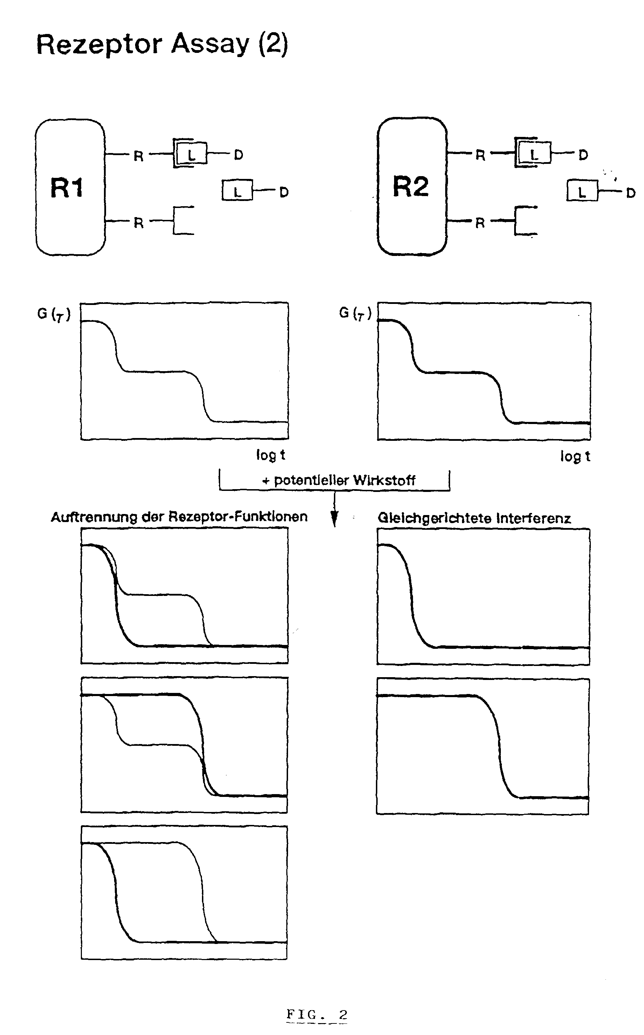

Wenn eine spezifische Komplexbildung zwischen einem Rezeptor und einem oder mehreren Liganden in der allgemeinen Form von analytischem Interesse ist und/oder wenn mindestens eines der beteiligten Moleküle mit mindestens einem Farbstoffmarker versehen werden kann und sich die Komplexbildung in einer Veränderung der Rotationsdiffusion und/oder der Translationsdiffusion des FarbstoffMarkers zu erkennen gibt, ist ein FCS-Assay durchführbar. Dabei gelten vergleichbare thermodynamische Gesetzmäßigkeiten bzgl. einer vorteilhaften Ausgestaltung, wie sie für die entsprechenden Assays vom Typ ELISA, EIA, RIA oder FIA gelten (siehe Fig. 1, 2).

Die Leistungsfähigkeit des erfindungsgemäßen Verfahrens kommt insbesondere im Vergleich mit gegenwärtig am Markt befindlichen Technologien zum Ausdruck. Gut eingeführt ist die sogenannte FPIA-Technologie der ABBOTT, Chicago, mit dem sogenannten TDX-System für die zugehörige Instrumentation. Hier wird die Depolarisation von fluoreszenzmarkierten Molekülen in homogenen Assays bestimmt.

Die Depolarisation des emittierten Lichtes eines Fluoreszenzfarbstoffes nach Anregung mit polarisiertem Licht ist in erster Linie eine Eigenschaft, die von dem Molekulargewicht des Moleküls und seinen Formparametern abhängt. Ein vergleichsweise kleines Molekül rotiert stärker im Zeitintervall zwischen Anregung und Abstrahlen des Fluoreszenzlichtes als ein deutlich größeres Molekül, womit eine entsprechend stärkere Depolarisation des emittierten Lichtes verbunden ist. Dieser Effekt wird dahingehend ausgenutzt, daß kleine fluoreszenz-markierte Moleküle kompetitiv um z.B. Antikörper-Bindungsstellen mit unmarkierten Zielmolekülen konkurrieren. Die Fluoreszenzdepolarisation gibt dann Auskunft über den relativen Anteil der im Komplex gebundenen, markierten Moleküle. Die Methode ist aber deutlich von den erwünschten Nachweisgrenzen entfernt. Der Hersteller gibt selbst eine untere Nachweisempfindlichkeit von $10^{-9}$ M an. Das erfindungsgemäße Verfahren ist ohne Optimierung bereits um mehr als zwei Größenordnungen sensitiver. Dies gilt bei der erfindungsgemäßen Verwendung der FPIA-Kits. Durch entsprechend empfindlichere Farbstoffe lassen sich weitere Größenordnungen an gesteigerter Sensitivität erzielen. Dies ist z.B. in der Drogendiagnostik von großer Bedeutung.

Das erfindungsgemäße Verfahren zeigt seine Überlegenheit insbesondere bei einem quantifizierenden Assay und bei der Qualität in Abhängigkeit von variierenden Probenbedingungen. Der Grad der Fluoreszenz-Depolarisation hängt von den Medienbedingungen Viskosität/Temperatur ab. Mit zunehmender Viskosität verringert sich der Grad der Fluoreszenzdepolarisation aller Moleküle durch kleinere Rotations-Diffusionskoeffizienten und beeinflußt unmittelbar das Ergebnis. Ähnlich störende Effekte können durch Mediumbedingungen hervorgerufen werden, die die Lebensdauer des angeregten Zustandes beeinflussen. Mit erhöhter Lebensdauer wird eine erhöhte Fluoreszenzdepolarisation vorgetäuscht. Diese Effekte führen bei dem erfindungsgemäßen Verfahren der Messung der Translationsdiffusion jedoch nicht zu einer Beeinträchtigung der Ergebnisqualität. In der Praxis bedeutet dies ein erheblich geringerer Aufwand in der Probenvorbereitung und Normierung der Methode und ein deutlich größerer Bereich der dynamischen Meßbreite.

## 2. Die Bedeutung der Reaktionsgeschwindigkeit für die Komplexbildung

Wie im Falle der Nukleinsäure-Reassoziation (siehe unten) kann auch bei anderen spezifischen Erkennungsreaktionen die Assoziationsgeschwindigkeit so langsam sein, daß ein homogener Assay, der auf dieser Erkennungsreaktion beruht, praktisch nicht durchführbar ist. Während in inhomogenen Assays häufig Reaktanden im Überschuß angeboten werden, z.B. wenn mit markierten Antikörpern gearbeitet wird, um die Reaktionsgeschwindigkeit der spezifischen Komplexbildung zu erhöhen und in einem Folgeschritt der Überschuß an nicht komplexgebundenen Reaktanden entfernt wird, ist dies in homogenen Assays nicht ohne weiteres möglich.

An einem Beispiel soll diese Problematik erläutert werden: Die erfindungsgemäße Detektion erlaubt die Bestimmung von Konzentrationen von fluoreszenzfarbstoff-markierten Verbindungen im Bereich von $\leq 10^{-15}$ M. Wenn ein fluoreszenz-markiertes, spezifisches Nachweisreagenz für ein Zielmolekül oder einen Molekülkomplex eingesetzt wird, müssen mindestens drei Bedingungen erfüllt sein: 1. der Größen-Unterschied von nicht komplexgebundenem, fluoreszenzmarkiertem Molekül und gebundenem, fluoreszenzmarkiertem Molekül muß ca. um den Faktor 2 in der Diffusionskonstante größer sein, um anhand der unterschiedlichen Translationsdiffusion gut nachweisbar zu sein, 2. die Bindekonstante muß hinreichend groß sein, um das Zielmolekül zu komplexieren, 3. die Reaktionsgeschwindigkeit der Assoziation muß hinreichend groß sein, um in einem experimentell vertretbaren Zeitraum von Minuten bis maximal Stunden die Komplexbildung zu realisieren.

Wenn ein komplexiertes Zielmolekül unter 100 nicht-komplexgebundenen Molekülen des Nachweisreagenz detektiert werden kann, kann erfindungsgemäß eine Konzentration von $10^{-13}$ M an Nachweisreagenz eingesetzt werden, um einen gebildeten Komplex von $10^{-15}$ M nachzuweisen. Im Gleichgewicht kann dann effizient eine Komplexbildung erfolgen, wenn die zugehörige Assoziationskonstante $k_{ass}$ für die bimolekulare Reaktion mindestens $10^{13}$ $M^{-1}$ beträgt. Derartig hohe Bindekonstanten treten bei biologischen Molekülen wie Proteinen nur selten auf. Die Bindekonstanten von Antikörpern liegen gewöhnlich in Bereichen von $10^6$ bis $10^{10}$ $M^{-1}$.

Die Reaktionsgeschwindigkeitskonstanten von Antikörpern für die bimolekulare Komplexierungsreaktion übersteigen kaum den Bereich von $k_{ass} = 10^7$ $Mol^{-1}s^{-1}$. Die unterschiedlichen Bindekonstanten resultieren hauptsächlich aus den Unterschieden in den Dissoziationsgeschwindigkeitskonstanten $k_{diss}$ der Komplexe, die oft zwischen 10 und $10^{-3}$ $s^{-1}$ liegen. Für den oben diskutierten Fall bedeutet jedoch eine Geschwindigkeitskonstante von $k_{ass} = 10^7$ $Mol^{-1}s^{-1}$, daß die Halbwertszeit der Assoziation bereits bei ca. 1000 s liegen würde, wenn mit Konzentrationen von $10^{-10}$ M an Nachweisreagenz gearbeitet würde.

Erfindungsgemäß ergeben sich mehrere Alternativen, um die Sensitivität der optischen Nachweisreaktion von $10^{-15}$ M für einen homogenen Assay trotz niedrigerer Bindekonstanten, für die Erkennungsreaktion zu nutzen.

Die effektive Assoziationsgeschwindigkeit läßt sich häufig durch Veränderung der Reaktionsbedingungen dramatisch verändern. Für Nukleinsäuren ist unten beschrieben, wie die Assoziation von komplementären Nukleinsäuresequenzen 10.000 bis 100.000 fach beschleunigt werden kann. Erkennungsreaktionen von Sequenzmotiven auf langsträngiger DNA verlaufen schneller als dies durch reine Diffusionskontrolle erfolgen könnte. Wahrscheinlich ist der geschwindigkeitsbestimmende Schritt das Auftreffen des Proteinfaktors auf der DNA, dem ein rascher eindimensionaler Diffusionsschritt entlang der DNA zum eigentlichen Bindeort folgt.

Eine Beschleunigung kann generell dadurch erreicht werden, daß die Diffusionswege des geschwindigkeitsbestimmenden Schrittes der Assoziation verkürzt werden. In trivialer Weise erfolgt dies durch eine Konzentrierung des Reaktionsansatzes.

Erfindungsgemäß werden im homogenen Assay die Mediumbedingungen so variiert, daß der effektive Aufenthaltsraum der reagierenden Moleküle verkleinert wird, ohne das Probevolumen an sich zu verringern. Dies kann erfindungsgemäß z.B. durch Zusätze wie Polyethylenglykole, Dextran, Polyvinylpyrrolidon, chaotrope Reagenzien, organische Lösemittel oder deren Kombination geschehen, die vor allem die Wasserstruktur der Hydrathüllen beeinflussen. Es lassen sich erfindungsgemäß auch wäßrige Zweiphasensysteme einsetzen, um die Reaktanden gezielt in einer Phase anzureichern.

Eine weitere Möglichkeit besteht in der Verwendung von Überschußkomponenten des markierten Reaktanden. Wenn zwei farbstoff-markierte Reaktanden verwendet werden, die gemeinsam einen Analyten erkennen und binden können, lassen sich sogenannte Energy-Transfer-Komplexe bilden. Ein Farbstoffmarker fungiert als Akzeptor des Anregungslichtes, dessen emittiertes Fluoreszenzlicht das eng benachbarte zweite Farbstoffmolekül anregt (10 - 100 Å), welches dann Licht emittiert, das als Meßsignal erfindungsgemäß registriert wird. Da die Effizienz der Energieübertragung mit der 6. Potenz des Abstandes der Farbstoffe sinkt, lassen sich die Reaktanden im Überschuß einsetzen. Der Translationsdiffusionskoeffizient des ternären Komplexes wird erfindungsgemäß gemessen.

Die erfindungsgemäße Verwendung des farbstoffmarkierten Nachweisreagenz als Überschußkomponente ist auch möglich, wenn das nicht komplexierte Nachweisreagenz chemisch oder durch Strahlung bezüglich seiner spektroskopischen Eigenschaften so modifiziert werden kann, daß es sich Spektroskopisch vom Komplex unterscheidet. Dies ist beispielsweise im Falle interkalierender Farbstoffe möglich.

Die erfindungsgemäße Konzentrierung mittels einer elektrischen Falle ist an anderer Stelle der Beschreibung beschrieben.

Wenn eine Komplexbildung nur zu einer geringen Veränderung des Molekulargewichtes und/oder der Form eines Nachweisreagenzes beiträgt, wie es beispielsweise bei der Verwendung eines markierten Antikörpers gegen einen kleinen Liganden der Fall ist, kann erfindungsgemäß die Verwendung eines zweiten Antikörpers im Überschuß, der gegen den Komplex gerichtet ist, den entstehenden ternären Komplex erfindungsgemäß nachweisbar machen.

Erfindungsgemäß können auch mindestens zwei unterschiedliche Nachweisreagenzien mit mindestens zwei unterschiedlichen Farbstoffmarkern eingesetzt werden, die mit mindestens einem Targetmolekül reagieren können und wobei die Fluoreszenzsignale von mindestens zwei Farbstoffen erfindungsgemäß gemessen werden. Das Verfahren kann in zweierlei Hinsicht verwendet werden.

a) Die parallele Bestimmung von mindestens zwei unterschiedlichen Analyten in einer Probe.

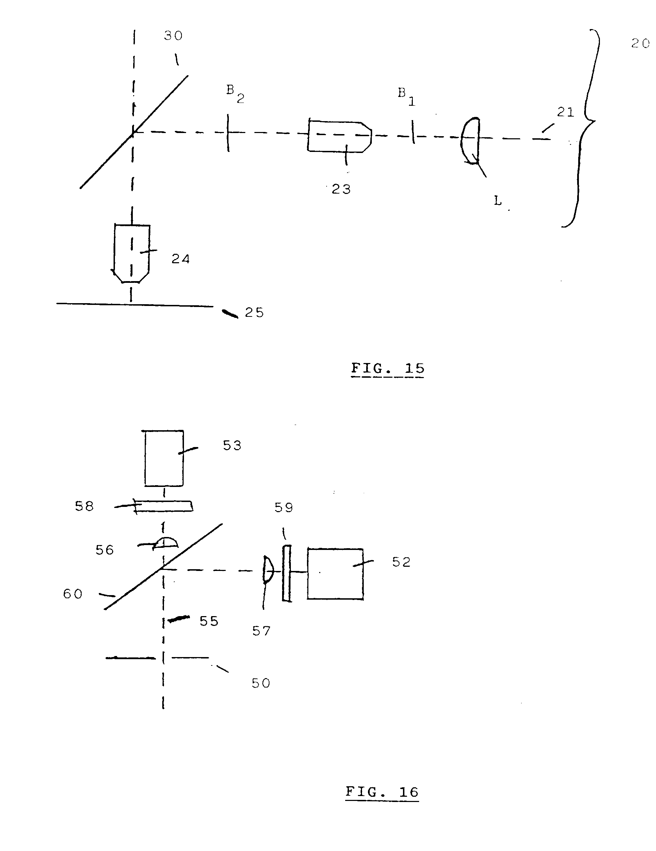

Häufig stellt sich das experimentelle Problem mehrere Analyten nebeneinander in einer Probe nachzuweisen. Anstelle zweier unabhängiger Assays läßt sich auch erfindungsgemäß der Nachweis von mindestens zwei verschiedenen Analyten unabhängig voneinander durch Reaktion von zwei unabhängigen Nachweisreagenzien durchführen, die mit mindestens zwei unabhängigen und unterschiedlichen Farbstoffen markiert sind und sich vorzugsweise entweder mit Licht unterschiedlicher Wellenlänge anregen oder durch Licht unterschiedlicher Emissionswellenlänge unabhängig voneinander registrieren lassen. Dies kann z.B. durch die Verwendung.von zwei unabhängigen optischen Systemen geschehen, wie sie z. B. in Abbildung 16 schematisch skizziert sind.

### 3. Kreuzkorrelation

b) Die Erhöhung der Nachweisspezifität durch gleichzeitige Bindung mindestens zweier Nachweisreagenzien an einem Analyten.

Einige Analyten lassen sich nur mit unbefriedigender Spezifität durch die Bindung eines einzigen Nachweisreagenzes von molekular ähnlichen Analyten abgrenzen. Beispiele sind homologe Nukleinsäuresequenzen, die sich dramatisch in ihrer biologischen Aktivität wie z.B. der eigenen Pathogenität oder der Pathogenität ihrer Produkte unterscheiden können. Auch Proteine wie Tumorantigene, Strukturproteine oder zelltypspezifische Oberflächenmarker lassen sich nur unbefriedigend durch die Bindung eines einzigen Liganden analysieren.

Erfindungsgemäß läßt sich ein bestimmtes Molekül gleichzeitig mit mindestens zwei Nachweisreagenzien komplexieren, die mit mindestens zwei optisch unterscheidbaren Fluoreszenzmolekülen markiert sind. Die gleichzeitige Komplexbildung läßt sich erfindungsgemäß entweder spezifisch über die Bildung eines Energie-Transfer-Komplexes (Förster-Transfer, siehe oben) nachweisen oder über die Korrelation der Signale unterschiedlicher Wellenlänge der Anregung und/oder Emission. Die Bindung unterschiedlicher Nachweisreagenzien an einen einzigen Analyten wird durch zeitliche Korrelation der unterscheidbaren optischen Signale belegt.

Die Doppelkomplexierung eines Analyten mit zwei unterschiedlich markierten Nachweisreagenzien hat nicht nur den Vorteil einer erhöhten Spezifität wie oben diskutiert, sondern auch den praktischen Vorteil, daß von jedem einzelnen Reagenz höhere Konzentrationen eingesetzt werden könnne. Durch die zeitliche Kreuzkorrelation der erfindungsgemäß registrierten Fluoreszenzsignale lassen sich auf der Ebene der elektronischen Signalverarbeitung die Signale der nicht korrelierten freien Nachweisreagenzien effizient unterdrükken. Das Verfahren läßt sich besonders gut bei Nukleinsäure-Analyten durch den Einsatz von mindestens zwei unterschiedlich markierten Nachweisreagenzien verwenden, die an unterschiedliche Sequenzabschnitte des Analyten binden. Die Emissionswellenlängen der jeweiligen Fluoreszenzen der unterschiedlichen Farbstoffe sind dabei unterschiedlich. Anstelle der sonst üblichen alleinigen Autokorrelation der registrierten Signale wird erfindungsgemäß die Kreuzkorrelation der Signale unterschiedlicher Wellenlänge gemessen. Sind beide Sonden zugleich an den Target-Analyt gebunden, so ergibt die Kreuzkorrelation die Molekülzahl und Diffusionszeit des doppelt markierten Nukleinsäuresegmentes. Nicht-gebundene Sondenmoleküle sind in der Autokorrelation sichtbar, in der Kreuzkorrelation werden die Signale unterdrückt.

### 4. Verfahren und Vorrichtung zur Durchführung der Fluoreszenz-Korrelations-Spektroskopie

Die Kreuzkorrelation von Fluoreszenzsignalen verschiedener Farbstoffe, die mit einem Molekül oder Molekülkomplex chemisch verknüpft oder physikalisch assoziiert sind, läßt sich also erfindungsgemäß zur Sensitivitätssteigerung und Spezifitätserhöhung nutzen. Zur optimalen Durchführung der Experimente müssen jedoch verschiedene Voraussetzungen erfüllt sein, die sich durch das hier nachfolgend vorgestellte erfindungsgemäße Verfahren und eine zugehörige Vorrichtung in besonders vorteilhafter Weise realisieren lassen.

Das erfindungsgemäße Verfahren bezieht sich auf die Kombination der Methodik der Kreuzkorrelation mit der Fluoreszenz-Korrelationsspektroskopie unter Verwendung kleiner Meßvolumina. Die Methode ist klar abzugrenzen von Korrelationsmethoden, wie sie z.B. in der FACS-Analytik (fluoreszenzaktivierte Zellsortierung) eingesetzt werden. Dort werden ebenfalls mehrere optische Parameter gleichzeitig gemessen, die von einem großen Komplex wie einer Zelle stammen, z.B. die Vorwärtslichtstreuung in Kombination mit einem Fluoreszenzsignal oder die gleichzeitige Messung unterscheidbarer Fluoreszenzsignale. Im Zellsorter werden die Signale von einzelnen Tröpfchen gemessen, in denen sich Einzelzellen befinden können. Unter Korrelation von Signalen zur Identifizierung von Zelltypen und Subtypen ist hier lediglich die Intensitätsverteilung unterschiedlicher Signale zu verstehen, die integral über den ganzen Tropfen erfaßt wird. Unter Korrelation wird hier lediglich die parallele Erfassung mehrerer Parameter angesehen bezüglich ihrer individuellen Intensität. Die hier beschriebene Methode vollzieht eine zeitliche Verknüpfung zweier stochastischer Prozesse, der Diffusionscharakteristik unterschiedlicher Chromophore in einem kleinen Raumelement. Praktisch bedeutet dies auf der Ebene einer Zelle, daß das erfindungsgemäße Verfahren zwischen unterschiedlichen Molekülen unterscheiden kann, die einen Chromophor tragen und sich im Meßvolumen befinden, während im Zellsorter dieser Chromophor integral in seiner Konzentration im Tröpfchen bestimmt wird, ungeachtet, ob er Teil eines kleinen Moleküls ist oder in einem Komplex oder an eine Zelle gebunden vorkommt.

Unter Kreuzkorrelation im Zusammenhang mit der FCS-Analytik wird folgende Methodik verstanden: Ein Volumenelement wird durch einen möglichst stark fokussierten Laserstrahl oder Röntgenstrahl ausgeleuchtet. Dabei wird die Intensität der elektromagnetischen Strahlung so hoch gewählt, daß sich ein hoher Prozentsatz von Molekülen, die durch die Strahlung angeregt werden können, im angeregten Zustand befindet. Das von ihnen emittierte Fluoreszenzlicht wird durch konfokale Abbildung mittels einer Lochblende in einer Einzelphotonen-Meßvorrichtung registriert, so daß nur ein kleines Volumenelement des langen Lichtkegels gemessen wird. Wandert ein Molekül durch Diffusion in das Meßvolumen hinein, so wird es solange angeregt und über das emittierte Licht gemessen, wie es in dem Meßvolumen verbleibt. Die durchschnittliche Aufenthaltsdauer ist charakteristisch für die Größe und Form eines Moleküls, eines Molekülkomplexes oder einer Zelle.

Durch Korrelationsspektroskopie lassen sich auf diese Weise Moleküle unterschiedlicher Konzentration voneinander unterscheiden bzw. nebeneinander zählen. Auf diese Weise lassen sich beispielsweise Bindekonstanten von Komplexbildungen von beispielsweise Rezeptor/Liganden-Wechselwirkungen bestimmen oder kinetische Konstanten, wie Zerfallsraten solcher Komplexe. Die Methode ergibt dann optimale Ergebnisse, wenn sich pro Zeiteinheit besonders wenige Moleküle mit Fluoreszenzeigenschaft in dem Meßvolumen befinden. Dies gilt für Konzentrationen im Bereich $10^{-9}$ und kleiner. Umgekehrt allerdings ergibt sich das Problem, daß eine Komplexbildung mit einem zweiten Reaktanden nicht schneller als mit $10^7$/s abläuft. Für äquimolare Konzentrationen von zwei Reaktionspartnern mit $10^{-9}$ M bedeutet dies eine Reaktionszeit von mehr als einer Minute. Eine Verkürzung der Reaktionszeit kann dadurch erreicht werden, daß z.B. der fluoreszenz-markierte Reaktand im Überschuß eingesetzt wird. Bei einer Reaktandenkonzentration von $10^{-9}$ Molar lassen sich auf diese Weise nach Minuten der Reaktionszeit Komplexe mit Targetmolekülen nachweisen, die $10^{-12}$ M konzentriert sind. Bei niedrigeren Konzentrationen werden die Signal/Signalverhältnisse von Komplex und freiem Liganden zu groß, um zuverlässige Konzentrationsmessungen zu erlauben. Ein weiteres experimentelles Problem ergibt sich, wenn die Bindekonstante eines zu messenden Komplexes nicht groß genug ist, um mit Liganden-Konzentrationen von $\leq 10^{-9}$ zu arbeiten. Virusantigen, Nukleinsäuren von Pathogenen oder bestimmte Hormone müssen jedoch in Konzentrationen nachgewiesen werden, die wesentlich kleiner als $10^{-9}$ M sind. Ein typisches Anwendungsfeld ist die Diagnostik von Tumorantigenen über monoklonale Antikörper, die häufig eine niedrige Bindekonstante aufweisen, sowie eine nicht übermäßige Spezifität bei der Unterscheidung der Tumorantigene einer entdifferenzierten Zelle von den Antigenen der jeweils ausdifferenzierten Zelle. Die Kreuzkorrelation bei Verwendung von zwei unterschiedlichen Chromophoren erlaubt im oben diskutierten Sinne die Steigerung von Sensitivität und Spezifität.

Es gilt dabei, experimentell mindestens drei chromophortragende Moleküle oder Molekülkomplexe voneinander zu unterschieden: freien Liganden mit Chromophor 1, freien Liganden mit Chromophor 2, Komplex mit Chromophor 1, Komplex mit Chromophor 2 und Komplex mit Chromophor 1 und Chromophor 2. Nur derjenige Komplex, der sowohl Chromophor 1 als auch Chromophor 2 über die gesamte Zeitspanne trägt, in der sich der Komplex im Meßvolumen befindet, ist indikativ für ein nachzuweisendes Zielmolekül wie ein Tumorantigen oder ein Pathogen wie ein Virus oder eine zugehörige DNA oder RNA.

Bei der Kreuzkorrelation werden nun die Signale von Chromophor 1 und Chromophor 2 korreliert. Nur wenn ein Molekülkomplex angeregt wird, indem in ein und demselben Zeitfenster, in dem sich der Molekülkomplex im Meßvolumen befindet, beide Chromophortypen nachgewiesen werden, werden diese Signale einem Komplex mit beiden Chromophoren zugeordnet.

Wichtige Voraussetzungen für eine erfolgreiche Kreuzkorrelation sind:

- Der Abstand der Chromophore 1 und 2 auf dem Zielmolekül muß klein sein gegenüber den Dimensionen des Meßvolumens, damit beide Farbstoffe innerhalb der Meßfehlergrenzen gleichzeitig vom Anregungslicht erfaßt werden, wenn sie in das Meßvolumen eintreten und wieder austreten (Abstand im Komplex < 0,1 μm).
- Das Meßvolumen muß für beide Farbstoffe gleichdimensioniert sein, damit beide Farbstoffe, wenn sie miteinander verbunden sind, im identischen Zeitfenster mit dem jeweiligen Anregungslicht in Kontakt stehen.
- Beide Meßvolumina müssen in den Meßfehlergrenzen identische Raumkoordinaten haben.

Die Aufgabe ist keinesfalls trivial zu lösen. Ein Problem besteht beispielsweise darin, daß Licht unterschiedlicher Wellenlänge bekanntermaßen aufgrund unterschiedlicher Brechungsindices unterschiedliche Abbildungsgrößen ergibt. Es wäre jedoch für die Messung fatal, wenn zwei Laser unterschiedlicher Wellenlänge durch unterschiedliche Fokussierung unterschiedlich große Volumenelemente ausleuchten würden oder, wenn unterschiedliche Meßvolumina bei der Registrierung auf dem Photomultiplier erfaßt würden.

Erfindungsgemäß wird die Aufgabe gelöst, indem entweder nur ein Laser mit einer Anregungswellenlänge verwandt wird, verbunden mit dem Einsatz von zwei Farbstoffen, deren Anregungsspektren stark überlappen, die jedoch in den sogenannten Stoke-Verschiebungen von mindestens zwei Emissionswellenlängen unterschieden werden können. Alternativ werden durch zwei unabhängige Laserlichtquellen Volumenelemente identischer Raumkoordinaten ausgeleuchtet. Die Optik der konfokalen Abbildung ist in beiden Fällen zweckmäßigerweise farbkompensiert, d.h. für beide Emissionswellenlängen korrigiert, damit für beide Wellenlängen ein und dasselbe Raumelement ausgemessen wird.

Erfindungsgemäß wird für die Abbildung des Fluoreszenzlichtes unterschiedlicher Wellenlänge eine Mikroskopübliche Abbildungsoptik verwandt, die Licht unterschiedlicher Wellenlänge mit identischer Dimensionierung abbildet. Für die Durchführung des erfindungsgemäßen Verfahrens ist es jedoch auch von entscheidender Wichtigkeit, daß bei beiden Wellenlängen Raumelemente identischer Größe, identischem Intensitätsprofil und identischen Raumkoordinaten ausgeleuchtet werden. Dies gelingt durch erfindungsgemäße Verwendung einer Vorrichtung auf Seiten der Anregungsoptik, bei der beide Laserstrahlen vor Eintritt in die Probe vorfokussiert werden, wobei entweder zwei fest eingestellte Optiken mit unterschiedlichen Vergrößerungswerten eingesetzt werden, so daß im Ergebnis beide Wellenlängen mit gleicher Dimensionierung und Geometrie des Strahles vorfokussiert werden, oder wobei eine Vorrichtung mit einer fest eingestellten Vorfokussierungsoptik verwendet wird, und zwar in Kombination mit einem variablen Strahlaufweiter für den zweiten Strahlengang, oder, indem für beide Strahlengänge variabel justierbare Strahlenaufweiter für die Vorfokussierung eingesetzt werden.

Die Vorrichtung ist zweckmäßigerweise als kompaktes Doppelmikroskop ausgebildet, dessen zwei zu zwei einander gegenüberliegenden Seiten des auszuleuchtenden Meßvolumens angeordneten Objektivlinsenanordnungen entlang ihrer optischen Achsen verschiebbar sind. Die Optiken für die einfallenden Lichtstrahlen und die von den Molekülen, Molekülkomplexen, Vesikeln oder Zellen des Meßvolumens ausgehenden Lichtstrahlen sind für jede "Hälfte" des Doppelmikroskops an zwei Seiten einer gemeinsamen Führungs- bzw. Trägervorrichtung angeordnet. Die ankommenden Lichtstrahlen werden jeweils über dichroitische Spiegel zu den Objektivlinsen hin abgelenkt. Die zurückkommenden Lichtstrahlen durchdringen geradlinig diese dichroitischen Spiegel, um über diverse optische Elemente wie Linsen, konfokale Elemente und Filtervorrichtungen auf einen Detektor zu treffen.

Zweckmäßigerweise verläuft die optische Achse der auf die dichroitischen Spiegel auftreffenden Lichtstrahlen rechtwinklig zur Verschiebungsrichtung der beiden Objektivlinsen. Die beiden Lichtstrahlen unterschiedlicher Wellenlänge treffen, einander überlagert, auf hintereinanderliegende Spiegel, von denen der im Strahlengang erste ein dichroitischer Spiegel ist. Über diesen dichroitischen Spiegel wird einer der beiden Lichtstrahlen abgelenkt, während der andere diesen dichroitischen Spiegel geradlinig durchdringt, um über den dahinter angeordneten Reflexionsspiegel in die zum ersten Lichtstrahl entgegengesetzte Richtung abgelenkt zu werden. Die Ablenkungsrichtung beider Lichtstrahlen ist parallel zur Verschiebungsrichtung der Objektivlinsen. Über Reflexions- oder dichroitische Spiegel werden die abgelenkten Lichtstrahlen wiederum abgelenkt, um die Optiken für die ankommenden Lichtstrahlen zu passieren. Dieser Aufbau der optischen Elemente des Doppelmikroskops hat den Vorteil, daß die beiden Objektivlinsen zusammen mit den Optiken für das auf das Meßvolumen auftreffende und von diesem ausgehende Licht verfahren werden können, ohne daß die Lichterzeugungsquellen mitverfahren oder -verschoben werden müssen. Die Lichterzeugungsquellen, bei denen es sich insbesondere um Laserquellen handelt, können entfernt vom Doppelmikroskop angeordnet sein; lediglich die Relativposition zwischen den Lichterzeugungsquellen und derjenigen Stelle des Doppelmikroskops, wo die beiden Lichtstrahlen übereinandergelagert eingespeist werden, darf sich nicht verändern.

Die Vorrichtung kann auch dann eingesetzt werden, wenn es notwendig ist, Fluoreszenzsignale aus dem Meßvolumen über den gesamten Raumwinkel $4\pi$ zu erfassen. Dies kann insbesondere dann der Fall sein, wenn es darauf ankommt, bei der Erfassung eines einzelnen Moleküls alle ausgesandten Photonen zu erfassen. In diesem Falle würde die beschriebene Vorrichtung so verwendet, daß mit nur einer Anregungswellenlänge gearbeitet wird, jedoch beide Registrierungsoptiken gemeinsam den gesamten Raumwinkel $4\pi$ erfassen.

Die Figur 1 veranschaulicht einen Rezeptorassay auf zugehörige Effektormoleküle unter Verwendung rezeptor-tragender Zellen, wobei die Rezeptoren spezifische Bindeeigenschaften zu einem Liganden L aufweisen. Der Ligand wird mit einem erfindungsgemäßen Farbstoffmarker versehen. Erfindungsgemäß wird vorteilhaft das molare Verhältnis und die Gesamtkonzentration von Rezeptoren und Ligand so gewählt, daß ca. 50% der Rezeptoren besetzt sind und ca. 50% der Liganden ungebunden bleiben. In der erfindungsgemäßen Analyse wird dies dadurch kenntlich, daß etwa die gleiche Anzahl emittierter Lichtsignale von Molekülen schneller Translationsdiffusion registriert wird, wie sie von Molekülen langsamer Translationsdiffusion registriert wird (schematische Darstellung oben rechts; die linke Stufe entspricht dem freien Ligand, die rechte Stufe entspricht dem rezeptor-gebundenen Liganden).

Bei Zusatz eines potentiellen Wirkstoffes zeigt eine Verschiebung des Gleichgewichtes eine Interaktion des fraglichen Wirkstoffes mit der spezifischen Rezeptorbindung an. Im Falle eines antagonistischen Aktivators oder Blockers der Rezeptorfunktion wird eine Verdrängung des markierten Liganden beobachtet (das Signal entspricht nur dem des freien Liganden). Das gleiche Signal kann erhalten werden, wenn eine allostere Wechselwirkung des Wirkstoffes mit dem Rezeptor oder mit dem Liganden eine Bindung des markierten Liganden verhindert.

In entsprechender Weise kann ein potentieller Wirkstoff auch die Bindung eines Liganden an den Rezeptor verstärken, so daß vermehrt gebundener Ligand gemessen wird (rechts unten).

Der Assay kann auch dann durchgeführt werden, wenn die Zelle weitere Rezeptoren trägt, die nicht mit der spezifisch beobachteten Reaktion interferieren.

Wenn sich das Gleichgewicht in einer Rezeptor-Erkennungsreaktion nicht schnell einstellt, kann es vorteilhaft sein, markierten Ligand und potentiellen Wirkstoff gleichzeitig um den Rezeptor kompetieren zu lassen.

Die Figur 2 beschreibt den Einsatz potentiell unterschiedlicher Rezeptoren auf unterschiedlichen Zellen, die jedoch möglicherweise einen definierten natürlichen Liganden mit gleicher Spezifität und Bindungsstärke erkennen, jedoch verschiedene Signale weiterleiten. Es könnten potentielle Wirkstoffe von Interesse sein, diese Rezeptoren gezielt zu aktivieren oder zu blockieren. Dies kann durch Mutanten/Varianten des natürlichen Wirkstoffes geschehen, als auch durch strukturell nicht verwandte Wirkstoffe.

Zunächst werden beispielsweise die Assays für die entsprechenden Ziel-Rezeptoren getrennt durchgeführt. Dabei gelten die in der Legende zu Figur 1 genannten Regeln. Ein potentieller Wirkstoff wird vornehmlich daraufhin untersucht, ob er effektiv spezifisch mit einer der untersuchten Rezeptorbindungen interagiert und so unterschiedliche Rezeptorfunktionen aufgetrennt werden können (mögliche Alternativen, unten links) . Bei gleichgerichteter Beeinflussung können sich Meßergebnisse wie unten rechts gezeigt einstellen.

Wie weiter unten an spezifischen Beispielen detaillierter erläutert werden wird, zeichnen sich erfindungsgemäße FCS-Assays insbesondere dadurch aus, daß sie nicht auf antikörper-vermittelte Spezifität beschränkt sind, sich für molekulare, zelluläre, gewebe-basierende, Systeme in homogenen oder Festphasen-Assays gleichermaßen eignen, daß sie die Bestimmung thermodynamischer Parameter (Bindekonstanten) und kinetischer Parameter (Geschwindigkeitskonstanten) ermöglichen, daß sie zerstörungsfrei die Untersuchung lebender Systeme erlauben (Zellkulturen, Gewebe) und daß unspezifische Wechselwirkungen mit Oberflächen keine störende Rolle spielen, wenn in Lösung analysiert wird.

**5. Screening von pharmakologisch aktiven Substanzen über die Bindung bekannter fluoreszenz-markierter Liganden an unbekannte Rezeptoren, die sich auf Zellen oder natürlichen oder künstlichen Vesikel-Strukturen befinden können**

Es gibt natürliche und chemisch synthetisierte Wirkstoffe mit pharmakologischer Wirksamkeit, deren Zielmoleküle nicht bekannt sind. Die Zielmoleküle können dabei extrazelluläre Moleküle sein (z.B. Protease-Hemmer), Oberflächen-Membran-Rezeptoren (z.B. Insulin), lösliche Rezeptoren als Mediatoren (steroidhormonbindende Rezeptoren) oder zelluläre Strukturproteine oder Enzyme.

Erfindungsgemäß läßt sich somit die äußerst wichtige Aufgabe lösen, zu einem bekannten Wirkstoff das pharmakologisch wichtige Zielmolekül zu finden, zu charakterisieren und gegebenenfalls zu präparieren:

- Orphan-Rezeptor-Suche
- Aufklärung pharmakologischer Wirkmechanismen
- Suche nach analogen Wirkstoffen
- Suche und Differenzierung unterschiedlicher Rezeptormoleküle, vorzugsweise in differenzierbaren biologischen Targets (unterschiedliche Zelldifferenzierung, Tumor/non-Tumor, krankheitsassoziiert - nicht krankheitsassoziiert etc.).

**Pharmakokinetik**

Erfindungsgemäß lassen sich auch pharmakokinetische Untersuchungen durchführen:

- nach verschiedenen Zeitintervallen nach Applikation eines bestimmten Wirkstoffes lassen sich Gewebeproben oder Körperflüssigkeiten in Kompetitionsexperimenten mit farbstoff-markierter, frisch zugesetzter Vergleichssubstanz analysieren.

**Differenzierung von Zielmolekülen von Wirkstoffen über die Dissoziationsgeschwindigkeitskonstante des Komplexes**

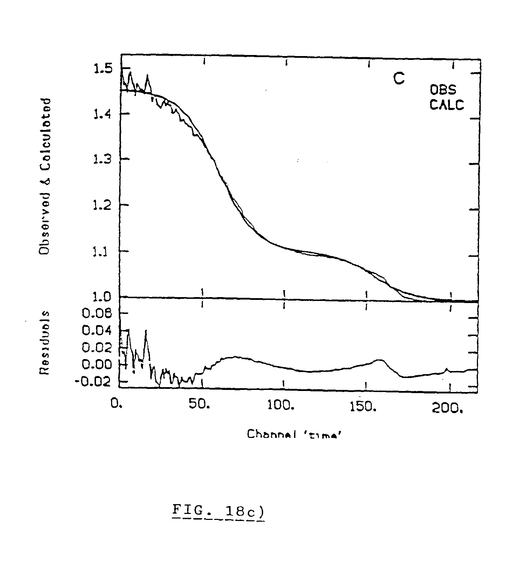

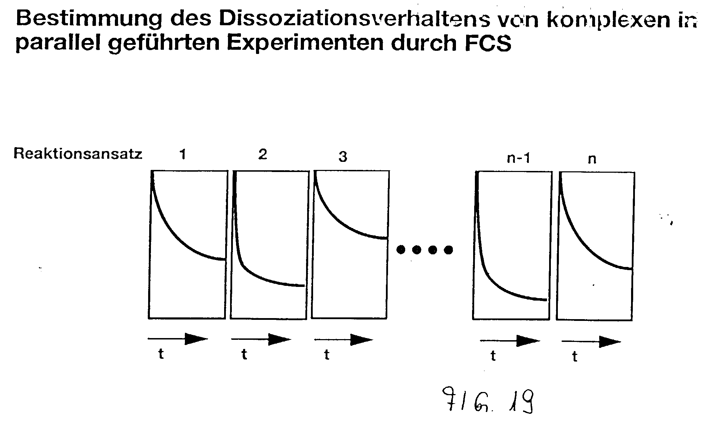

Wenn ein Gemisch unterschiedlicher Wirkstoff-Rezeptorkomplexe mit einem Überschuß an farbstoff-markiertem Wirkstoff versetzt wird, so wird annähernd jedes dissoziierte Wirkstoffmolekül durch farbstoff-markierten Wirkstoff ersetzt. Das Experiment kann wahlweise auch mit umgekehrter Markierung durchgeführt werden. Ein typisches Problem stellt beispielsweise die Analyse unterschiedlicher Zelllinien dar, um differierende Rezeptoren zu detektieren (Beispiel: Tumor-Oberflächenantigene, Protein-P bindende Rezeptortypen I, II, III). Typischerweise ergibt sich ein Bild wie es in Fig. 19 dargestellt ist, wenn parallel viele Proben analysiert werden. Experimentell werden erfindungsgemäß große Anzahlen von Analysen parallel und/oder wiederholend über einen langen Zeitraum bei langsamen Dissoziationsgeschwindigkeitskonstanten analysiert, indem die Bestimmung des Verhältnisses aus anfänglich gebundenem und dissoziiertem Wirkstoff iterativ in allen Positionen nach festgelegten Zeitintervallen analysiert wird. Fig. 19 enthält eine schematische Darstellung der Ergebnisse.

Auf diese Weise lassen sich beispielsweise unterschiedliche Rezeptoren oder antigene Determinanten bestimmen, die mit einem spezifischen Zielmolekül in ein und derselben Probe oder in unterschiedlichen Proben mit z.B. unterschiedlichen Zelltypen oder Differenzierungsstadien Komplexe unterschiedlicher thermodynamischer Stabilität bilden, die sich bei häufig vergleichbaren Größen für Reaktionsgeschwindigkeitskonstanten ($k_R$) in Dissoziationsgeschwindigkeiten ($k_D$) drastisch unterscheiden. So lassen sich über funktionale Assays biologische Leitstrukturen für sogenannte "Orphan drugs" oder "Orphan receptors" nachweisen oder Mitglieder einer multifunktionalen Molekülfamilie.

In der praktischen Handhabung ergeben sich insbesondere dadurch Vorteile, daß das Arbeiten in homogener Lösung eine für die Routineanalytik im nM-Bereich sehr kurze Inkubationszeit erlaubt, die praktisch nicht mehr von Relevanz ist (Sekunden- bis Minutenbereich), und daß umfangreiche Waschschritte oder Sekundärinkubationen entfallen.

Als Probenträger werden bevorzugt Folien-Trägersysteme verwendet, mit denen es möglich ist, die flüssige Probe berührungsfrei und somit kontaminationsfrei erfindungsgemäß dicht an das Objektiv heranzuführen (Figur 3).

Die Figur 3 veranschaulicht die Verwendung von Trägerfolien mit Vertiefungen, wie sie z.B. in den Patentanmeldungen PCT/EP 89/01320, PCT/EP 89/01387, PCT/DE91/ 0082, PCT/DE 91/00081, PCT/DE 91/00083, PCT/DE 91/00704 beschrieben sind oder eingesetzt werden. Die Reaktionsträger, die als Multi-Well-Folien bezeichnet werden, tragen Vertiefungen, die die Proben für die erfindungsgemäße FCS-Analyse aufnehmen können. Sie werden mit einer zweidimensional positionierbaren Folien-Aufnahme-Vorrichtung so gesteuert, daß der Boden der Probe-tragenden Vertiefung dicht an das Objektiv geführt wird, so daß das flüssige Probevolumen nicht weiter als ca. 100 - 1000 µm vom Objektivrand entfernt ist. $H_2O$ ist das bevorzugte Medium zwischen Folie und Objektiv, auf das sich die Korrektur des Objektives vorzugsweise bezieht (siehe oben). Die Folie ist optisch für das Anregungslicht des Laser und das emittierte Licht klar und chemisch inert. In einer bevorzugten Vorgehensweise sind die Folien durch eine Deckfolie verschlossen. Folien mit einem Abstand der Vertiefungen, wie sie dem handelsüblichen Mikrotitrationsformat oder Okasaki-Format entsprechen, sind bevorzugt, da Pipettierautomaten für diese Formate am Markt in großer Zahl verfügbar sind. Folien als Reaktionsträger sind darüberhinaus wenig umweltbelastend, leicht zu entsorgen und im verschlossenen Zustand raumsparend archivierbar.

## 6. Analyse ionischer Moleküle

Geladene Moleküle (Kationen und Anionen) lassen sich spezifisch innerhalb des Meßvolumens erfindungsgemäßen Verfahrens durch Einsatz einer "elektrischen Falle" analysieren. Dies kann z.B. dadurch geschehen, daß ein molekularer Fluß durch das Meßvolumen induziert wird, wobei mit oder ohne Überlagerung durch einen mechanisch induzierten Fluß ein elektrisches Feld für eine Konzentrierung bestimmter ionischer Moleküle im Meßvolumen sorgt, bzw. ein einzelnes Molekül gerichtet in das Meßvolumen transportiert wird. Dies kann sowohl durch ein gleichgerichtetes Feld, z.B. zwischen den Austrittsenden zweier Kapillaren mit einer Feldstärke im Bereich von etwa 1 V/1 µm erreicht werden. Es gelingt erfindungsgemäß auch, ein oder mehrere eingefangene Moleküle im Meßvolumen in einem elektrischen Wechselfeld oszillieren zu lassen, sobald es oder sie in dieses Meßvolumen eingetreten sind (siehe unten).

## Technische Beschreibung der erfindungsgemäßen Vorrichtung

### 7. Optik

Das erfindungsgemäße Verfahren ist technisch mit einer qualitativ hochwertigen Mikroskopoptik bezüglich der Bildqualität des Fokus durchführbar. Insbesondere das Linsensystem vor dem Austritt des Anregungslichtes muß chromatisch und sphärisch korrigiert sein. Bevorzugt eingesetzt wird das System Neofluar der Firma Zeiss, Oberkochen, Deutschland, mit hoher Apertur $\geq$ 1,2 N.A für den Einsatz mit und ohne Deckglas oder Trennfolie. Der Arbeitsabstand beträgt 0,17-0,9 mm. Das Objektiv ist für Wasser korrigiert und bietet bei maximalem Arbeitsabstand eine maximale Apertur. Ölimmersionsobjektive sind schlechter geeignet. Die Lichtmenge wird erfindungsgemäß durch eine konfokale Lochblende in der Bildebene nach dem Mikroskopobjektiv begrenzt.

### 8. Laser-Lichtquelle

Als Laser-Lichtquelle für Wellenlängen von > 200 - 1000 nm werden bevorzugt kontinuierliche Laser eingesetzt, insbesondere Laser des Typs Argon, Krypton, Helium-Neon, Helium-Cadmium, und modulierbare Diodenlaser (Rot- bis Infrarot-Bereich) mit der Möglichkeit der jeweiligen Frequenzverdopplung. Erfindungsgemäß ist auch der Einsatz hochfrequent gepulster Laser von $\geq$ 10 MHz möglich.

### 9. Laserintensität

Die Laserintensität ist mit 0,5 mW bereits so stark, daß einige Prozent der Farbstoffmoleküle im Meßvolumen angeregt sind. Mit einer Laserintensität von 5 mW beträgt der prozentuale Anteil der angeregten Moleküle bereits 50 %. Eine weitere Steigerung der Laserleistung erscheint somit für die Steigerung der Lichtausbeute nicht mehr sinnvoll.

### 10. Luminophor

Als kopplungsfähige Luminophore bzw. Fluoreszenzfarbstoffe kommen eine große Reihe möglicher Farbstoffgrundstrukturen sowie Oligomere dieser Farbstoffe in Frage, wie sie seit langer Zeit für fluoreszenzspektroskopische Nachweisverfahren eingesetzt werden. Bevorzugte Farbstoffe sind solche, die entweder nicht selbst zu spezifischen und interferierenden Wechselwirkungen mit Zielmolekülen beitragen, oder wie in der DE-A-42 34 086.1 vorgeschlagen (Henco et al.) gezielt unter Ausnutzung spezifischer Bindeeigenschaften wie der Fähigkeit zur Nukleinsäure-Doppelstrang-Interkalation eingesetzt werden.

Die eingesetzten Farbstoffe haben bevorzugt einen Absorptionskoeffizienten zwischen etwa 30.000 und 100.000 bei einer Quantenausbeute von 0,1 - 1.

Bewährt haben sich z.B. Farbstoffe aus der Reihe der Coumarine oder Rhodamin B-Derivate mit hohem Anteil hydrophiler Reste zur Verhinderung hydrophober Wechselwirkungen oder Farbstoffe auf der Basis von Thiazol-Orange-Grundstrukturen mit der Fähigkeit der Interkalation in Doppelstränge.

Für das erfindungsgemäße Meßverfahren ist die Resistenz der Farbstoffe gegen die licht-induzierte Ausbleichung (Bleichstabilität) eine wichtige Eigenschaft. Sie ist allerdings, wie oben erwähnt, nicht mehr von überragender Bedeutung für die Durchführung der Messung, da sich bei dem erfindungsgemäßen Einsatz sehr kleiner Meßvolumina die Meßzeiten um Größenordnungen verkürzt haben gegenüber ca. 1000fach größeren Meßvolumina.

## 11. Bedeutung des Triplettzustandes

Erfindungsgemäß bevorzugt sind Farbstoffe, die nicht zur Ausbildung von Triplett-Zuständen neigen.

Bei der Auswahl der Farbstoffe ist es von großer Wichtigkeit, solche Farbstoffe auszuwählen, die eine sehr geringe Tendenz haben, Triplett-Zustände auszubilden. Jeder eingenommene Triplett-Zustand erhöht die Wahrscheinlichkeit der chemischen Reaktion, liefert kein oder ein Signal ungewünschter Wellenlänge und verlängert den Zeitraum bis zur Bereitschaft, erneut in den Singulett-Zustand angeregt zu werden.

Werden als Markierung Farbstoffmultimere eingesetzt, insbesondere basierend auf hydrophilen Farbstoffen wie bestimmten Coumarin-Derivaten, so läßt sich die Meßzeit erheblich verkürzen. Die größere Anzahl einzelner Meßwerte führt dazu, daß weniger Ereignisse einer Molekülpassage durch das Meßvolumen verfolgt werden müssen, um eine hinreichende Meßgenauigkeit zu erhalten.

## 12. Meßvolumina

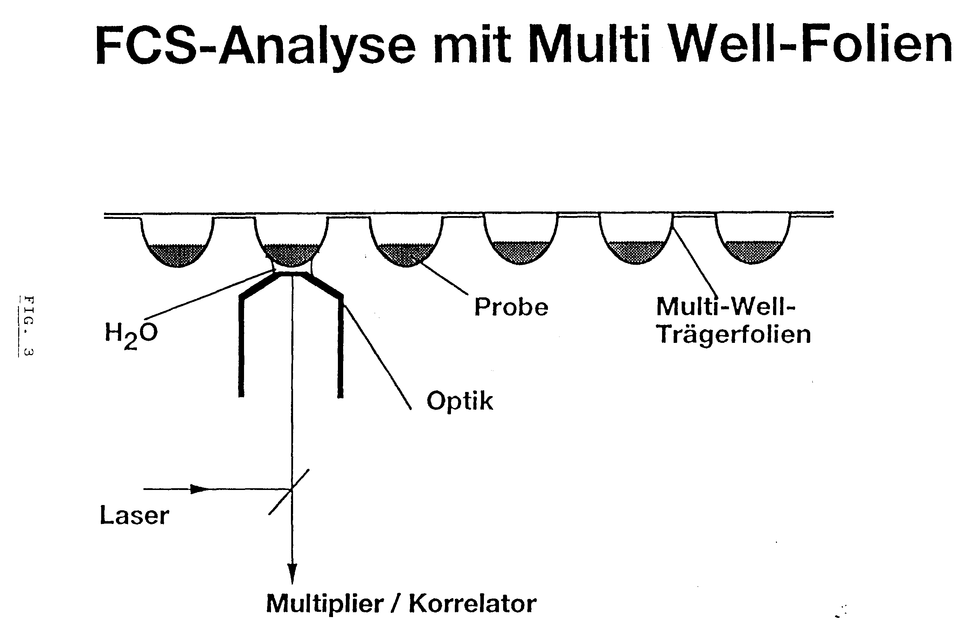

Die Meßvolumina müssen gemäß der Figur 4 100 - 1000 µm an das Ausgangsobjektiv der laser-fokussierenden Optik herangeführt werden. Dies geschieht im einfachsten Falle durch einen am Objektiv selbst hängenden Tropfen, der die zu analysierenden Moleküle enthält. Eine solche Meßanordnung ist nur für wenige Analysen einsetzbar, da hier die Kontaminationsgefahr zwischen verschiedenen Proben groß ist. Einsetzbar sind Techniken vergleichbar denen der konventionellen Mikroskopie mit Deckglas und Ölimmersion. Das erfindungsgemäße Verfahren benutzt Wasserimmersion und sehr dünne Glas- oder Kunststoffolien, um die wäßrige Probe von der Optik zu trennen. Die Folien können gleichzeitig zum Verschluß der darunterliegenden Kompartimente in Form flächiger Träger oder in Form von Kapillaren dienen.

Für die Anwendung zum Screening großer Probenzahlen, wie sie sich bei Experimenten zur evolutiven Optimierung von Biopolymeren ergeben, werden auch Membranen eingesetzt, die zur Probenseite gerichtet chemisch modifiziert sind. Bevorzugte Modifizierungen sind Oberflächenstrukturen mit spezifischen Bindungseigenschaften wie z.B. Ionenaustauschereigenschaft zur Fixierung von Nukleinsäuren und/ oder spezifischen Bindeeigenschaften gegenüber Proteinen wie Antikörperbeschichtung oder die Beschichtung mit Chelatbildnern, insbesondere NTA (Nitrilotriessigsäure) oder IDA (Iminodiessigsäure) zur gezielten Fixierung rekombinanter Proteine oder Peptide mit bindenden Oligopeptiden wie $(His)_6$, die mit hohen Bindungskonstanten ($k_{ass} \geq 10^{10}$) über Metallchelate an Oberflächen gebunden werden können, um sie auf ihre jeweiligen Wechselwirkungseigenschaften mit Ziel strukturen zu analysieren.

## 13. Molekülfalle

Eine andere Möglichkeit zur beschriebenen Erfassung einzelner Moleküle in kleinen Meßvolumina besteht in dem erfindungsgemäßen Einsatz einer Molekülfalle unter Zuhilfenahme eines elektrischen Feldes, die später beschrieben werden soll. Diese Analyse kann allerdings nur auf Moleküle, die mit dem elektrischen Feld in Wechselwirkung treten, wie ionisierte Moleküle angewendet werden.

## 14. Registrierung

Die Registrierung der Meßsignale erfolgt vorzugsweise über die Optik eines Fluoreszenzmikroskopes mit Einzelphotonenzählung, wobei bevorzugt ein Lawinendiodendetektor zum Einsatz kommt. Bewährt hat sich z. B. der Einsatz des SPC-100 und SPC-200 des Herstellers EG & G. Die Signalanalyse erfolgt mit einem digitalen Korrelator oder vielkanalzähler MCS.

## Verfahren und Applikation

## 15. Charakterisierung von Molekülen

Die Korrelationsmethode gibt direkt Aufschluß über drei charakteristische Molekülgrößen, die Anzahl (N), den Translationsdiffusionskoeffizienten $D_t$ und den Rotations-diffusionskoeffizienten $D_r$. Beide sind eine Funktion der Molekülgröße und -gestalt (d.h. Radius, Form und Volumen) und geben Aufschluß über Veränderung des Moleküls z.B. durch enzymatische Spaltung oder Komplexierung mit anderen Liganden etc. Da die Messung der zur Diffusion korrelierten Diffusionszeiten erfindungsgemäß schnell und empfindlich durchgeführt werden kann, läßt sich die Methode zur Analyse der Molekülgrößen und ihrer Verteilung in einer Population in Lösung ohne die Notwendigkeit einer chromatographischen Auftrennung verwenden.

## 16. Bestimmung von Bindungskonstanten

Wie R. Rigler gezeigt hat, ergibt die Analyse der Korrelationsfunktion für miteinander reagierende Moleküle, daß durch Messung der Molekülzahl N und der Gewichtsfaktoren der charakteristischen Diffusionszeiten die Wechselwirkung bestimmt werden kann. Für den Fall, daß der Wert der Reaktionsgeschwindigkeitskonstante langsamer als die Diffusionszeit ist, was immer bei spezifischen Reaktionen der Fall sein wird, ist die Korrelationsfunktion durch die Summe der gewichteten Diffusionszeiten gegeben:

$$G(t) = 1 + 1/N(x(l+t/\tau_x)^{-1} + y(l+t/\tau_y)^{-1})$$

wobei x, y und $\tau_x$, $\tau_y$ der Anteil und Diffusionszeiten von Molekül X und Y sind. $\tau = \omega^2/D$. $\omega$ ist der Radius des Meßvolumens und D die Diffusionskonstante.

Für den Fall, daß Reaktionsgeschwindigkeitskonstanten schneller als die Diffusionszeiten sind, wird die Korrelationsfunktion

$$G(t) = 1 + 1/N(l + 4\langle D \rangle t/\omega^2)^{-1}$$

wobei

$$\langle D \rangle = x\, D_x + y\, D_y$$

ist.

Sind $D_x$ und $D_y$ verschieden, so kann auf einfache Weise ohne molekulare Trennverfahren, wie sie in sog. inhomogenen Assays üblich sind, die Bindung von einem (kleinen) Liganden an ein großes Zielmolekül als Rezeptor (Protein, Nukleinsäure, Antikörper) verfolgt werden. Entsprechende Zusammenhänge lassen sich auch für die Rotationsdiffusionskoeffizienten bzw. Rotationsdiffusionszeiten ableiten. Die hohe Meßempfindlichkeit übersteigt Radioisotop-Methoden, wie sie aus den Techniken der Radioimmunoassays (RIA) bekannt sind. Diese sind nur bei Markierung mit hoher spez. Radioaktivität gleichwertig. Molekül-Trennverfahren und aufwendige Kalibrierung entfallen bei der erfindungsgemäßen Durchführung. Die Korrelationsmethode stellt somit eine Alternative zum heute verwendeten Kadioimmunassay dar. Entsprechend der oben beschriebenen Technik wird anstelle des radioaktiv markierten Antigen-Reagens ein fluoreszenzmarkiertes Antigen eingesetzt, dessen Bindung an einen Antikörper in homogener Phase oder inhomogener Phase (festphasen-gekoppelt) in Kompetition mit dem zu bestimmenden Antigen analysiert wird. Ein Vorteil des erfindungsgemäßen Verfahrens beruht darauf, daß auf unerwünschte Radioaktivität bei gleichzeitiger Erhöhung der Sensitivität der Meßmethode verzichtet werden kann.

## 17. Enzymatische Reaktionsprodukte

Dort, wo enzymatische Katalyse zu einer Veränderung der Molekülstruktur und des Molekülgewichtes führt, läßt sich die Entstehung von Reaktionsprodukten über die Veränderung der Molekülzahl und Diffusionszeiten verfolgen. Typische Anwendungen sind Replikation und Spaltung von Nukleinsäuren, Spaltung von Proteinen und Peptiden, aber auch die Selektion katalytischer Antikörper.

## 18. Moleküldynamik in Membranen und Zellen

Die Möglichkeit, die Rotationsdiffusion großer Moleküle in viskoser Umgebung durch die FCS-Methode zu messen, ist von besonderer Bedeutung für die Analyse der Dynamik spezifischer Rezeptoren an Zelloberflächen, aber auch im Zellinneren. Gleichzeitig läßt sich die Bindung markierter Liganden durch Messung von Rotationsdiffusion und Translationsdiffusion an Zellstrukturen, wie Rezeptoren u.a. messen. Beispiele hierfür sind Neurotransmitter, Gewebefaktoren wie Wachstumshormone, aber auch kationische Liganden wie $Ca^{2+}$.

Das erfindungsgemäße Verfahren kann auch unter Beteiligung nicht oder sehr langsam fluktuierender Moleküle durchgeführt werden. Dies ist beispielsweise dann gegeben, wenn in hochviskosen Medien gemessen wird, in Gel-Matrizes oder Geweberverbänden, unter Verwendung fester Phasen oder unter Beteiligung sehr großer Molekül-Komplexe oder Zellen.

Überraschenderweise lassen sich Zellen trotz ihrer großen Masse noch in einer wäßrigen Suspension vermessen. Brown'sche Bewegung und Turbulenzen sind hinreichend groß, um z.B. ein Membran-Segment mit ihren Rezeptoren in das Meßvolumen hinein und wieder hinauszubewegen, ohne daß es zu störenden Ausbleicherscheinungen der Farbstoffmarker kommt. Die schematische Figur 5 stellt die erfindungsgemäße Messung nahezu stationärer Moleküle dar. Sie können sich z.B. wie durch das Rechteck angedeutet als Membranrezeptoren auf einer immobilisierten Zelle (Rechteck) befinden. Das Koordinatenkreuz veranschaulicht die erfindungsgemäße Analyse auch nicht-fluktuierender Moleküle durch erzwungene relative Bewegung des Meßvolumens gegenüber dem stationären Element. Dies kann durch eine relative Veränderung der Laserkoordinaten, der Koordinaten des Meßvolumens oder der Koordinaten des Probenvolumens oder einer Kombination daraus geschehen.

Bei stark eingeschränkter Fluktuation oder bei stationär gebundenen Farbstoffmarkern muß erfindungsgemäß eine Fluktuation gegenüber dem Meßvolumen erzwungen werden. Dies gelingt durch erzwungene Bewegung des Proben- und des darin enthaltenen Meßvolumens (z.B. Vibration, Fluß) und/oder eine kontinuierliche oder diskontinuierliche Veränderung der Ortskoordinaten des Meßvolumens innerhalb des Probenvolumens. Dies geschieht vorzugsweise durch eine Veränderung des Fokus und/oder durch eine Veränderung der Position des ausgeleuchteten Volumenelementes. Im speziellen Fall eines ortsfesten Markermoleküls bestimmt ausschließlich die so erzwungene relative Bewegung gegenüber den Ortskoordinaten des Meßelementes die "scheinbare" Translationsdiffusion des gebundenen Farbstoffes. Um eine Diskriminierung von Farbstoffmolekülen zu erreichen, die an nicht ortsfeste Moleküle gekoppelt sind, muß die erzwungene relative Bewegung langsamer sein, als die der nicht ortsfesten Moleküle.

Die beschriebene erfindungsgemäße Vorgehensweise ist dann möglich, wenn die Zeit der Translationsdiffusion des langsam diffundierenden Komplexes für die Analyse nicht von Interesse ist, sondern nur die absolute oder relative Anzahl der damit verknüpften Farbstoffmarker. Dies ist z.B. bei der Bestimmung von Rezeptor-Bindungskonstanten an Zellkulturen oder in Geweben der Fall.

Die erfindungsgemäße Methode erlaubt in besonders vorteilhafter Weise die Messung von Molekül- und/oder Zell-Mobilitäten. Derartige Bestimmungen sind technisch, biologisch und medizinisch von großem Interesse und häufig nur durch technische Spezial-Methoden möglich, die keine weite Verbreitung gefunden haben. Als ausgewählte erfindungsgemäße Beispiele seien genannt, die Mobilitätsbestimmung von Spermien zur Fertilitätsbestimmung, die Beweglichkeit von Makrophagen, die Aktivität kontraktiler Elemente, die Beweglichkeit von Membranproteinen in natürlichen oder künstlichen Membranen, die Beweglichkeit passiv oder aktiv transportierter Moleküle. Dies geschieht in bevorzugter Weise durch Markierung der interessierenden Zellen, Molekülkomplexe oder Moleküle durch spezifische farbstoff-markierte Liganden wie markierte Antikörper oder Antikörper-Derivate oder durch direkte Markierung mit einem Farbstoffmarker.

Ein entscheidender Vorteil der erfindungsgemäßen Vorgehensweise ist die Möglichkeit des Screenings von pharmakologisch aktiven Substanzen über die Bindung bekannter fluoreszenz-markierter Liganden an an sich unbekannte Rezeptoren, die sich auf Zellen oder natürlichen oder künstlichen Vesikel-Strukturen befinden können. Gegenwärtig ist es eine bevorzugte Forschungsrichtung bei der Suche nach rezeptor-bindenden Wirkstoffen, zunächst bestimmte Rezeptoren wie die Familie der Protein-Kinase Rezeptoren zu klonieren und gesondert zu exprimieren. Diese Zielstrukturen werden sodann individuell z.B. in ELISA-Platten immobilisiert und im Rahmen von ELISA-Assays analysiert. Hierzu ist ein beträchtlicher Forschungs- und Personalaufwand notwendig, wobei noch die Gefahr hinzukommt, daß ein klonierter und isoliert exprimierter Rezeptor seine Funktionalität oder Spezifität verändert oder einbüßt.

Gemäß Fig. 1, 2) ist es im erfindungsgemäßen Falle möglich, auf die Klonierung von Rezeptoren vollständig zu verzichten. Es lassen sich Zellen oder Zellfragmente natürlicher Zellen oder klonierter Zellen einsetzen, da Rezeptoren nur in Konzentrationen, deren Werte im Bereich der reziproken Bindekonstante für die spezifische Ligandenwechselwirkung liegen, eingesetzt werden müssen. Damit ist auch die Gefahr unspezifischer Wechselwirkungen mit anderen Liganden oder Rezeptoren unterdrückt, die bei hohen Konzentrationen von Reaktanden auftreten können. Somit stört die Anwesenheit anderer Rezeptoren den Assay nicht.

Werden verschiedene Zellen/Zellinien in einem Assay mit einem einzigen markierten Liganden-Typ eingesetzt, lassen sich unter Umständen auch über Kompetition mit Mutanten bzw. Varianten des bindenden Liganden Unterschiede im funktionalen Verhalten der Rezeptoren unterscheiden. Eine differenzierte Rezeptorfunktion scheint gegenüber ein und demselben Effektor in unterschiedlichen Geweben ein nicht seltener Regulationsmechanismus zu sein (z.B. TNF, Kinine) (siehe Fig. 2). Pharmakologisch kann dieser Effekt durch Einsatz selektiver Ligandenvarianten genutzt werden, die nur einen Rezeptortyp erkennen.

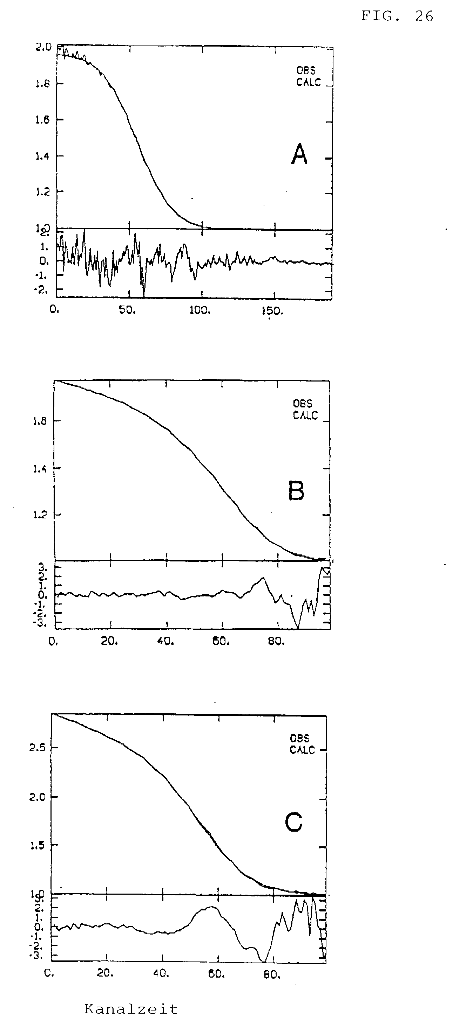

Die Fign. 26 bis 28 zeigen den erfindungsgemäßen Einsatz der FCS-Methode

(i) zur Bestimmung des Assoziationsverhaltens eines fluoreszenz-markierten Liganden an einen Rezeptor der äußeren Zellmembran,
(ii) der Unterscheidung von gebundenem und freiem Liganden und/oder
(iii) der Messung der Liganden-Beweglichkeit im Falle des Durchtritts in das Cytosol.

Die Alternativen (i) bis (iii) zusammengenommen sind ein Beispiel für den erfindungsgemäßen Einsatz der Methode im dynamischen Laserscanning-Mikroskop, mit dem es unter anderem gelingt, eine räumliche Abbildung der Beweglichkeit einer markierten Molekülsorte darzustellen. Aufgrund der so erhaltenen Konzentrationsverteilung eines bestimmten Moleküls lassen sich Rückschlüsse auf die Lokalisation dieses Moleküls ziehen. Die Methode erlaubt ebenfalls eine Beurteilung des molekularen Zustands in den jeweiligen Zell- oder Gewebekompartimenten, wie z.B. die Assoziation mit kompartimentierten Zielmolekülen (z.B. sense/antisense-Wechselwirkungen mit Virusnukleinsäuren).

(i) bis (iii) sind am Beispiel des humanen epidermalen Wachstumsfaktors (EGF) mit einem zellgebundenen Rezeptor (EGF-Rezeptor) aus der Ratte dargestellt. Die EGF-Rezeptor tragenden Zellen sind NBD2 Rattenblasenzellen, die aus entsprechendem Tumorgewebe abgeleitet wurden. Die Zellen sind oberflächenfixiert auf Petrischalen im PBS-Puffer (Phosphor-buffered Saline). Sie wurden zuvor in Standardmedium gezüchtet bis zum Erreichen eines konfluenten Monolayer. Das Medium enthält EGF, das mit Tetramethylrhodamin markiert war. Zur Anregung wurde Laserlicht der Wellenlänge 500 nm eines Argon-Laser (0,5 mW) gewählt.

Der freie EGF-Faktor besitzt einen Rotationsdiffusions-koeffizienten von $\tau_{Dfrei} = 0,145$ ms. Seine Konzentration beträgt 6 nM. Die Fig. 26a gibt die Autokorrelationsfunktion des freien EGF wieder.

Nach einer 30-minütigen Inkubation mit der Monolayer-Zellschicht ergibt sich die Autokorrelationsfunktion gemäß Fig. 26b für den Fall, daß das Meßvolumen den Bereich der äußeren Zellmembran umfaßt (s. auch Fig. 5). 88 % des meßtechnisch erfaßten Liganden befindet sich im rezeptorgebundenen Komplex mit der zugehörigen Diffusionszeit $\tau_{DKomplex} = 14,54$ ms. Diese Zeit ist eine Größe für die Diffusion des Rezeptors in der Zellmembran. 12 % des Liganden werden mit der Diffusionszeit $\tau_{Dfrei} = 0,145$ ms erfaßt. Es befindet sich ca. ein EGF-Rezeptor in einem Raumelement. Die zugehörige Membranoberfläche beträgt $0,5 \times 10^{-8}$ cm$^2$. Nach 30-minütigem Waschen ergibt sich die in der Fig. 26c dargestellte Autokorrelationsfunktion, aus der sich folgendes ablesen läßt: ca. 0,5 EGF-Rezeptoren pro Meßvolumen halten noch den Liganden mit hoher Affinität gebunden.

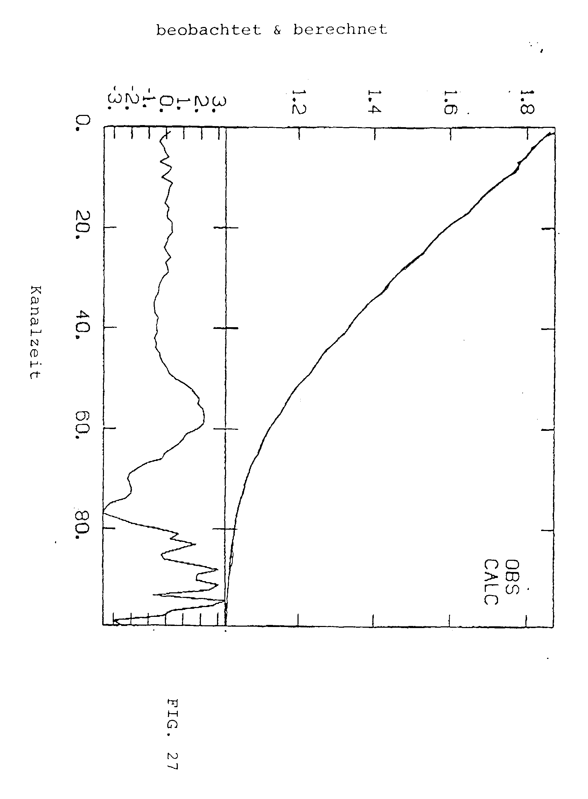

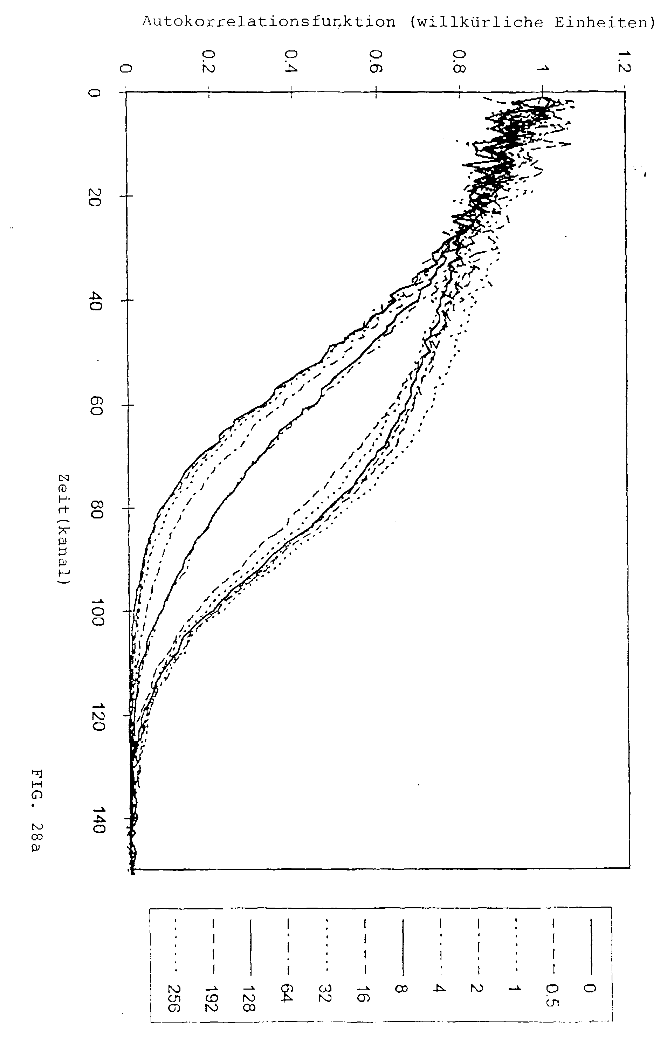

Liegt das FCS-Meßvolumen zum zumindest überwiegenden Anteil im Cytosol einer Zelle, so erhält man die Fig. 27 (EGF im Cytosol). 38 % des internalisierten EGF ist in seiner Beweglichkeit gehindert (sei es durch Bindung an Rezeptoren oder durch Einfluß eines viskosen Milieus) (Diffusionszeit $\tau = 3,3$ ms), 62 % des EGF weist eine Beweglichkeit wie diejenige des freien Faktors auf.

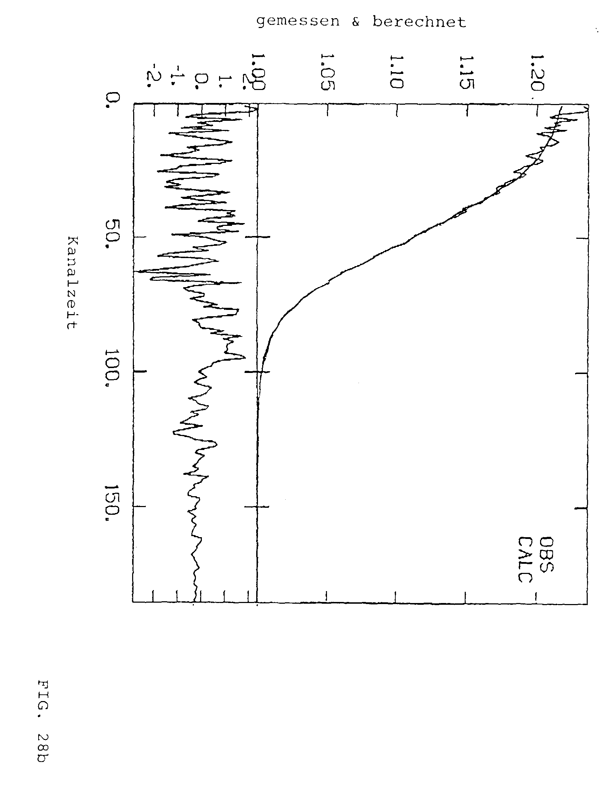

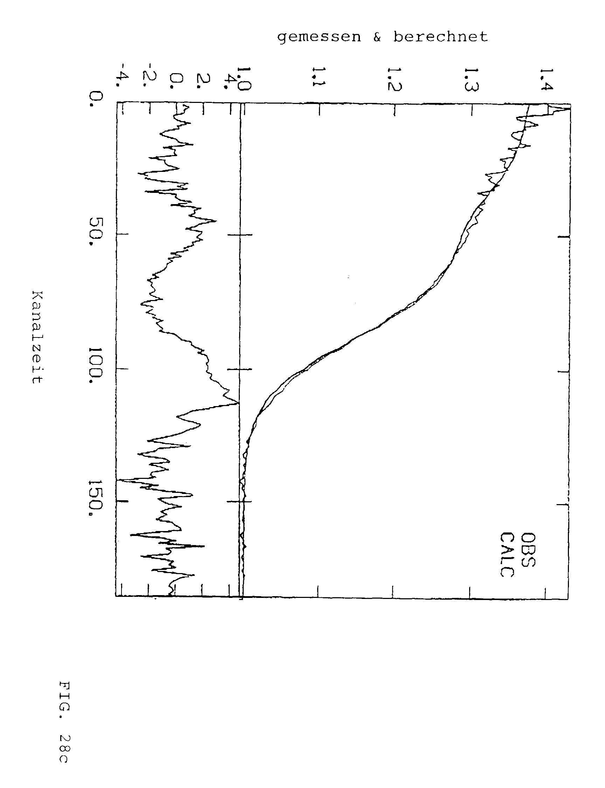

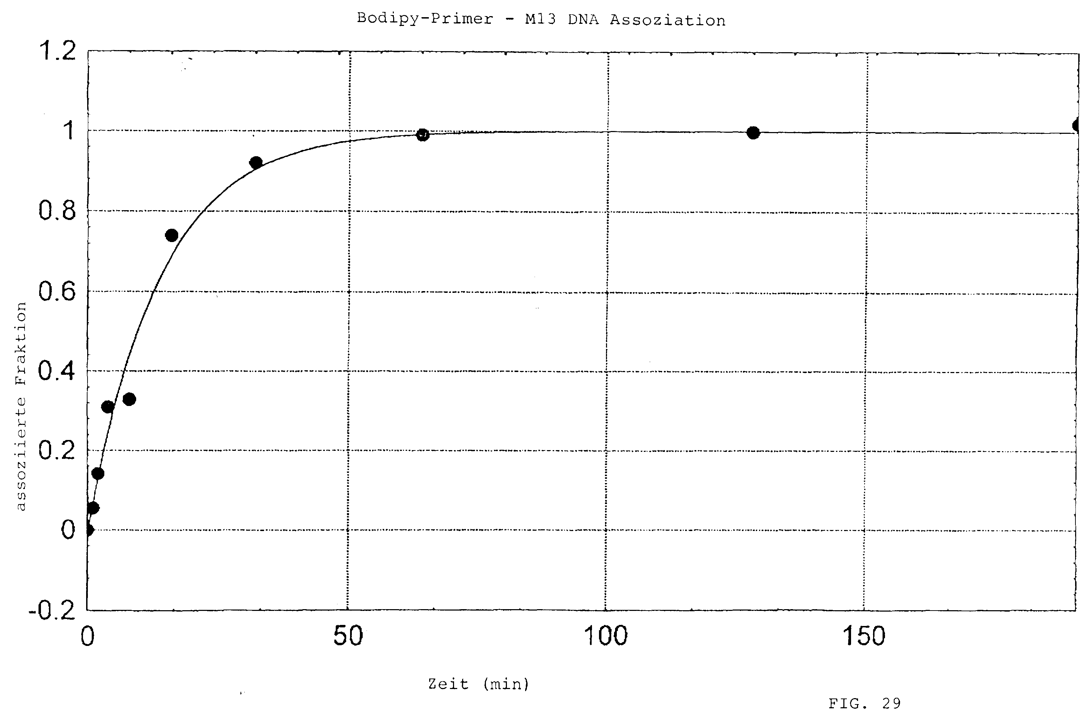

Die Fig. 28a zeigt die Wechselwirkung eines DNA-Oligonukleotids der Sequenz M13/pUC (-21) Primer (5'-TGACCGGCAGCAAAATGT-3') mit einer viralen Einzelstrang-DNA des Bakteriophagen M13, die die entsprechende Gegensequenz enthält. Das Oligonukleotid ist an der Position 5'-C$_6$ mit Bodipy (Molecular Probes) markiert. Es wurde erfindungsgemäß ein zeitlicher Verlauf der Assoziationsreaktion in Lösung bei 40 °C gemessen. Die Lösung enthielt 50 nM Oligonukleotid, 50 nM M13mp18 (+) DNA in 10 nM Tris-Puffer, pH 7,5 und 0,18 M Natriumchlorid. Die Varianz der zeitlich aufeinanderfolgenden Autokorrelationsfunktionen zeigt die Kinetik der Assoziation. Die Autokorrelation wurde nach 0, 0,5, 1, 2, 4, 8, 16, 32, 64, 128, 192 und 256 Minuten bestimmt. Die Diffusionszeit des freien Primers beträgt 0,17 ms und in der Komplexbindung 2,9 ms. Die Fig. 29 zeigt den experimentell ermittelten Verlauf der Assoziation als %-Anteil des Primers im assoziierten Komplex. Es ergibt sich eine Reassoziationsrate von 0,07 min$^{-1}$.

Die Fig. 28b zeigt das Beispiel der Autokorrelation der markierten Primer-DNA. Die Fig. 28c zeigt die Autokorrelationsfunktion eines Gemisches von freiem und M13 DNA gebundendem Primer.

Zellen eines Meßvolumens können in situ und weitgehend zerstörungsfrei analysiert werden. Dies ist besonders für pharmakokinetische Untersuchungen von Relevanz.

## 19. Kinetische Reaktionsparameter

Die Möglichkeit, Diffusionszeiten in Bruchteilen von Sekunden zu bestimmen, erlaubt die kinetische Wechselwirkung zweier Moleküle mit hohen Assoziationskonstanten zu analysieren und Rekombinations- und Dissoziationsgeschwindigkeitskonstanten zu bestimmen. Dies ist von besonderem Interesse für die Charakterisierung der Wechselwirkungen hoher biologischer Spezifität, wie Antigen-Antikörper-, Ligand/Rezeptor-Wechselwirkung u.a. Die Analyse besonders langsamer Prozesse mit Konstanten bis $10^{-6}$ s$^{-1}$ ist ohne weiteres möglich, wegen des dem erfindungsgemäßen Verfahren innewohnenden Vorteils der Selbstkalibrierung (Fig. 19).

## 20. Detektion einzelner Moleküle

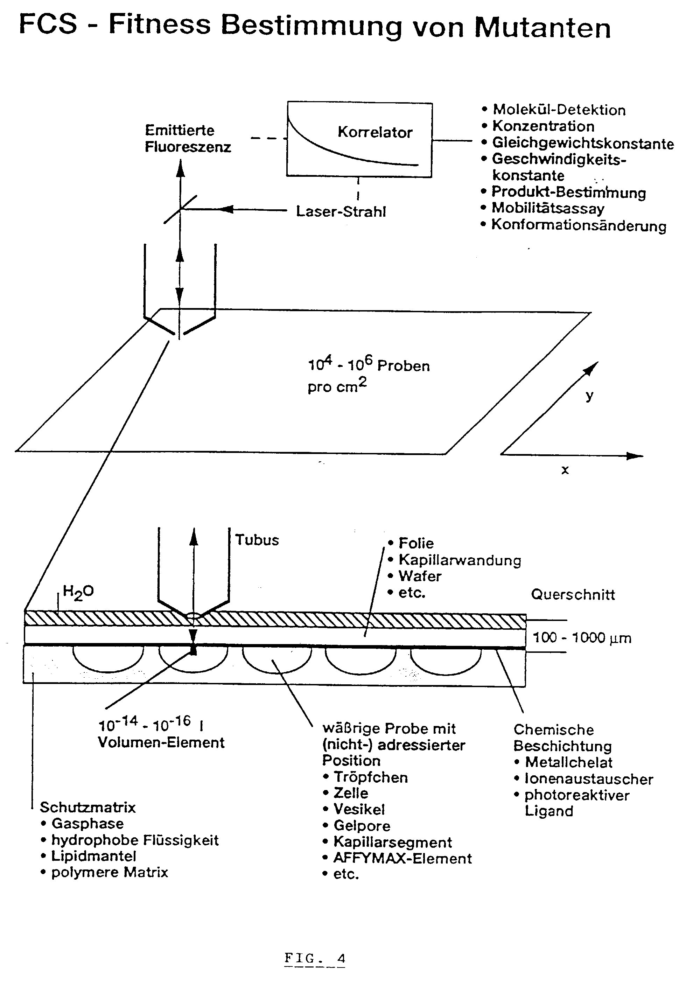

Die hohe Empfindlichkeit der Meßmethode läßt die Beobachtung einzelner Moleküle in ihrer Bewegung durch mindestens einen detektierenden Laserstrahl zu. Durch die Benutzung von sogenannten "Molekültrichtern" in Form von speziellen Glaspipetten mit Öffnungen von $\leq 1$ µm lassen sich einzelne Moleküle in einen Laserstrahl mit einem Durchmesser zwischen 1-5 µm durch Fluß einbringen. Durch die Einwirkung elektrischer Felder wird die Brown'sche Molekularbewegung so stark eingeengt, daß jedes Molekül das Intensitätsmaximum des Laserstrahls passiert. Die Anordnung der optischen Einheiten mit einander gegenüber gelegenen Detektoren und Immersionsoptik garantiert sehr guten Photonenfluß und Detektionsgenauigkeit bzw. Detektionseffizienz der in alle Raumrichtungen emittierten Lumineszenz (Figur 6). Die Anordnung eignet sich zum Beispiel zur Analyse von Sequenzen einzelner DNA oder RNA-Moleküle unter Zuhilfenahme exonukleolytischer Degradation (J.H. Jett et al., US 4,962,037), aber auch zur Erfassung einzelner mit Markierung und Ladung versehener Moleküle.

## 21. Detektion einzelner Moleküle durch Einsatz elektrischer Molekülfallen im statischen Feld oder im Wechselfeld

Einzelne ionisierte Moleküle lassen sich auch durch erzwungene, gerichtete Translation im elektrischen Feld im Meßvolumen festhalten. Alternativ läßt sich die einmalige oder wiederholte Translation durch das Meßvolumen erzwingen. Dies geschieht bevorzugt in einer Anordnung, die in Figur 6 schematisch gezeigt ist. Ein Fluß von Molekülen durchläuft ein größeres Probenvolumen in dessen Zentrum sich das Meßvolumen befindet. Durch ein elektrisches Feld, statisch oder als Wechselfeld, läßt sich die Wanderung geladener Moleküle durch das Meßvolumen erzwingen. Damit lassen sich Moleküle quasi fokussieren. Diese "Molekülfokussierung" ist dann von Bedeutung, wenn sich im Probenvolumen nur ein oder wenige Molekül(e) befinden, die es quantitativ zu erfassen gilt.

Dazu wird bevorzugt das Probenvolumen als Mikrotropfen zwischen den Öffnungen zweier Mikrokapillaren fixiert, wie sie von B. Sakmann und E. Neher beschrieben wurden. Die Kapillaren sind mit einer leitfähigen Metallschicht bedampft, bevorzugt Gold auf Chromgrundierung, die an den Öffnungen der Kapillaren mit dem wäßrigen Puffersystem in Kontakt steht. Das Meßvolumen befindet sich innerhalb des Probentröpfchens, wobei das Ausgangsobjektiv des Mikroskops mit dem Tropfen in direktem Kontakt steht oder durch eine Folie von dem Objektiv getrennt ist.

Ist ein einzelnes Molekül oder ein Molekülkomplex nach dem Austritt aus dem Kapillarende einmal im Meßvolumen erfaßt, lassen sich auch kinetische Daten erhalten. Es ist technisch nicht aufwendig, in dem kleinen Meßvolumen einen Feld- oder Temperatursprung zu realisieren. Wenn Reaktionskomplexe einen Wien-Effekt zeigen oder eine hinreichende Reaktionsenthalpie aufweisen, lassen sich diese Parameter in Relaxationsverfahren nutzen, z.B zur Bestimmung von Reaktionsgeschwindigkeitskonstanten.

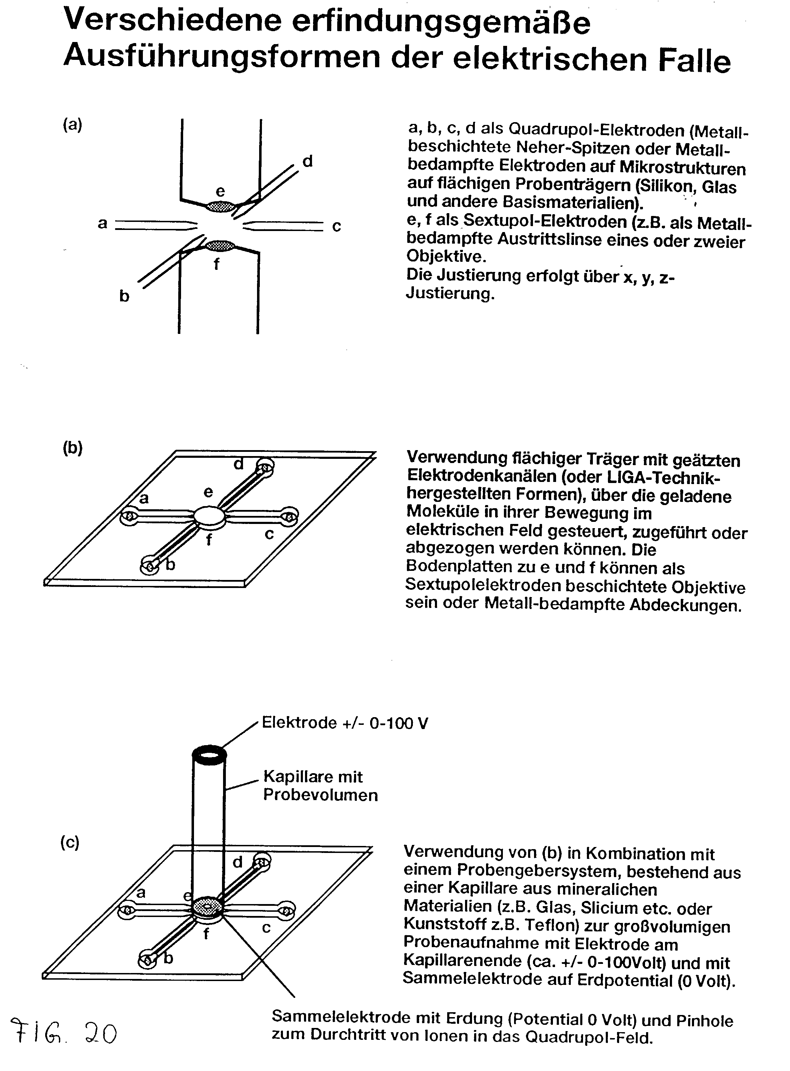

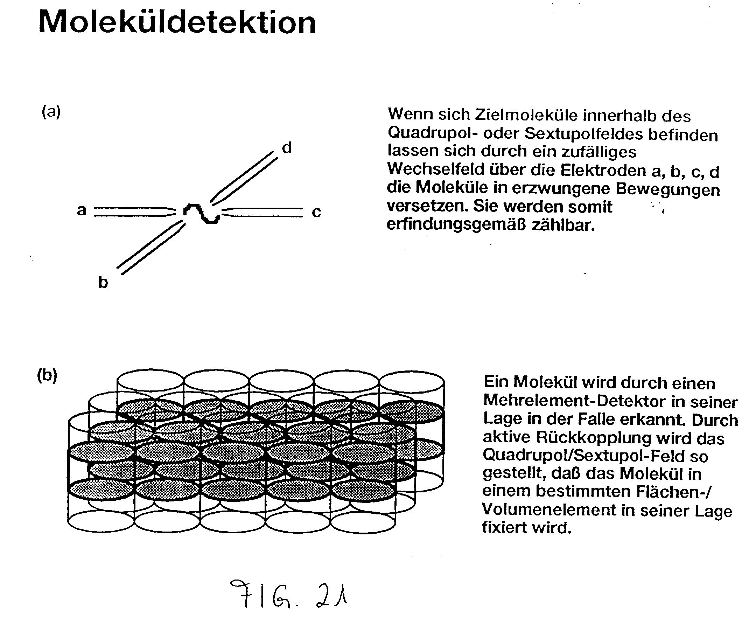

Das Prinzip der Einzel-Moleküldetektion mit einer trägerfreien, elektrisch vermittelten Konzentration von geladenen Molekülen wie z.B. Nukleinsäuren im Meßvolumen ist von erheblicher Bedeutung bei der Analytik von Einzelmolekülen in hochverdünnten Lösungen. Dabei sind zwei Aspekte von herausragender Bedeutung: der erfindungsgemäße aktive Transport eines oder weniger Moleküle aus einem größeren Probenvolumen von 10 - 1000 µl in das Meßvolumen von ca. $10^{-9}$ µl bedeutet eine Konzentrierung um den Faktor $10^{10}$ bis $10^{12}$ (Fign. 20, 21).

Ein Molekül pro ml bedeutet eine Konzentration von ca. $10^{-21}$ M. Dies bedeutet bei einer beschriebenen Konzentrierung im Meßvolumen eine Endkonzentration von $10^{-9}$ M. Damit läßt sich wie im Abschnitt DNA-Analytik beschrieben, eine Hybridisierung mit gleichzeitig aufkonzentrierten, farbstoff-markierten Sonden bei schnellen Reaktionsgeschwindigkeiten durchführen.

Für die Diagnostik bedeutet dies einen bemerkenswerten Fortschritt. Es lassen sich auf diese Weise Diagnosen bislang nicht realisierter Sensitivität durchführen, insbesondere unter Verzicht auf enzymatische Amplifikationsverfahren und der damit verbundenen Problematik wie der Kontaminationsgefahr durch Amplifikationsprodukte. Dies ist für die Bakterien-und Virusdiagnostik von besonderer Bedeutung.

Wenn sich die Viren oder Bakterien in verdünnten Lösungen befinden und nicht durch einen großen Überschuß, ebenfalls negativ geladener, Begleitnukleinsäuren verunreinigt sind, kann die Analyse ohne vorherige Abtrennung kontaminierender Nukleinsäure erfolgen. Dies ist z.B. bei forensischen Analysen der Fall, wenn geringste Mengen biologischen Materials genetisch analysiert werden sollen. In der klinischen Analytik ist dies bei zellfreien Überständen von Körperflüssigkeiten wie z.B. Sputum, Urin oder Plasma der Fall.

Eine große Menge von Begleitnukleinsäuren kann für den Konzentrationsprozeß und die nachfolgende Hybridisierung störend sein. Die Nukleinsäure läßt sich jedoch zuvor z.B. über spezifische Hybridisierungsverfahren an reichern. Dabei werden z.B. durch einen Überschuß von festphasen-gekoppelten Gegenstrangsonden, die im molaren Überschuß angeboten werden und vorzugsweise nicht mit der Sonde homolog sind, bestimmte Nukleinsäuren aus einem großen Volumen extrahiert und so von kontaminierenden Begleitnukleinsäuren getrennt. Nachfolgend werden die Nukleinsäuren wieder freigesetzt, um sie erfindungsgemäß im Meßvolumen zu konzentrieren.

Prinzipiell lassen sich auch andere Moleküle mit Hilfe der erfindungsgemäßen elektrischen Falle im Meßvolumen konzentrieren. Bedingung ist ein spezifischer Ladungscharakter des Zielmoleküls, der entweder wie im Falle der Nukleinsäuren eine intrinsische Eigenschaft der Moleküle ist, oder eine Ladung, die durch Milieubedingungen etabliert wird oder eine Ladung die durch Reaktion mit einem bestimmten Liganden erzeugt wird.

In einer erfindungsgemäß bevorzugten Verfahrensweise kann die spezifische farbstoff-markierte Sonde oder der markierte Ligand bei nicht-Nukleinsäure-Nachweisreaktionen so konstruiert sein, daß die Nachweismoleküle nur dann durch Vermittlung des elektrischen Feldes in das Meßvolumen transportiert werden, wenn die spezifische Komplexbildung bereits erfolgt ist. Dies geschieht erfindungsgemäß dadurch, daß die nicht-komplexierte Sonde ungeladen ist oder sogar eine entgegengesetzte Ladung aufweist in Hinblick auf das Zielmolekül und den im Meßvolumen anzureichernden Komplex aus Rezeptor-Target und Ligand.

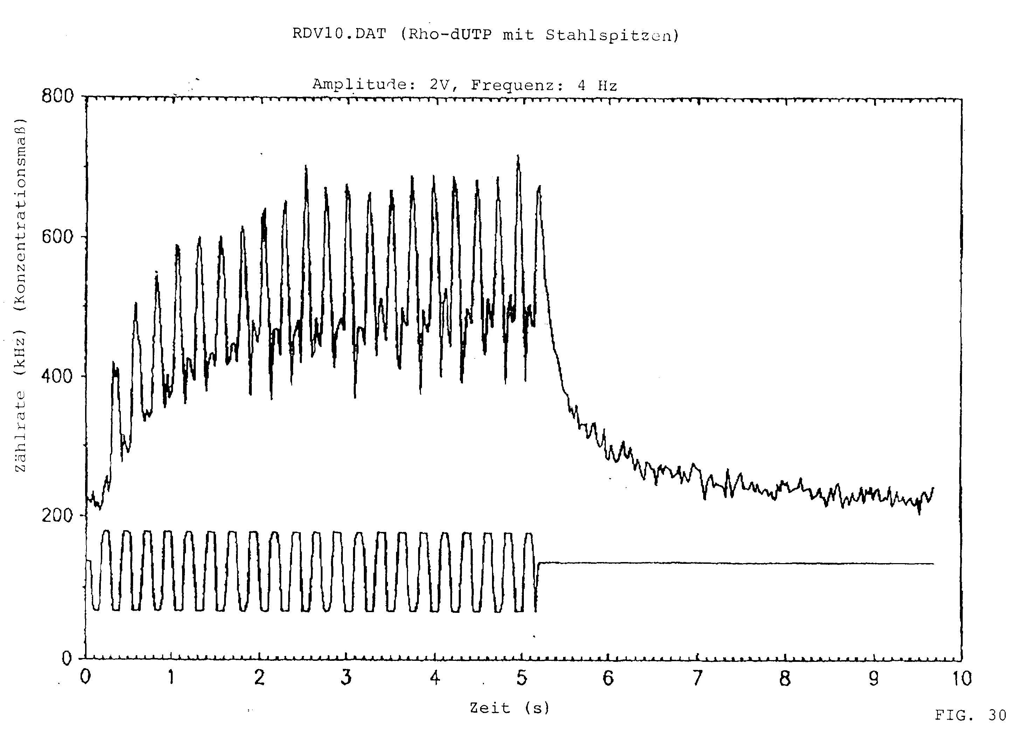

Die Fig. 30 zeigt die Bewegung geladener Mokeküle in einer Dipolfalle. Gezeigt sind Konzentrationsschwankungen und Oszillationen negativ geladener rhodamin-markierter dUTP Moleküle in Wasser in einem laserbeleuchteten Volumenelement bei einem oszillierenden elektrischen Feld einer Feldstärke von 10 kV/cm und einer Frequenz von 4 Hz. Die optische Beobachtungsachse verläuft senkrecht zum Feldgradienten (s. Fig. 6). Der Effekt der Konzentrierung der Moleküle im Meßvolumen wird deutlich. Der Konzentrierungseffekt wird in dem Moment aufgehoben, wenn das Feld abgeschaltet wird und die Moleküle per Diffusion das Meßvolumen verlassen. Vergleichbare Resultate können erhalten werden durch gegenüberstehende Mikrokapillaren wie in Fig. 6 beschrieben.

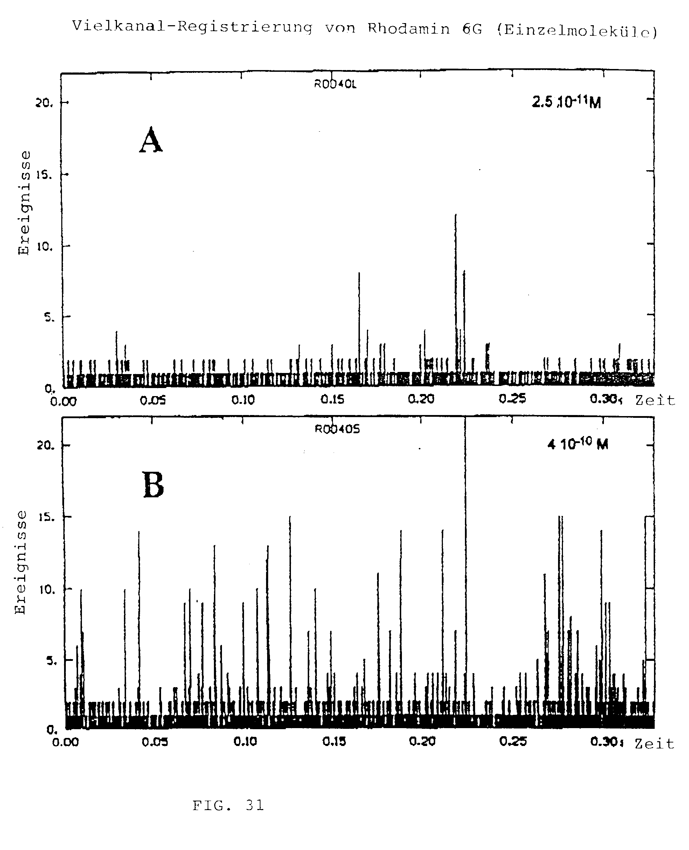

Die Fig. 31 zeigt Photonenschauer einzelner Rhodamin 6G-Moleküle in Wasser. Als Photonenschauer ist die Summe der registrierten Photonen gemeint, die empfangen werden, während sich das Molekül im Gauss'schen Meßvolumen befindet. Damit ist die Möglichkeit einer zuverlässigen Detektion einzelner Moleküle mit einem einzigen Chromophor belegt. Fig. 31a: 2,5 x $10^{-11}$ M; Fig. 31b 4 x $10^{-10}$ M. Die Kanalzeit war jeweils 4 x $10^{-5}$ s = Diffusionszeit; Gauss'sches Meßvolumen 0,24 fl.

## 22. PNA (Protein-like nucleic acid)

Erfindungsgemäß besonders geeignet sind Moleküle, deren Bindungsverhalten an Nukleinsäuren dadurch besonders fest ist, daß sie ungeladen sind oder sogar über eine dem Phosphat-Rückgrat entgegengesetzte Ladung zu einer elektrostatischen Stabilisierung eines Komplexes beitragen. Moleküle, die zu einer Hybridisierung fähig sind, müssen nicht unbedingt chemisch den Charakter einer Nukleinsäure haben. Es sind sogenannte PNA-Moleküle beschrieben worden, die sich erfindungsgemäß besonders vorteilhaft einsetzen lassen.

Im Falle eines Nukleinsäure-Targets größerer Kettenlänge ist dies dadurch zu erreichen, daß die negative Überschußladung des Zielmoleküls die elektrische Ladung und das elektrophoretische Trennverhalten bestimmt und z.B. eine entgegengesetzte Ladung eines Sondenmoleküls über kompensiert. Auf diese Weise kann es erreicht werden, daß gezielt nach erfolgter Hybridisierung die komplexierten Zielmoleküle im Meßvolumen konzentriert werden, während der Überschuß der markierten Sondenmoleküle aus dem Meßvolumen entfernt wird.

Das erfindungsgemäße Verfahren erlaubt beispielsweise auch den direkten Nachweis einzelner Viruspartikel in einem Volumen von ca. 100 µl - 10 ml (das entspricht $10^{-20}$ - $10^{-22}$ M) Serumflüssigkeit ohne enzymatische Nukleinsäure-Amplifikationsverfahren.

Für den hier als Beispiel dienenden positiven Nachweis auf Nukleinsäure-Basis aus Serumproben müssen vorzugsweise die folgenden Voraussetzungen gegeben sein:

- Die genannte Menge Serumflüssigkeit muß mindestens ein Virion mit für eine Hybridisierung zugänglicher Nukleinsäure (DNA oder RNA) enthalten.

- Die Lösung muß eine erfindungsgemäße hochspezifische Nukleinsäure-Sonde als Nachweisreagenz mit Fluoreszenz-Markierung enthalten. Die Länge der Sonde muß so gewählt werden, daß hohe Spezifität bezüglich der Zielsequenz gewährleistet ist, da im Serum möglicherweise im hohen molaren Überschuß RNA-Moleküle auftreten können.

- Bei der Wahl der Länge muß die Stabilität der Bindung der Sonde an die komplementäre RNA oder DNA berücksichtigt werden. Die Dissoziationsgeschwindigkeit sollte möglichst unterhalb von $10^{-5}$ $sec^{-1}$ liegen. Das bedeutet, daß das Hybrid ca. einen Tag stabil bleibt, auch wenn die freien Sonden-Moleküle entfernt sind, d.h. wenn das Gleichgewicht bei einer angenommenen Konzentration von $10^{-20}$ M vollständig auf Seiten der dissoziierten Moleküle liegt. Dies geschieht erfindungsgemäß, wenn die freien Sonden später durch Elektrophorese vorzugsweise bis auf $10^{-20}$ M ausgedünnt werden.

- Die Sonde muß bei der Hybridisierung in so hoher Konzentration vorhanden sein, daß Assoziation und Hybridisierung innerhalb von Sekunden bis Minuten erfolgen. Niedrige Konzentrationen können erfindungsgemäß eingesetzt werden, wenn dem Hybridisierungsmedium die unten diskutierten Substanzen zur Beschleunigung der Assoziation zugesetzt werden.

- Die Sonde wird mit mindestens einem, vorzugsweise mehreren erfindungsgemäßen Fluoreszenz-Farbstoffen chemisch verknüpft. Die elektrophoretische Beweglichkeit der freien Sonde sollte sich von der der komplexierten Sonde unterscheiden. Dies gelingt in einfacher Weise durch Ausnutzung von Größenunterschieden oder Unterschieden in der Konformation oder erfindungsgemäß durch den Einsatz von Sondenderivaten mit modifiziertem, neutralem oder positivem Ladungscharakter.

Die erfindungsgemäße Analyse erfolgt in der erfindungsgemäß beanspruchten Apparatur durch Kombination mit einer speziellen elektrophoretischen Einheit, die in einer bevorzugten Ausführungsform beschrieben wird.

Sie besteht aus einer Elektrophoresezelle mit Kapillarausfluß (Durchmesser ca. $10^{-3}$ mm) und ist mit der erfindungsgemäßen Einzelmolekül-Fluoreszenzapparatur (FCS) kombiniert.

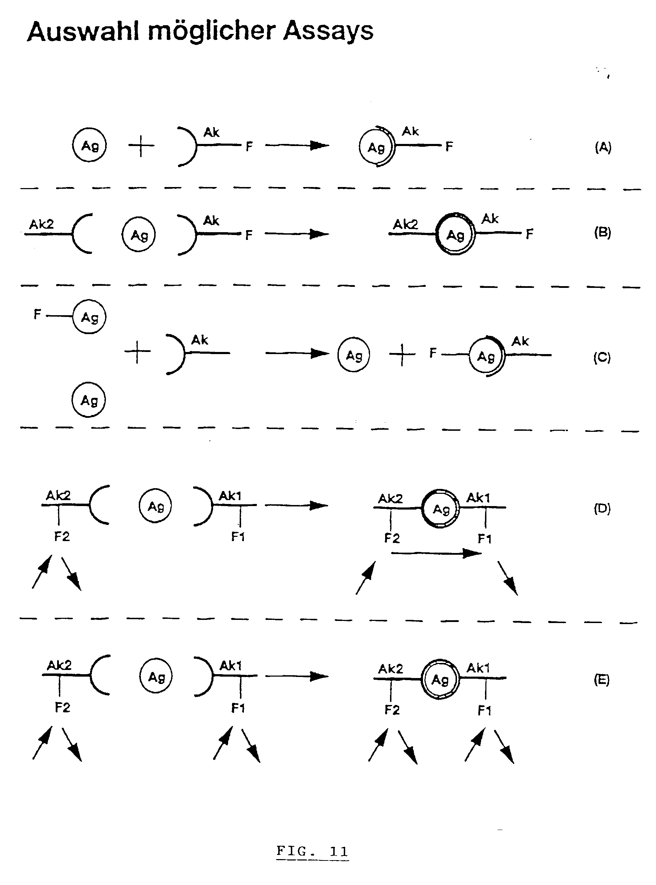

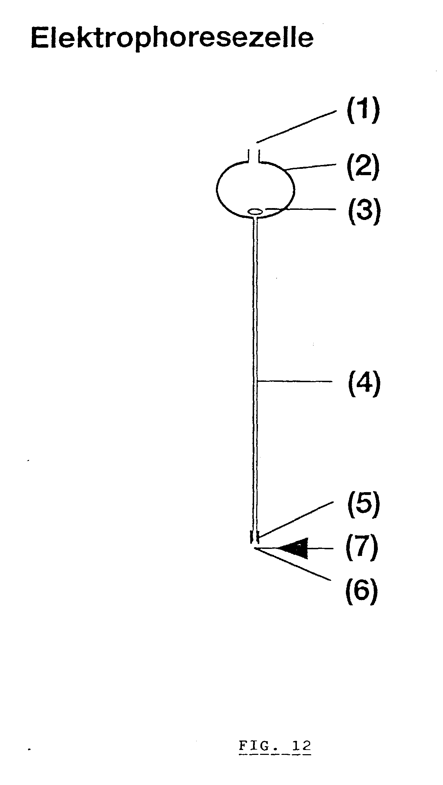

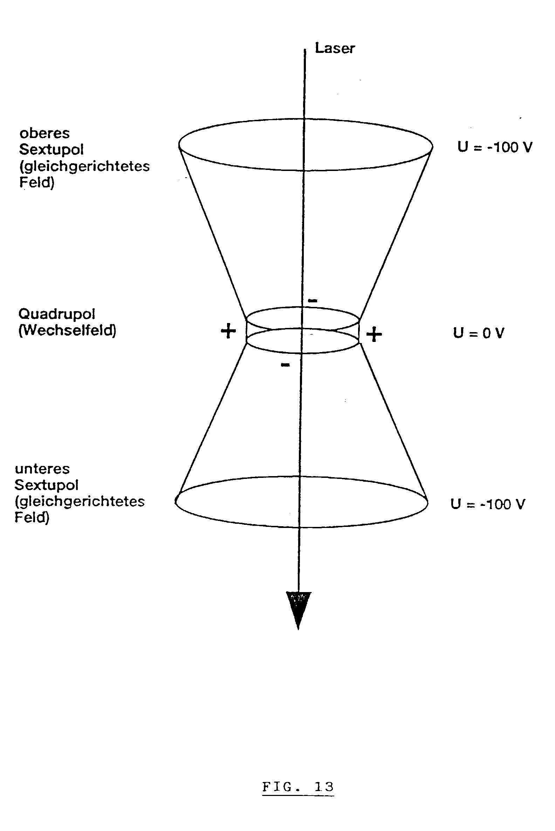

Die Abb. 12 beschreibt schematisch eine bevorzugte Ausführungsform einer Elektrophoresezelle. Sie enthält (1) mindestens eine Öffnung für die Zugabe/Entnahme der zu analysierenden Probe und/oder einer Waschlösung; (2) Wand-Elektrode; (3) Ring-Elektrode; (4) Neher-Kapillare; (5) vergoldete Spitze als Elektrode; (6) Tropfen-Austritt; (7) Laserstrahl.

Die Elektrophoresezelle wird mit der Meßprobe gefüllt, der eine möglichst genau dosierte Primerlösung zugefügt ist. Zwischen Wand- und Ring-Elektrode wird z.B. über einen Zeitschalter eine Spannung angelegt, die innerhalb von Minuten zu einer Konzentrierung von Sonde und Hybrid in der Ring-Elektrode führt. Danach wird vorzugsweise - wiederum über einen Zeitschalter zwischen Wand-Elektrode und Kapillarenspitze - eine Hochspannung angelegt. Die Länge der Kapillare sollte so bemessen sein, so daß nunmehr aufgrund von Elektrophorese eine möglichst eindeutige Auftrennung von freier Sonde und Hybrid erfolgt. Die freie Sonde sollte innerhalb einer Zeit an der Elektrodenspitze erscheinen, die deutlich verschieden ist von der Zeit, nach der der Meßimpuls des Hybrids eintrifft, so daß zu diesem Zeitpunkt die Konzentration des ungebundenen Primers genügend ausgedünnt ist. Die Lösung tritt vorzugsweise als Tropfen aus, so daß keine Rückdiffusion stattfinden

kann. Beide Zeiten: $T_s$, nach der der Impuls der freien Sonde und $T_z$, nach der der Impuls des Hybrids erscheint, sind möglichst festgelegt. Das Hybrid erscheint in einem Mikrotropfen zu einer bestimmten Zeit und ist sogar als Einzelmolekülfluoreszenz nachweisbar. Die optische Messung kann auch vor dem Austritt aus der Kapillare erfolgen.

Der Nachweis von einzelnen Molekülen ist schwierig, wenn die Störsignale der freien Sonde zu stark sind. Einzelmoleküle pro ml bedeutet $10^{-20}$ bis $10^{-22}$ M. Die Sondenkonzentration muß aber wegen der Reaktionszeiten für die Assoziation bei etwa $10^{-10}$ molar liegen. Für diesen Fall gestattet die erfindungsgemäße Kombination mit einer Elektrophorese eine sehr viel schärfere Trennungsmöglichkeit als die beschriebene Differenzmessung im nicht aufgetrennten Gemisch. Weiterhin erscheint das gegebenenfalls gebildete Hybrid zu einem genau berechenbaren Zeitpunkt in einem Volumen der Größenordnung $\leq 10^{-12}$ l, ist also für die erfindungsgemäße Methode gut nachweisbar. Die Fluoreszenz kann durch Wahl geeigneter Fluoreszenzmarker optimal gestaltet werden.

### 23. Vorrichtung zur präparativen Aussonderung gewünschter, markierter Komplexe im Sinne eines Einmolekül-Sor tierverfahrens mit oder ohne Kombination mit einer Molekülfalle

Im Falle, daß ein Molekül, Molekülkomplex, Virus oder Zelle durch FCS als gewünschtes Zielmolekül erkannt ist, besteht die Möglichkeit der direkten präparativen Anreicherung. Dabei wird die Annahme zugrundegelegt, daß das jeweilige Molekül kurz nach der erfolgten Messung durch elektrophoretische Wanderung sich zu einem definierten Zeitpunkt an einem bestimmten Ort aufhält und dort elektrophoretisch abgetrennt werden kann.

### Messung von Beweglichkeiten im elektrischen Feld, Laufzeitmessungen in der Kapillarelektrophorese, Laufzeitkorrelation, Sequenzierung

Über die Messung der Beweglichkeit von Molekülen oder Molekülkomplexen im elektrischen Feld z.B. mit Verfahren der Kapillarelektrophorese lassen sich Aussagen über die Natur der Moleküle gewinnen. So lassen sich beispielsweise Aminosäuren eines Proteins oder Peptids als Produkte eines Edman-Abbaus mit fluoreszierendem Label über diese elektrophoretische Beweglichkeit bestimmen. In den letzten Jahren hat die Sequenzanalyse von Peptiden und Proteinen vermehrt an Bedeutung gewonnen. Dabei war es ein entscheidender Durchbruch, analytische Mengen eines Proteins in Gasphasenanalysatoren, wie sie inzwischen kommerziell erhältlich sind, durchzuführen. Die Proteine aus Einzelspots 2-dimensionaler Gele (o'Farrell-Gele) lassen sich auf diese Weise sequenzieren.

Die Methode könnte nochmals in ihrer Effizienz entscheidend gesteigert werden, wenn die analytische Bestimmung der Abbauprodukte in einer anschließend kapillarelektrophoretischen Auswertung in ihrer Sensitivität gesteigert werden könnte. Im Vergleich zu herkömmlichen Detektionsverfahren erlaubt die Peakbestimmung durch FCS in Kombination mit der Laufzeitbestimmung (Laufzeitkorrelation) eine überraschend hohe Sensitivität. Damit reichen analytische Mengen von Peptiden und Proteinen zu einer Sequenzbestimmung aus, wie sie durch kapillarelektrophoretische Verfahren gewonnen werden können. Als Ausgangsmenge kann eine einzelne Zelle hinreichend sein, um für ein darin enthaltenes Protein eine Sequenzanalyse durchführen zu können. Andererseits erlaubt die Sensitivität der Methode eine deutlich längere Sequenz der Strukturaufklärung 2D-gelelektrophoretisch aufgetrennter Proteine, Peptide oder Spaltprodukte.

Eine enzymatische Amplifikationsreaktion wie PCR kann diese Empfindlichkeiten nicht ohne erhebliche Zusatzschritte erreichen. Die bekannte Problematik enzymatischer Amplifikation bezüglich Kontaminationen mit hochverstärkten Produkten tritt bei dem erfindungsgemäßen Verfahren nicht auf.

Das erfindungsgemäße Verfahren in Kombination mit Elektrophorese ist nicht auf eine Anwendung für Nukleinsäuren beschränkt. Auch Proteine und Proteinkomplexe oder niedermolekulare chemische Liganden können mit Ladungsträgern ausgestattet werden, die eine erfindungsgemäße Analyse gestatten. Beispielsweise lassen sich negativ oder positiv geladene Oligopeptide an rekombinant hergestellte Antikörper koppeln, um sie unter nicht denaturierenden Bedingungen einer Elektrophorese zu unterwerfen. Damit lassen sich auch noch niedrigere Virustiter nachweisen, wenn beispielsweise Antigen-Analysen von Oberflächen-Proteinen durchgeführt werden, die in großer Zahl pro Virion vorkommen oder sogar isoliert ins Serum sezerniert werden.

Eine Variation der elektrischen Falle zur Detektion von Einzelmolekülen ist die Einführung eines Quadrupols anstelle eines Dipols. Durch Applikation eines Wechselfeldes in der Ebene des Quadrupols kann bei geeigneten Feldstärken ein geladenes Molekül an der thermischen Diffusion aus dem Bereich des Quadrupols gehindert werden. Werden dazu erfindungsgemäß noch zwei weitere Elektroden oberhalb und unterhalb des Quadrupols angeordnet (Sextupol) so werden geladene Moleküle nach Anlegen einer geeigneten Spannung zwischen den äußeren Sextupol-Elektroden und dem mittleren Potential des Quadrupols in das Wechselfeld des Quadrupols driften und dort konzentriert werden.

Es können die Sextupol-Elektroden durch metallisch beschichtete Glasoberflächen Zweier Mikroskopobjektive gebildet werden. Hält sich ein einziges Molekül in dem Volumen des Sextupols von etwa 40 µl auf, so entspricht das einer Konzentration von $4 \times 10^{-20}$ M. Bei einer Spannung von 100 V zwischen den Sextupol-Elektroden und der Quadrupol-Ebene (Abstand ca. 1 mm) driftet ein Nukleinsäuremolekül in etwa einer Sekunde in die Quadrupol-Ebene. Das jetzt in der Quadrupol-Ebene gehaltene Molekül befindet sich in einem Volumenelement von ca. 6 fl, was einer Konzentration von ca. $2,5 \times 10^{-10}$ M und einer Konzentrationserhöhung um den Faktor $6,4 \times 10^9$ entspricht. Die Präsenz wird durch Bestimmung der Molekülzahl (N = 1) und der für das Molekül charakteristischen Diffusionszeit nachgewiesen.

Die tatsächlich eingesetzten Spannungen und Spannungsdifferenzen im Quadrupol und/oder Sextupol hängen von den Ionenstärken der Analytenlösung ab.

Bei Anwendung eines ortsempfindlichen Detektors (Lawinen-Photo-Dioden-Detektor), dessen verschiedene Elemente unterschiedliche Raumanteile oder Quadrupol-Ebenen repräsentieren, können durch eine Rückkoppelungsanordnung zwischen Detektorelementen und den Polen (Elektroden) des Quadrupols die elektrischen Feldgradienten so angeordnet werden, daß das Molekül immer von einer festen Stelle im Quadrupol gehalten wird. Die Position ist durch das jeweilige Detektorelement definiert.

## 24. Elektrische Falle

Zweckmäßigerweise wird die oben angesprochene "elektrische Falle" dadurch realisiert, daß das Meßvolumen zwischen zwei im wesentlichen gleich beabstandeten positiv (negativ) geladenen elektrischen Polen (Elektroden) angeordnet wird, die auf einer gemeinsamen Achse angeordnet sind, welche sich durch das Meßvolumen hindurch erstreckt. In der orthogonal zu dieser Achse angeordneten Ebene befinden sich mindestens zwei und vorzugsweise vier Elektroden, zwischen denen sich ein elektrisches Wechselfeld bildet. Die Elektroden sind einander gegenüberliegend bzw. paarweise einander gegenüberliegend angeordnet. An diese Elektroden wird ein rotierendes elektrisches Wechselfeld angelegt, in dem sich das oder die positiv (negativ) geladenen Moleküle befinden. Von einer Bewegung aus diesem Wechselfeld heraus werden die Moleküle aufgrund der elektrischen Ladung der beiden orthogonal zum Wechselfeld angeordneten elektrischen Pole abgehalten. Bei Verwendung des bereits oben erwähnten und später noch ausführlicher zu beschreibenden Doppel-Mikroskops handelt es sich bei den elektrischen Polen vorzugsweise um die Träger für die einander gegenüberliegenden Objektivlinsen, in deren gemeinsamem Brennpunkt das Meßvolumen angeordnet ist.

Bei Verwendung der elektrischen Falle in der Routineanalytik kommt es darauf an, daß ein Zielmolekülkomplex aus einem relativ großen Probenvolumen (10 - 100 μl) zur Beobachtung in das sehr kleine Meßvolumen gelangt. Um dies zu erreichen, wird erfindungsgemäß das geladene Zielmolekül zweckmäßigerweise in einem großen Potentialgradienten in ein Volumenelement mit Nullpotential gebracht, aus dem heraus oder in dem es sich durch Mehrpolfelder, z.B. Quadrupolfelder steuern läßt, z.B. zur Fixierung im und/oder zur gesteuerten Bewegung durch Meßvolumina. Vorzugsweise geschieht dies in einer Kapillare von mehreren Millimetern oder Zentimetern Länge (Fign. 20,21), die die Probe aufnimmt und an deren einem Ende eine Spannung von z.B. +100 (oder -100) V anliegt und an deren anderem Ende ein Potential von 0 V liegt. Die auf 0 V liegende Elektrode weist ein Pinhole auf, hinter dem sich auf niedrigem Spannungsniveau z.B. ein Quadrupol-Wechselfeld befindet (siehe Fig. 20). Zielmoleküle wandern entsprechend ihrer elektrophoretischen Beweglichkeit $\mu$ = ca. $10^{-4}$ bis $10^{-6}$ cm$^2$/Vs schnell in das Pinhole ein und bewegen sich dann weiter in das geometrisch dicht benachbarte Quadrupolfeld. Die Kapillare besteht dabei z.B. aus Glas oder Quarz, wenn es erwünscht ist, die elektrische Wanderung durch Effekte der Elektroosmose zu überlagern, wie es in der Kapillarelektrophorese geschieht. Alternativ lassen sich Kapillaren z.B. aus Teflon mit ungeladenen Oberflächen verwenden, bei denen Effekte einer Elektroosmose weitgehend ausgeschlossen werden können.

## 25. Fitness-Bestimmung von Variantenspektren an großen Probenkollektiven

Im Rahmen evolutionärer Screening-Assays ist das erfindungsgemäße Verfahren zur Bestimmung der Bindung von Liganden an zu selektionierende Moleküle (Proteine, Peptide, Nukleinsäuren, Antikörper) geeignet. Die extreme Meßempfindlichkeit, die durch das Verfahren erreicht wird, erlaubt insbesondere die Analyse von hochspezifischen Wechselwirkungen, die z. B. von besonderem physiologischen oder biochemischen Interesse sind. Die Wechselwirkung wird durch Bindung eines Liganden oder markierten Liganden oder durch Kompetition des unmarkierten Liganden mit einem markierten Inhibitor gemessen. Somit lassen sich Fitnessbestimmungen an Variantenspektren vor allem bei großen Probenkollektiven durchführen.

Als Fitness-Parameter gelten:

- Affinitätsparameter
- kinetische Parameter
- enzymatische Parameter

unter bestimmten Milieubedingungen des Testes.

## 26. Probenträgersysteme für Genotyp/Phänotyp-Kopplungen

Bei der erfindungsgemäßen Analyse und Bewertung großer Probenkollektive phänotypischer Varianten ist es von entscheidender Bedeutung, daß nachfolgend ein Zugriff auf den korrespondierenden Genotyp, z.B. das kodierende Plasmid oder die kodierende mRNA erfolgen kann, um den Evolutionsprozeß weiterzuführen.

Dieses Problem ist keineswegs trivial. Der Prozess ist umso erfolgreicher, je gezielter der Zugriff erfolgt, das heißt, je präziser der entsprechende Genotyp präpariert werden kann, ohne ihn mit Sequenzen zu kontaminieren, die für wertlose Phänotypen kodieren.

## 27. Küvetten

Bei mittleren Probenzahlen (< 10.000) kann mit voneinander in fester räumlicher Trennung angeordneten Volumenelementen gearbeitet werden, die im folgenden als Küvetten bezeichnet werden. Dies können sowohl Teile eines Foliensystems sein, vergleichbar denen, wie sie für PCT/EP 89/01320, PCT/EP 89/01387, PCT/DE 91/00082, PCT/DE 91/00081, PCT/DE 91/00083, PCT/DE 91/00704 beschrieben worden sind, wobei einzelne Volumenelemente Proben in versiegelten Folienelementen enthalten. Aus den verschlossenen Elementen lassen sich einmal identifizierte Phänotypen gemeinsam mit ihren kodierenden Genen oder mRNA-Transkripten über direkten mechanischen Zugriff isolieren.

## 28. Mikrokompartimentierung

Die erfindungsgemäße Methodik der optischen Messung und Variantenbewertung in ultrakleinen Meßvolumina erlaubt auch sehr kleine Probenvolumina in Form einer Mikrokompartimentierung, die jedoch nicht in trivialer Weise handhabbar sind. Dies gilt sowohl für die individuelle Befüllung als auch für die gezielte Entleerung der Kompartimente zur Präparation eines als positiv identifizierten Genotyps.

Mikrokompartimente können aus regulären und irregulären porösen Trägern aufgebaut sein wie aus parallel angeordneten Kapillarelementen, wie sie in der Patentanmeldung DE-A-42 37 383.1 beschrieben sind, oder flächige Träger aus porösen Materialien wie Glas mit kontrollierten Poren oder Kapillaren, deren Volumenelemente innerhalb der Kapillare eindimensional voneinander separiert sind, jedoch paarweise miteinander in direktem Kontakt stehen.

Eine besonders bevorzugte Form der Mikrokompartimentierung ist in der Figur 4 dargestellt. Unter einem optisch transparenten flächigen Träger werden die in einer zu analysierenden Probe vorhandenen Volumenelemente in Form rekombinanter oder natürlicher Zellen oder künstlich vesikulärer Elemente mit ihren jeweiligen Phänotypen und Genotypen aufgebracht. In einer anderen Ausführungsform werden Volumenelemente erst bei oder nach dem Auftragen auf den Träger erstellt. Besonders bevorzugt sind Gel- oder Vesikel-bildende Polymere, insbesondere Polymere auf der Basis thermoreversibler Strukturen wie Caprolactamderivat-Polymere.

Die Auftragung kann zunächst aus homogener Lösung mit nachfolgender Entmischung der Polymere unter Ausbildung getrennter wäßriger Volumenelemente erfolgen, oder durch Auftragung in Form mikrodisperser Tropfen mit Hilfe eines piezo-gesteuerten Mikrodispensers.

Auf die beschriebene Weise läßt sich auch der Inhalt von Zellen analysieren. Beispielsweise lassen sich Zellen in den beschriebenen vesikulären Strukturen einschließen und später bei höheren Temperaturen lysieren. Dabei kommt es zu einer zumindest partiellen Vermischung von vesikulär eingeschlossener Lösung mit ihren reaktionsfähigen Molekülen oder Molekülkomplexen mit dem Inhalt der lysierten Zelle. Reaktionsfähige Moleküle können z.B. Nukleinsäuresonden, Enzyme oder Proteine sein, die mit zellulären Komponenten spezifische Wechselwirkungen oder Reaktionen eingehen, die mit der erfindungsgemäßen FCS-Methodik nachweisbar und quantifizierbar sind. Diese Technik ist analog zu in situ-Hybridisierungen oder zellspezifischen Proteinfärbungen zu sehen.

Auch Träger zur gleichzeitigen Fixierung von Nukleinsäuren und den zu analysierenden phänotypischen Molekülstrukturen, wie sie in der Anmeldung K.Henco et al., DE-C-42 37 381 beschrieben sind, sind als bevorzugter Reaktionsträger geeignet, um Genotyp/Phänotyp-Kopplung zu erreichen.

Selbstverständlich lassen sich auch Träger einsetzen, wie sie von S. Fodor et al. im Rahmen der sogenannten AFFYMAX-Technologie eingesetzt werden, in der der Genotyp durch die x/y-Position auf dem Träger definiert ist.

## 29. Photokennzeichnung selektierter Phänotypen

Eine bevorzugte Möglichkeit der Adressierung und Kennzeichnung erfindungsgemäß selektierter Varianten in ihren jeweiligen Volumenelementen ist die photooptische Kennzeichnung der Position durch Verwendung der beschriebenen analytischen Optik (Figur 7). Dies kann durch Einspiegelung von Licht einer Wellenlänge geschehen, mit der eine photoaktivierbare Beschichtung auf der Oberfläche des Trägers angeregt werden kann, um ein leicht erkennbares Reaktionsprodukt zu erzeugen, z.B. durch gezielte Verfärbung. Das Lichtsignal wird aktiviert, wenn die Korrelations-Analyse eine bestimmte vordefinierte Wertigkeit des jeweils analysierten Volumenelementes anzeigt.

Dabei kann eine gängige photoreaktive Beschichtung eingesetzt werden. Es kann eine zusätzliche Lichtquelle eingesetzt werden, vorzugsweise ebenfalls eine Laserlichtquelle, oder es kann der zur Analyse eingesetzte Laser verwandt werden. Eine Diskriminierung zwischen Messung und Kennzeichnung der Position durch Photoaktivierung kann z.B. durch Einsatz eines Frequenzverdopplers für die Markierungsreaktion erreicht werden. Die x/y-Position gewünschter Elemente kann auch über eine elektronische Datenspeicherung erfaßt werden.

Nach der Markierung der Positionen auf einem Träger läßt sich aus dem entsprechenden Volumenelement die gewünschte Nukleinsäure beispielsweise durch mechanischen Zugriff gewinnen.

## 30. Photoaktivierung selektierter Phänotypen und Genotypen

Als erfindungsgemäß besonders geeignet erweist sich anstelle der Markierung des selektierten Volumenelementes gemäß Figur 7 die Markierung des korrespondierenden Genotyps selbst.

Erfindungsgemäß werden mehrere Alternativen bevorzugt:

(1) die photoaktivierte Anheftung der Nukleinsäuren an Oberflächenstrukturen des Volumenelementes,

(2) die photochemische Aktivierung Nukleinsäurespezifischer Liganden,

(3) photochemische Inaktivierung von Nukleinsäuren in allen Volumenelementen mit Ausnahme der positiv selektierten.

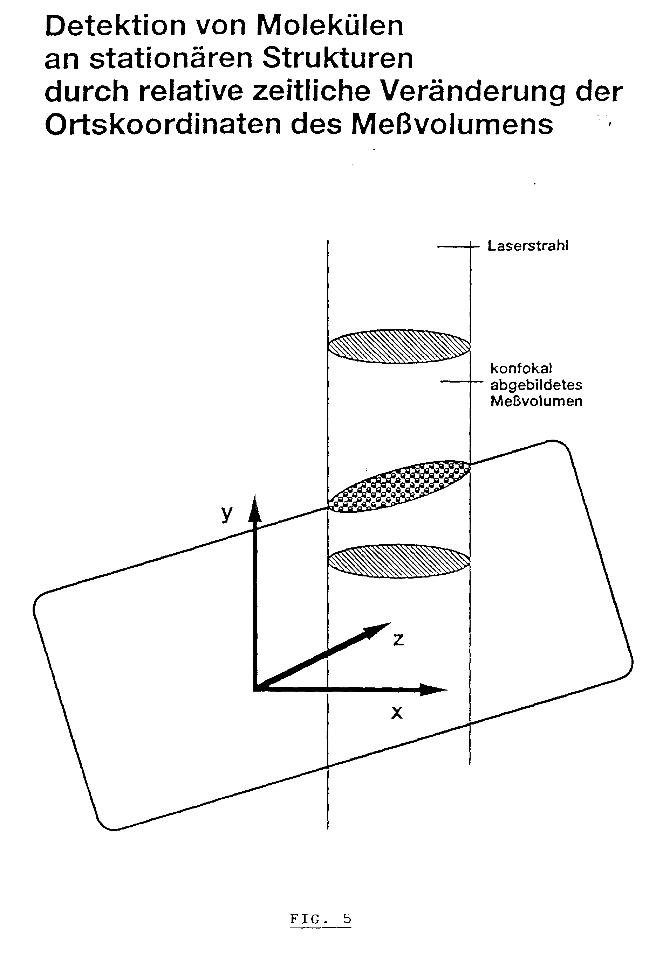

Im Sinne von Alternative (1) können beispielsweise Psoralenderivate eingesetzt werden, die als Doppelstranginterkalierende Reagenzien unter 360 nm-Lichteinstrahlung Nukleinsäuregegenstränge miteinander chemisch verknüpfen. Derartige Liganden können beispielsweise chemisch mit der Träger-Oberfläche verknüpft sein (Figur 8).

Bei der Durchmusterung kann auf diese Weise eine genügende Anzahl phänotyp-kodierender Plasmidkopien an die positiv selektionierten Oberflächensegmente geheftet werden. Nachfolgend können alle nicht fixierten Nukleinsäuren abgewaschen werden. Sodann können die selektierten Nukleinsäuren an der Oberfläche direkt einer enzymatischen Amplifikationsreaktion unterworfen werden.

Alternativ können die Nukleinsäuren zurückgewonnen werden, indem die Reversibilität der Psoralenverknüpfung ausgenutzt wird. Dies geschieht beispielsweise durch Licht der Wellenlänge von 260 nm. Die nukleinsäure-bindenden Liganden können nach Alternative (2) auch mit anderen molekularen Elementen verknüpft werden, die eine nachfolgende Reinigung und Abtrennung von nicht erwünschten Nukleinsäurestrukturen in einfacher Weise ermöglichen. Als Beispiele seien genannt: die Kopplung DNA oder RNA-erkennender Liganden, insbesondere photoaktivierbarer Psoralen-Derivate oder interkalierende Farbstoffe, gekoppelt an Affinitätsliganden, insbesondere Biotin, Avidin, Streptavidin, Immunglobulin, Oligopeptide oder Oligonukleotide.

Gemäß Figur 8 wird es nach licht-induzierter chemischer Verknüpfung dieser Verbindungen mit der DNA oder RNA aus den positiv selektierten Volumenelementen möglich, die DNA und/oder RNA aller Volumenelemente gemeinsam zu reinigen und gleichzeitig von den Nukleinsäuren zu trennen, die die Selektionskriterien nicht erfüllt haben. Die Abtrennung kann vorzugsweise über hydrophobe Chromatographie, Affinitätschromatographie oder durch den Einsatz magnetischer Partikel erfolgen, wobei die Oberflächen entsprechende Bindeeigenschaften zu dem Liganden des Adaptor-Moleküls aufweisen. Bevorzugte Beispiele für eine derartige spezifische Kopplung sind: oligo-dT/oligo-dA, Avidin-Streptavidin/Biotin, NTA-IDA/ $(His)_6$ und ähnliche bekannte Komplex-Bildner.

Die so gepoolten gereinigten Nukleinsäuren können im nachfolgenden Schritt entweder direkt einer enzymatischen Amplifikationsreaktion oder cDNA-Synthese unterworfen werden, oder zuvor durch Reversion der photochemisch induzierten Verknüpfung vom Liganden entkoppelt werden.

Im erfindungsgemäßen Sinne ist es gleichfalls denkbar, gezielt die Nukleinsäuren zu inaktivieren, die den Selektionskriterien der Analyse nicht genügen [Alternative (3)]. Dies kann ebenfalls mit quervernetzenden Substanzen wie Psoralenen geschehen, wobei die Quervernetzung in einer Weise geschieht, daß die so vernetzten Strukturen bei enzymatischen Folgereaktionen nicht mehr amplifikationsfähig sind. Das Verfahren hat allerdings den Nachteil, daß die Inaktivierung sehr vollständig ablaufen muß, da sonst der Anreicherungsfaktor für die positiv selektierten Volumeneinheiten ungünstig beeinflußt wird. Bei den Verfahren [Alternativen (1,2)] ist die Ausbeute der Anreicherung nicht von vordringlicher Bedeutung. Mit Hilfe enzymatischer Amplifikationsverfahren können auch sehr niedrige Kopienzahlen angereichert werden, um erfindungsgemäß erfaßt zu werden. Allerdings ist es für die meisten Anwendungen vorteilhaft, wenn ein möglichst großer Anteil der Nukleinsäuren aus einem positiv selektierten Volumenelement präparativ erfaßt werden kann. Dies gelingt z. B. mit einer Optik, die ein größeres Volumenelement als das in der Analyse betrachtete Volumenelement ausleuchtet.

## 31. Fraktionenanalyse/Fließinjektionsanalyse/GC/ Ms-Kopplung

Von besonderer Bedeutung ist die Fließinjektionsanalyse mit Kopplung an analytisch/präparative Trennverfahren bei der Kopplung von erfindungsgemäßen Methoden mit Methoden unscharfer chemischer oder biochemischer Reaktionen zur Wirkstoffindung oder Optimierung (WO92/18645) chemisch oder enzymatisch erzeugter Quasispezies.

Wie oben bereits ausgeführt, eignet sich das vorliegende Verfahren insbesondere zur Analyse und Bewertung zahlenmäßig komplexer Kollektive von Molekülen, die zuvor in einem evolutiven Prozeß generiert worden sind. Die funktionale Analyse komplexer Systeme von molekularer Diversität ist aber auch sonst von erheblicher Bedeutung. Nicht nur aufgrund evolutiver Systeme, im Sinne replikativer Mechanismen, entsteht Diversität, ebensowenig, wie Kompartimentierung von Subpopulationen nur in zellulären oder vesikulären Strukturen erfolgt.

In der synthetischen Chemie entstehen gewollt oder ungewollt sehr komplexe Systeme verschiedener Molekültypen, wobei sich die Art der Komplexität auch gezielt generieren läßt. Mikroorganismen oder Pflanzen synthetisieren eine Vielzahl Sekundärmetabolite, von denen bereits eine große Anzahl pharmakologisch aktiver Strukturen abgeleitet wurde. Mit chromatographischen Verfahren wie HPLC, FPLC, Gaschromatographie etc, lassen sich solche Verbindungen bekanntlich effizient trennen und isolieren.

Mit dem erfindungsgemäßen Verfahren erschließt sich nicht nur die parallel geführte Analytik von Mutanten/ Varianten aus sogenannten replikativen Systemen wie Nukleinsäuren oder Proteinen, sondern auch die von chemisch oder metabolisch komplexen Mischungen. Traditionell ist man bislang so verfahren, daß komplexe Gemische zunächst in Einzelfraktionen präparativ gereinigt wurden, chemisch analysiert und/oder in ihrer Struktur aufgeklärt wurden und, wenn möglich in Form der Reinsubstanzen, einzeln biologischen Assays zugeführt wurden.

Mit dem erfindungsgemäßen Verfahren gelingt es nun, die zunächst nur in analytisch geringen Mengen angefallenen Fraktionen oder einzelnen Stoffe präparativ z.B. für pharmakologische Assays einzusetzen. Dabei werden in einer bevorzugten Ausgestaltung des erfindungsgemäßen Verfahrens die anfallenden Fraktionen direkt mit einem FCS-Assay verknüpft. Es wird darauf verzichtet, Einzelsubstanzen darzustellen, bevor sie nicht positiv in FCS-Assays auf die entsprechende Fragestellung ansprechen. Ein blindes Wirkstoff-Screening, wie es derzeit praktiziert wird, kann dadurch ersetzt werden, daß gezielt wirkstoff-haltige Fraktionen untersucht werden können.

Die Analyse funktionaler Verbindungen in komplexen Stoffgemischen ist eine anspruchsvolle Aufgabe der pharmazeutischen Chemie. Bekannt sind vor allem die bereits erwähnten komplexen Gemische von Naturstoffen aus Mikroorganismen und Pflanzen. Japanische Institutionen und Unternehmen haben gegenüber den übrigen Nationen einen schwer aufholbaren Vorsprung im Naturstoff-Screening erzielt, indem sie konsequent, seit Einführung der ersten Antibiotika, umfangreiche Banken gereinigter und struktur-aufgeklärter Substanzen angelegt haben, die sie bei jedem neuen Assay in ein Screening einführen können. Dies ist um vieles einfacher als eine jeweilige neue Anzüchtung von Organismen, zumal auch die Gefahr des wiederholten Aufspürens, also Doppelentwicklungen an sich bekannter Wirkstrukturen, auf diese Weise vermieden wird.

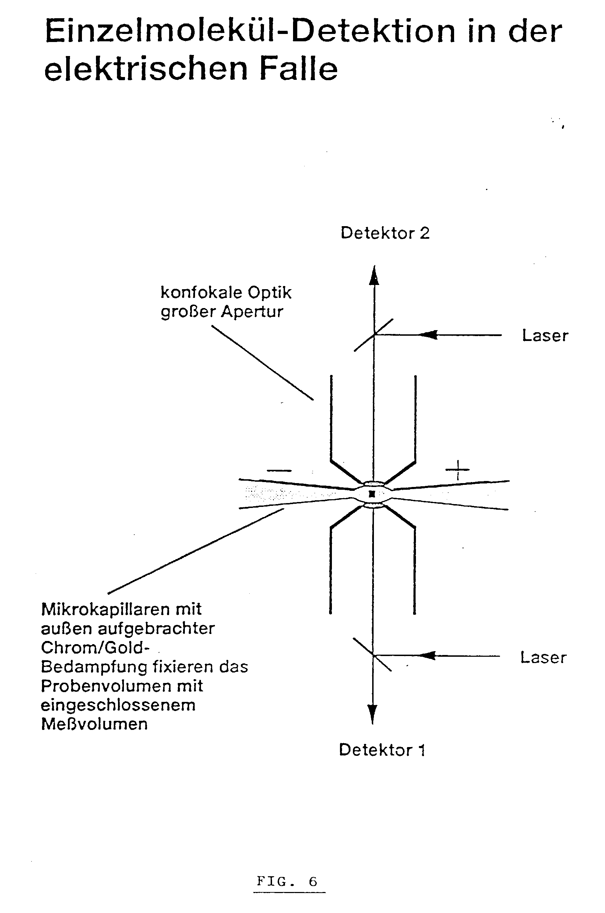

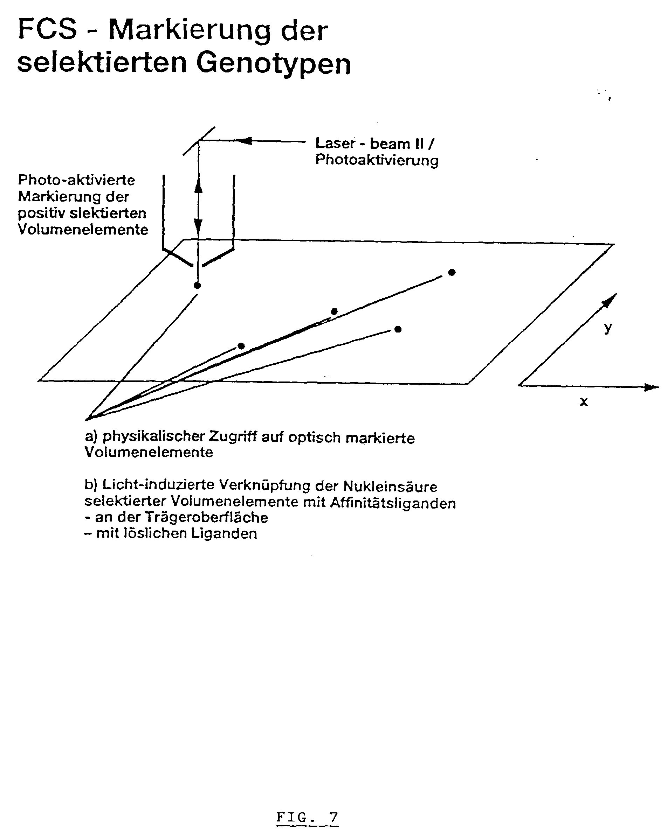

Das erfindungsgemäße Verfahren kann aufgrund seiner vorteilhaften Eigenschaften auf diese Vorgehensweise verzichten und erlaubt dennoch die Analyse sehr umfangreicher und komplexer Gemische, da einzelne Moleküle quasi als Reinstsubstanzen erfaßt werden. Es sei daran erinnert, daß ein einziger Mikroorganismus über eintausend kompliziert aufgebaute Sekundärmetabolite synthetisieren kann, wovon einige nur in geringer Anzahl vorliegen können und aus der Analyse der Gesamtmischung eines Extraktes nicht an ihrer Funktion zu erkennen sind. Erfindungsgemäß lasen sich Substanzgemische aus einem Mikroorganismus oder eine Mischung aus mehreren Mikroorganismen oder Pflanzenextrakten zunächst z.B. chromatographisch trennen, um am Ausgang einer Trennmatrix die einzelnen Fraktionen auf die Anwesenheit funktionaler Verbindungen vorzugsweise in einer Kapillare "on line" zu testen (siehe Figur 9).

Die schematische Figur 9 wird nachstehend erläutert. Komplexe Substanzgemische können erfindungsgemäß in einer Kopplung mit einer chromatographischen Trennung analysiert werden. Nach einer chromatographischen Trennung wird den Fraktionen kontinuierlich und mit festgelegter Konzentration ein markiertes Referenzmolekül zugesetzt, dem ebenfalls mit festgelegter Konzentration das spezifisch bindende Targetmolekül zugesetzt wird. Wie in Fig. 1 beschrieben, werden die jeweiligen Konzentrationen bevorzugt so gewählt, daß ca. 50% der beteiligten Moleküle einen Komplex bilden, so daß eventuell interferierende Substanzen aus dem aufgetrennten Gemisch mit maximaler Sensitivität nachgewiesen werden können.

Die kombinierten Proben laufen anschließend durch ein kapillares Fließrohr an der Detektionseinheit vorbei. Die Fraktionen werden daraufhin analysiert, ob sie spezifisch das betrachtete Bindungsgleichgewicht verschieben.

Auch synthetisch hergestellte Gemische wie beispielsweise z.B. Gemische aus diversen substituierten oder unsubstituierten Alkylresten in Alkylierungsreaktionen bei der Verwendung komplexer Synthongemische, lassen sich wie oben beschrieben analytisch erfassen. Es ist dann nicht mehr erforderlich, nach jedem Reaktionsschritt die entstandene Verbindung aus ihrem Reaktionsgemisch zu trennen und zu charakterisieren.

In einer bevorzugten Ausführungsform (Figur 9) werden den einzelnen Fraktionen zunächst Aliquots der auf Interferenz zu analysierenden Substanz zugesetzt, bevor das Gemisch mit einer Lösung in Kontakt gebracht wird, die den Rezeptor enthält, um eventuelle Konkurrenzreaktionen messen zu können. Wenn alternativ ein Rezeptor bereits besetzt ist, könnte eine langsame Dissoziationsgeschwindigkeitskonstante den Nachweis einer Verdrängungsreaktion erschweren. Rezeptorverdrängungsreaktionen, die langsam sind, erlauben die Messung der zeitlichen Änderung, d.h. $k_{diss}$.

**32. Screening von komplexen Gemischen auf biofunktionale Wechselwirkungseigenschaften bei gleichzeitiger grober Abschätzung physikalischer Wechselwirkungsparameter mit Zielmolekülen**

Wenn erfindungsgemäß ein Gemisch verschiedener Substanzen auf Wechselwirkungseigenschaften mit Zielmolekülen z.B. in einer LC/FCS-Kopplung analysiert werden soll, können direkt Ober- bzw. Untergrenzen von Bindekonstanten abgeschätzt werden, die eine entsprechende Qualifizierung entsprechender Leitstrukturen erlauben. Dies soll das folgende Beispiel verdeutlichen:

Es werden 10 μg eines Substanzgemisches auf eine LC-Trenneinrichtung aufgetragen, die 1000 Substanzen enthält, worin die gesuchte einzelne Substanz nur mit 0,1 % enthalten ist. Dies entspricht einer absoluten Menge von 1 ng. Nach Trennung der Fraktionen befindet sich diese Substanzmenge in einem Volumen von 5 μl. Dies bedeutet bei einem angenommenen Durchschnittsmolekulargewicht von 200 Dalton eine Konzentration von $10^{-6}$ M. Wenn das Zielmolekül, z.B. ein Rezeptor in vergleichbarer Konzentration zugesetzt wird, so kann eine Komplexbildung in einer bestimmten Zeit nur dann zustandekommen, wenn die Reaktionsgeschwindigkeit (on rate) einen bestimmten Maximalwert überschreitet und die Bindekonstante $> 10^6$ beträgt.

Die Nachweisreaktion kann mit einer parallel geführten HPLC/MS- oder GC/MS-Analyse gekoppelt werden, um direkt Strukturdaten der als aktiv erkannten Verbindungen zu ermitteln.

Der geringe Substanzverbrauch des erfindungsgemäßen Analyseverfahrens erlaubt auch den Einsatz der erfindungsgemäßen Analytik in Konkurrenz zu verschiedenen alternativen Verfahren der Biosensortechnik, die beim Einsatz in der on line Analytik unter einer Drift-Problematik des Signales leiden können. Anstelle der oben beschriebenen Chromatographieeinheit kann alternativ ein Probengeber eingesetzt werden.

**DNA/RNA Sonden Assays**

Bei Ausnutzung der potentiellen Detektionsempfindlichkeit der erfindungsgemäßen Technik ergibt sich mit der DNA oder RNA-Sonden Technik ein spezifisches Problem. Auf molekularer Ebene setzt die erfindungsgemäße Nachweisreaktion die Bildung doppelhelikaler Strukturen aus zumindest teilweise komplementären Einzelstrangstrukturen voraus, wobei die beteiligten Einzelstränge aus DNA oder RNA oder Mischungen aus DNA und RNA- Grundstrukturen bestehen können, die chemische Modifizierungen tragen können, wobei die Modifizierungen insbesondere die Basenstruktur betreffen können, insbesondere solche, die die luminophoren Eigenschaften der Basen verändern und/oder solche, die Substituenten tragen, die spezifische Bindeeigenschaften zu spezifischen Molekülen oder Molekülkomplexen haben und/oder die lumineszierende Substituenten sind.

Die Ausbildung doppelhelikaler Strukturen ist jedoch eine verhältnismäßig langsame Reaktion (Hybridisierung, Cot-Kinetik). In der experimentellen Praxis bedeutet dies beispielsweise, daß die Reassoziation genomischer DNA aus Zellen ein Prozeß ist, der sich je nach experimentellen Bedingungen über Wochen und Monate erstreckt, so daß de facto das Experiment nicht vollständig durchführbar ist. Lediglich repetitive Abschnitte des Genoms, die z.B. in einer Anzahl von > 100.000 pro eukaryotischem Genom auftreten können, lassen sich rehybridisieren.

Eine praktisch gut anwendbare Näherungsformel beschreibt die Reassoziation eines denaturierten Doppelstrangfragmentes:

$$t1/2 = N \times 1n2 / (3,5 \times 10^5 \times L \times c_o)$$

t1/2 ergibt die Halbwertszeit der Reassoziation in Sekunden in 1 M Ionenstärke bei T=Tm -20°C. L ist die Länge des Sonden-Fragmentes, N ist Länge der Einheitssequenz, $c_o$ ist die molare Nukleotidkonzentration, $3,5 \times 10^5$ ist ein Näherungswert für die intrinsische Geschwindigkeitskonstante der Assoziation.

Da die Reaktionsgeschwindigkeit von der Summe der Konzentrationen der beiden Reaktanden ((+)- und (-)-Strang) abhängt, gibt es generell zwei Möglichkeiten, die Reaktion der Reassoziation zu beschleunigen. Da die Überschußkomponente die Geschwindigkeit bestimmt, wird im traditionellen Blot-Assay gewöhnlich die Sonde im Überschuß eingesetzt, um anschließend in Waschschritten den Sondenüberschuß abzutrennen. Mit der Einführung der enzymatischen Amplifikationsreaktionen wie PCR (Polymerase-Kettenreaktion) ist es auch möglich, die nachzuweisende Target-Nukleinsäure so stark zu verstärken, daß sie die Reaktionsgeschwindigkeit bestimmt. Will man jedoch im erfindungsgemäßen Verfahren auf Amplifikationsreaktionen verzichten, bzw. den Nachweis ohne mühsame Abtrennung der Sondenkomponente im Ein-Topf-Verfahren führen, können erfindungsgemäß ein oder mehrere Verfahrensschritte und Vorgehensweisen miteinander verknüpft werden.

Der Nachweis von Erregern viraler oder bakterieller Natur aus der Gasphase (Luftkeime) oder aus Lösungen oder Suspensionen in kleinen Probenvolumina, wie sie für den erfindungsgemäßen Nachweis ausreichend sind, ist durch den Einsatz einfacher Filtrationschritte in der Empfindlichkeit zu steigern. Sie lassen sich durch Filter oder Filtersysteme aus großen Volumina extrahieren und in kleinen Probenvolumina aufnehmen. Eine Alternative stellt die Konzentration z.B. über beschichtete Magnetpartikel dar.

Für die DNA/RNA-Analyse können Sonden mit interkalierenden Substituenten eingesetzt werden. Dabei ist besonders der Einsatz von solchen chromophoren Liganden bevorzugt, deren Fluoreszenzverhalten sich mit dem Vorgang der Interkalation verändert bzw. verstärkt. Besonders geeignet sind Substituenten der Thiazol-Orange Klasse. Sie weisen im interkalierten Zustand eine etwa 1000fach höhere Fluoreszenzausbeute auf als im freien Zustand. Damit ist es möglich, bei einem tausendfachen Überschuß nicht farbstoff-interkalierender Sonde eine spezifische Komplexbildung mit Interkalation zu messen.

Durch Einsatz oligo- oder multimerer Farbstoffe, die mit einer Sonde verknüpft sind, läßt sich die Empfindlichkeit nochmals um den Faktor 10 bis 100 steigern, da weniger Einzelereignisse erfaßt werden müssen, um das notwendige Signal zu erzeugen.

Eine Überschußkonzentration eines Doppelstrang-Analyten ist nicht unbedingt erstrebenswert, um die Reaktion zu beschleunigen. So kann es zu einer unerwünschten Verdrängung bereits assoziierter Sonde aus dem Komplex kommen, wenn oberhalb oder unterhalb ein im Überschuß vorhandener Gegenstrang des Analyten mit dem Komplex hybridisiert.

Erfindungsgemäß wird diesem Problem entsprochen, indem dafür Sorge getragen wird, daß der Überschuß an Analyt nur in Form einer Polarität ohne Gegenstrang vorliegt, wie er beispielsweise durch unsymmetrisches Priming in einer PCR-Reaktion erzeugt wird, oder durch run-off Produktion spezifischer RNA-Sequenzen durch RNA-Polymerasen, wie sie natürlicherweise in Zellen vorkommen, oder in homogenen Amplifikationsreaktionen wie 3SR generiert werden.

Die Verdrängungsreaktion kann auch unterbunden werden, indem interkalierende Substituenten die Komplexe thermodynamisch stabilisieren (z.B. Acridin-Farbstoffe) oder indem eine irreversible Vernetzung initiiert wird (Psoralen-Derivate) (siehe Patentanmeldung DE-A-42 34 086).

Wenn durch erfindungsgemäße Optimierung der oben diskutierten Parameter der Einsatz einer markierten Sonde im Bereich von $10^{-12}$ M möglich ist und somit ein Analyt (Gegenstrang) im Bereich $10^{-14}$ M noch nachweisbar ist, so wird die Reaktionskinetik der Reassoziation (Komplexbildung) unakzeptabel langsam. Unter Verwendung der obengenannten Näherungsformel läßt sich leicht errechnen, daß ein Fragment der Länge und Einheitslänge 200 Nukleotide ca. 23.000 Minuten (16 Tage) Zeit bräuchte, um zu reassoziieren, wenn 10 Halbwertszeiten bis zur optischen Messung nach dem erfindungsgemäßen Verfahren abgewartet werden soll.

Durch Einsatz einer Kombination organischer Lösungsmittel auf Phenol-Basis und chaotroper Salze wie Thiocyanate oder Perchlorate läßt sich die Reaktionskinetik ca. 100.000fach beschleunigen. Diese Verfahren haben sich bei Filterassays in der Praxis nicht bewährt. Sie lassen sich jedoch mit dem erfindungsgemäßen Verfahren, das bevorzugt in Lösung arbeitet, kombinieren. Auf diese Weise wird nicht nur die Reaktionsgeschwindigkeit des oben genannten Beispiels in den Sekundenbereich verschoben, die Lösung unterbindet gleichzeitig degradative Prozesse durch Einwirkung z. B. von Ribonukleasen auf RNA-Analyte.

Das Verfahren erlaubt auch den differentiellen Nachweis großer Vesikelkomplexe, wie sie für eine Differentialdiagnose im Lipidstoffwechsel notwendig sind, wenn zwischen verschiedenen Transportvesikeln LDL, VLDL und HDL unterschieden werden soll. Dafür müssen bislang relativ aufwendige Elektrophoreseverfahren eingesetzt werden, deren Quantifizierung nicht einfach ist. Farbstoff-markierte Vesikel lassen sich über Mobilität und/oder Rotationsdiffusionsmessungen erfindungsgemäß unterscheiden. Die Vesikel können mit fluoreszenz-markierten spezifischen Antikörpern angefärbt werden. Fluorophore Markermoleküle können alternativ spezifisch und fest in die Vesikelstrukturen inkorporiert werden.

## Funktionsassays von in vitro-Translationsprodukten

Von besonderer Bedeutung ist der Einsatz der erfindungsgemäßen Screening-Technologie für die Analyse replikativer Moleküle in Form von Proteinen oder Peptiden in Kombination mit der in vitro Proteinbiosynthese. Die in vitro Proteinbiosynthese vermeidet rekombinant-zelluläre Systeme. Allerdings ist die Effektivität der in vitro Proteinbiosynthese so gering, daß ein Funktionsnachweis des Syntheseproduktes nicht ohne Aufwand möglich ist. Im Durchschnitt wird von einem mRNA- Molekül nicht mehr als ein Peptid- oder Protein-Molekül hergestellt. Das Ergebnis kann sogar noch schlechter sein. Die Sensitivität des erfindungsgemäßen Verfahrens erlaubt jedoch eine Funktionsbestimmung, da mRNAS in der Synthesemischung nur im $\mu$M-Konzentrationsbereich und darunter eingesetzt werden müssen und ein kleines Probenvolumen für die Analyse ausreichend ist.

## Bestimmung von molekularen Größenverteilungen

In der Analytik der Polymerchemie ist es wichtig, Polymerverteilungen zu bestimmen. Dies kann in einfacher Weise durch den Einsatz des erfindungsgemäßen Verfahrens erzielt werden, das somit eine Alternative zu Ultrazentrifugationsverfahren und physikalischen Strömungsverfahren darstellt. Hierbei kann die Eigenfluoreszenz eines Oligomers oder Polymers benutzt werden oder die Anlagerung oder Kopplung luminophorer Liganden beobachtet werden.

Die in situ - Hybridisierung ist ein Verfahren, bei dem die spezifische Doppelstrang-Bildung zwischen einer markierten Nukleinsäuresonde und einer komplementären Zielnukleinsäure in einer geometrisch fixierten Anordnung des zu analysierenden Objektes durchgeführt wird. Das zu analysierende Objekt kann dabei ein Oberflächen-fixiertes Präparat von Molekülen oder Molekülkomplexen sein. Beispiele sind Präparationen von Chromosomen, Transkriptionskomplexen oder Translationskomplexen. In der Routineanalytik sind häufig oberflächen-fixierte Gewebeschnitte oder Zellen aus Zellkulturen von Bedeutung.

**Dynamische Laser-Korrelationsspektroskopie**

Die erfindungsgemäße Methode erlaubt aufgrund ihrer Sensitivität die Lokalisation auch einzelner hybridisierter oder im Falle von nichtnukleinsäure-Liganden komplexierter Liganden, die mit einem Fluoreszenzmarker gekoppelt sind. Der Vorteil der erfindungsgemäßen Methodik beruht auf der hohen Sensitivität des Nachweises von Einzelmolekülen. Dadurch werden direkte Analysen möglich, die ansonsten den Einsatz einer enzymatischen Amplifikationsreaktion notwendig machen oder eine hohe lokale Konzentration von Zielmolekülen voraussetzen, wie im Falle polytäner Chromosomen. Beansprucht wird auch die Verwendung von Doppel- oder Mehrfachmarkierungen nach dem erfindungsgemäßen Verfahren, wodurch sich die relative räumliche Lage von interessierenden Strukturen zueinander bestimmen läßt.

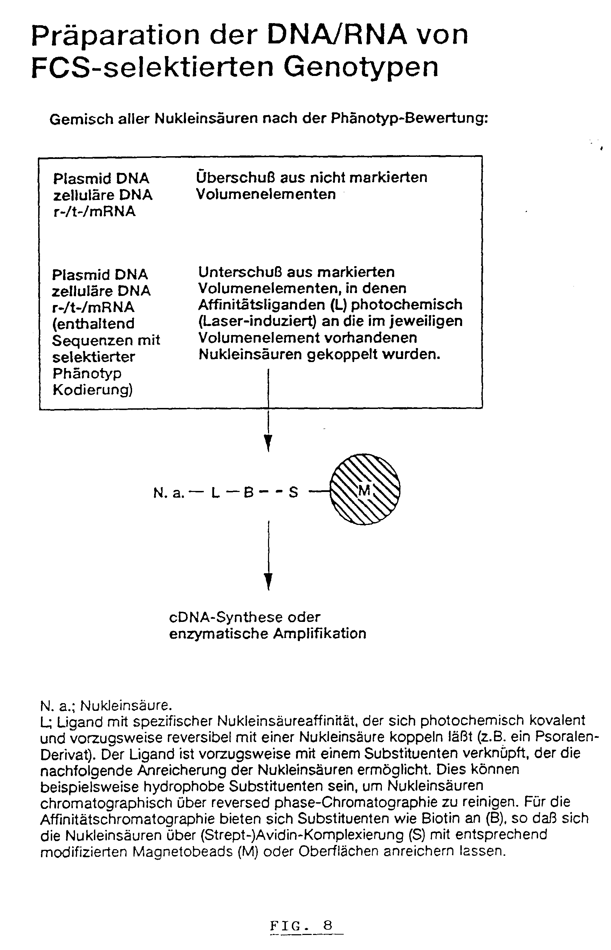

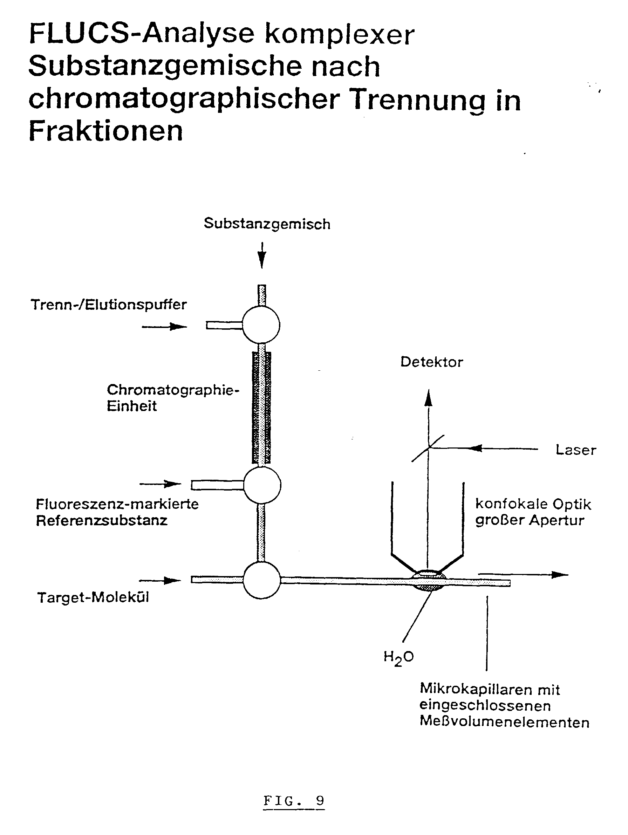

Die erfindungsgemäße Methode mit konfokaler Abbildung kleinster Volumenelemente durch Verwendung einer Lochblende zur Analyse dynamischer Prozesse kann erfindungsgemäß in Kombination mit der entsprechenden Methode verwandt werden, die im Laser-Scanning-Mikroskop benutzt wird, um eine hohe räumliche Auflösung von Strukturen zu erhalten. Während beim Laser-Scanning-Mikroskop alleine die Fluoreszenzintensität als Meßgröße benutzt wird, verwendet das erfindungsgemäße "Laser-Korrelations-Mikroskop" die Korrelationsfunktion und deren dynamischen Inhalt im durch die Raumkoordinaten (x,y,z) festgelegten Meßvolumen, das flächig oder räumlich abgebildet wird (Figur 10). Auf diese Weise lassen sich flächige (Querschnitt) oder räumliche Bilder der Dynamik eines markierten Moleküls (Rotation-, Translationsdiffusion, chemische Kinetik) z.B. in einer Zelle oder in einem anderen biologischen Objekt darstellen.

Die schematische Figur 10 wird nachstehend erläutert. Dargestellt ist der prinzipielle Aufbau der erfindungsgemäßen Optik. Die Probe befindet sich in einer Probenhalterung, die durch einen zwei- oder dreidimensional steuerbaren Piezo-Trieb in einem bestimmten festgelegten Raster verschoben werden kann. Die jeweils zugehörigen Volumenelemente werden auf dynamische Prozesse analysiert und in ihrer Gesamtheit in einem Rechner zu einem zweidimensionalen (Querschnitt) oder dreidimensionalen Bild zusammengesetzt.

**33. Bestimmung epidemiologisch konservierter Gensegmente**

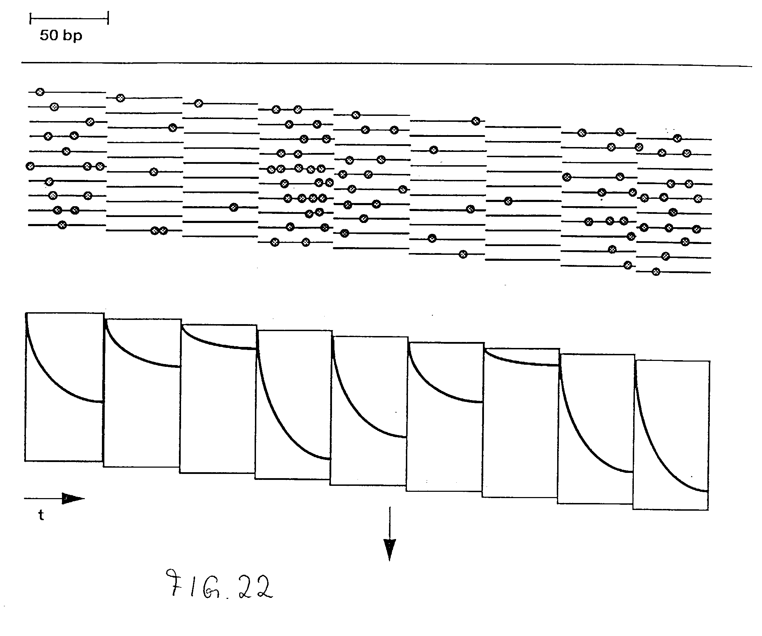

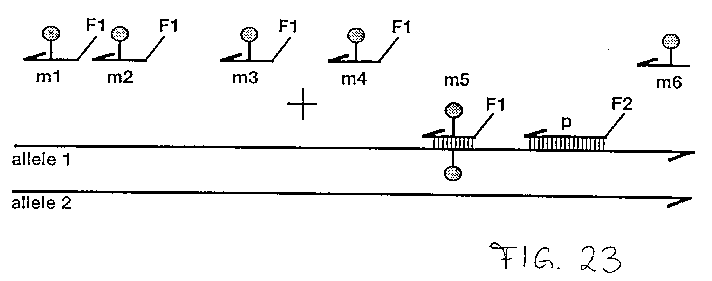

Über eine Bestimmung der Dissoziationsgeschwindigkeiten von hybriden Doppel strängen lassen sich analog der oben beschriebenen Bestimmungen von Dissoziationsgeschwindigkeitskonstanten Homologie-Abschätzungen durchführen. Dies ist von großer Wichtigkeit bei der epidemiologischen Analyse von divergierenden Pathogenen wie im HI-Virus. Zur Entwicklung diagnostischer Sonden und der Abschätzung ihrer Zuverlässigkeit müssen verschiedene Genabschnitte unterschiedlicher Herkunft auf diese Parameter hin untersucht werden (siehe Fig. 22).

**Verfahren zur simultanen Testung einer Mehrzahl von Mutationen auf einem Zielgenom**

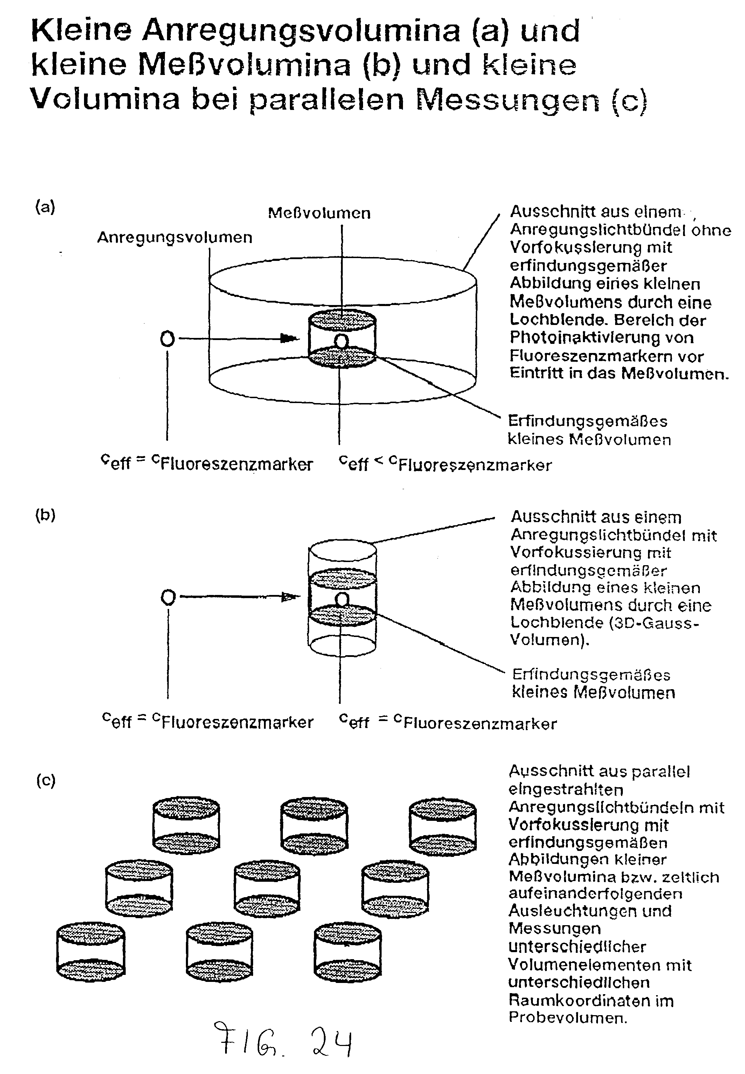

In der Analytik genetischer Erkrankungen ergibt sich häufig die Problematik, auf die Anwesenheit sehr vieler möglicher Mutationen gleichzeitig zu testen. Dies trifft insbesondere bei dominanten Erbkrankheiten oder X-Chromosom kodierten Erkrankungen zu. Bei rezessiven Erkrankungen ist es häufig wichtig zu beurteilen, ob eine bestimmte Punktmutation nur auf einem Allel oder auf beiden Allelen gleichzeitig auftritt (siehe Cystische Fibrose mit mittlerweile mehr als 30 beschriebenen Mutationen). Die erfindungsgemäße Vorgehensweise erlaubt, gleichzeitig in einem Probenansatz auf verschiedene Mutationen analysieren zu können (Fig. 23).

**Detektion einzelner Bakterien über die Bindungsspezifitäten von oberflächen-exprimierenden Bakterien**

Für eine große Anzahl wichtiger Anwendungen der modernen biotechnologischen Forschung wäre es äußerst vorteilhaft und effizient, könnte in einem Verfahren anstelle der Detektion eines funktionalen Biomoleküls in einem gegebenen Probevolumen die Detektion eines einzelnen Bakteriums oder eines Virus mit funktionalen Oberflächenproteinen erfolgen. Der entscheidende Vorteil liegt in der oft sehr interessanten Kopplung eines phänotypischen Expressionsproduktes, z.B. ein natürliches oder ein rekombinantes Oberflächenprotein, an seinen genetischen Bauplan.

Das Genom von Mikroorganismen umfaßt ca. $10^7$ Nukleotide. Durch shotgun-Expression lassen sich durch an sich bekannte Verfahren subgenische Fragmente einer durchschnittlichen Länge von 100 Aminosäuren exprimieren. Unter Berücksichtigung der Leserahmenvariation (Faktor 3) und eines angenommenen nicht kodierenden Gegenstranges enthalten $10^8$ rekombinante Bakterienklone jedes Segment ca. 100fach. $10^8$ rekombinante Bakterienklone sind in 1 ml einer Suspension von 10D enthalten, die sich in ca. 24 Stunden mit dem erfindungsgemäßen Verfahren einzeln auf z.B. ihre Bindeeigenschaften zu IgE aus einem allergisch reagierenden Patienten untersuchen lassen. Es gilt, die entsprechend charakterisierten Bakterien auszusondern, zumindest jedoch stark anzureichern, sie biologisch zu expandieren oder das entsprechende Genomsegment durch enzymatische Amplifikationsverfahren zu amplifizieren und zu charakterisieren.

Derartige Probleme stehen im Zusammenhang mit Verfahren zur evolutiven Optimierung von Peptiden und/oder Proteinen durch Einsatz von Mutagenese-Verfahren und Selektions-Verfahren, wie sie beispielsweise in der WO92/18645 beschrieben sind. Es lassen sich

ca. $10^9$ Bakterien in ihren Bindungseigenschaften zu spezifischen farbstoffmarkierten Substanzen innerhalb von 24 Stunden durchmustern auf die Anwesenheit-eines Bakteriums, das ein Oberflächenprotein/Peptid exprimiert, das die Fähigkeit besitzt, mit dem Zielmolekül von vorgegebener Konzentration in Wechselwirkung zu treten. Das entsprechende Bakterium ist aus einem solchen Reaktionsansatz mit herkömmlichen Methoden klonierbar.

Ein weiteres bedeutendes Anwendungsspektrum ergibt sich aus dem sogenannten Genomprojekt zur funktionalen Kartierung von Gensegmenten aus genomischen Banken, cDNA Banken oder Banken subgenischer Strukturelemente (Shape Space). Auf diese Weise lassen sich genomische und/oder subgenomische Segmente aus umfangreichen Kollektiven in ihrer Funktion, z.B. ihrem Bindeverhalten zu Zielmolekülen, bestimmen.

Die Verwendung der beschriebenen Methodik der funktionalen Zuordnung genetisch kodierter Peptidsegmente wird insbesondere in der allergologischen Forschung von großer Bedeutung werden. Die Zuordnung von immundominanten Epitopen auf Allergenen (z.B. Aspergillus, Milchprotein, alpha-Amylase) ist von außerordentlich großer Bedeutung und bislang ein schwer zu lösendes Problem. Typische Probleme der Praxis sind:

Bestimmung der IgE-bindenden Moleküle aus einem meist schlecht charakterisierten Substanzgemisch. Wichtig ist beispielsweise die Beantwortung der Frage, welche Bestandteile des Sojalecithins immunogen sind, die Reinsubstanz allein, die Reinsubstanz in ihrer Wechselwirkung mit Verunreinigungen des Präparates oder die Wechselwirkung mit Strukturen des Empfängerorganismus. Erfindungsgemäß lassen sich die unterschiedlichen Substanzen in der Mischung mit markiertem IgE aus Patienten differenzieren.

Durch Expression subgenischer Gensegmente lassen sich mit dem oben genannten Verfahren die immundominanten Epitope eingrenzen und charakterisieren. Mit diesen Ergebnissen lassen sich

- mit den in WO92/18645 beschriebenen Methoden evolutiv analoge, funktionale Moleküle erzeugen, denen die entsprechenden immundominanten Regionen fehlen, z.B. eine abgeschwächt immunogene alpha-Amylase,
- die spezifischen Epitope nach Standardmethoden einfach gentechnisch darstellen und als reine Nachweisreagenzien einsetzen oder zur Desensibilisierung verwenden.

**Vorrichtung**

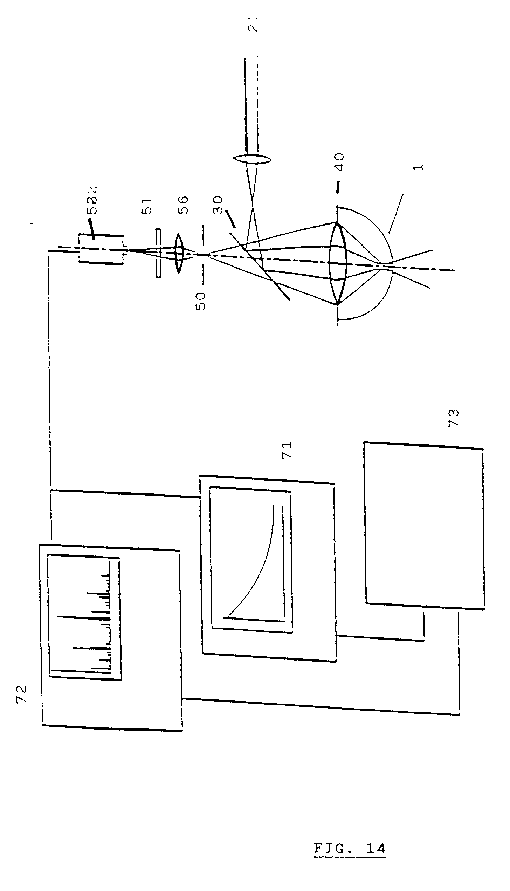

Die Meßanordnung ist eine Vorrichtung, die aufgrund der beugungslimitierenden Fokussierung eines Laserstrahls der nachstehend beschriebenen Anordnung besonders geeignet ist zur Durchführung des erfindungsgemäßen Verfahrens. Die Vorrichtung besteht nach Figur 14 aus einem vorfokussierten Laserstrahl. Durch Einführung einer Kombination von Fokussierlinse und einer wechselbaren Mikroskopoptik mit konstantem Bildabstand kann der Durchmesser des vorfokussierten Laserstrahls variabel gestaltet werden. Der vorfokussierte Laserstrahl wird nach Ablenkung durch einen dichroitischen Spiegel mit Hilfe einer Luft- oder Wasser-Immersionsoptik mit oder ohne Deckglas auf das beispielsweise auf einem Träger oder in einem hängenden Tropfen 1 befindliche Probenvolumen abgebildet. Die Fluoreszenzemission wird üblicherweise in einem 180° Winkel zur Richtung des Erregerlichtes durch die Immersionsoptik aufgenommen und abgebildet. In der Bildebene 25 befindet sich eine Lochblende, die weiter auf ein Halbleiter-Detektorelement (Lawinen-Photo-Diode), nach Passieren geeigneter Kanten oder Interferenzfilter in geeignetem Maßstab abgebildet wird. Der geeignete Maßstab ergibt sich durch Abstimmung der Abbildung der Probe auf die Dimension der Photodiode. Die Photodioden sind vorzugsweise relativ klein ausgebildet, etwa im Bereich von 100 µm, so daß sie Lochblenden "ersetzen" können im Sinne eines konfocalen Detektors. In einer besonderen Ausführungsform der erfindungsgemäßen Vorrichtung können die Dioden auch in Ensembles in Form von Detektor-Arrays angeordnet werden.

Die Abbildung der Lochblende 50 kann unter Zuhilfenahme eines Strahlenteilers 60 auf beispielsweise 2 Detektorelemente 52, 53 die für verschiedene Emissionswellenlängen optimiert sind, erfolgen. Anstelle der Lochblende können beispielsweise auch ein oder mehrere Halbleiter-Detektor-Elemente (Array) in der Bildebene plaziert werden.

In einer bevorzugten Ausführungsform weist die erfindungsgemäße Vorrichtung, die gedanklich in eine Einheit zur Erzeugung einer beugungslimitierenden Fokussierung eines Laserstrahls und eine Beobachtungseinheit aufgeteilt werden kann, die folgenden Bauelemente auf. Die Einreichtung 20 zur Vorfokussierung eines Laserstrahls 21 weist weiterhin einen dichroitischen Spiegel 30 im Strahlengang des Lasers zur Ablenkung des Laserstrahls 21 auf. Der durch beugungslimitierende Fokussierung erzeugte Laserstrahl wird nach Ablenkung durch den dichroitischen Spiegel 30 mittels einer weiteren Linse 40 in die Probe abgebildet, die beispielsweise auf einem Träger positioniert ist oder in Form eines hängenden Tropfens 1 vorliegt.

Die Beobachtungseinheit weist gegebenenfalls Filtereinrichtungen 51, Photcnenzählereinrichtungen 52, eine Korrelatoreinrichtung 71 und/oder eine Vielkanal-Scalereinrichtung 72 auf. Das Meßsignal kann gegebenenfalls computergestützt bearbeitet und/oder ausgewertet werden.

Die Abbildung 15 zeigt schematisch die Vorfokussiereinrichtung 20 zur Vorfokussierung des Laserstrahls 21 mit der Linse L 22 und einer Mikroskopoptik entsprechenden Anordnung 23 wird der Kollimierte Laserstrahl 21 durch die Linse 22 auf die Bildebene $B_1$ abgebildet. Die Anordnung 23 bildet den Laserstrahl auf die Bildebene $B_2$ als Zwischenbild ab. Die Anordnung 23 ist vorzugsweise mit einer wechselbaren Linsenanordnung versehen, beispielsweise in Form eines Mikroskop-Revolver-Kopfes. Damit kann der Durchmesser des vorfokussierten Laserstrahls 21 variiert werden.

Die Detektionseinheit besteht in einer bevorzugten Ausführungsform der erfindungsgemäßen Vorrichtung aus zwei Detektoren 52 und 53 und weist einen Strahlenteiler 60, der das aus der Probe emittierte Licht 55 auf die Detektoren 52 und 53 verteilt, auf. Diese Anordnung ist in Figur 16 schematisch gezeigt. Dabei ist es vorteilhaft, daß das emittierte Licht 55 aus der Probe 1 vor dem Eintritt in die Detektoren 52 oder 53 jeweils Abbildungslinsen 56,57 und Filterelemente 58,59 passiert. Es ist insbesondere vorteilhaft, daß die Detektoren 52 und 53 jeweils Licht unterschiedlicher Wellenlänge detektieren können. Dies kann durch Wahl geeigneter Filter erreicht werden.

Wenn die Detektorelemente in Form eines Detektor-Arrays in der Bildebene plaziert werden, kann auf den Einsatz der Lochblende 50 verzichtet werden. Die Detektorelemente sollten dann vorzugsweise eine Größe von < 100 μm aufweisen. Eine weitere bevorzugte Ausführungsform der erfindungsgemäßen Vorrichtung weist im Strahlengang 55 eine Lochblende 50 auf.

In Fig. 25 ist in Seitenansicht ein Doppelmikroskop dargestellt, wie es zur Untersuchung eines Meßvolumens (bei 62 angedeutet) eingesetzt wird. Das Mikroskop weist einen vertikalen Ständer 63 (Vierkantrohr) auf, der mit einer Fußplatte 64 versehen ist. Am oberen Ende des Ständers 63 ist um eine horizontale Achse drehbar ein zentraler Haltearm 65 gelagert. Der zentrale Haltearm 65 ist innen hohl ausgebildet und innen mit optischen Elementen, wie einem Strahlteiler 66 und einem 45° Reflexionsspiegel 67 versehen. Die Lagerachse 68 des Haltearms 65 ist hohl ausgebildet, wobei längs der ideellen Drehachse zwei überlagerte Laserstrahlen axial in den Haltearm 56 einstrahlen und dort auf den Strahlteiler 66 und im Strahlengang dahinter auf den Spiegel 67 (Breitkantprisma) treffen. Durch den Strahlteiler 66 und den Spiegel 67 werden die beiden überlagerten Laserstrahlen zu zwei einander gegenüberliegenden Seiten aus dem Haltearm 65 herausgeführt; an diesen Stellen ist der Haltearm mit Öffnungen 69 (Glasdeckplatte) versehen.

Die beiden aus dem Haltearm 65 aus,tretenden Laserstrahlen 70,71 treffen auf Strahlteiler 72,73, die die Laserstrahlen 70,71 umlenken, so daß sie parallel zur axialen Erstreckung des Haltearms 65 verlaufen.

Am freien Ende des Haltearms 65 ist ein Tragarm 74 angebracht, der relativ zum Haltearm 65 derart angeordnet ist, daß beide zusammen eine T-Konfiguration bilden. An der dem Ständer 63 abgewandten Vorderseite des Haltearms 74 sind Führungen 75 zum längsverschiebbaren Führen von Gehäuseteilen 76 angebracht, die ihrerseits einen Objektiv-Revolverträger 77 mit der Objektivlinse 78 aufweisen.

Die relative Anordnung beider Revolver 77 ist derart, daß die Objektivlinsen 78 einander gegenüberliegen und auf einer gemeinsamen optischen Achse angeordnet sind, wobei zwischen den beiden Objektivlinsen 78 der Objekttisch 79 angeordnet ist, der seinerseits an dem Haltearm 74 gehalten ist. Im Innern des Haltearms 74 ist ein Doppelspindelantrieb 80 mit zwei Spindeln 81 mit gegensinnigem Gewinde angeordnet. Die Spindeln 81 stehen in Gewindeeingriff mit in den Haltearm 74 hineinragenden Armen 82, die mit den Gehäuseteilen 76 verbunden sind. Bei angetriebenem Doppelspindelantrieb 80 bewegen sich also, je nach Antriebsrichtung, die beiden Gehäuseteile 76 aufeinander zu oder voneinander weg, so daß die Brennpunkte der beiden Objektivlinsen 78 zusammengeführt werden können.

Mit den beiden verschiebbar gelagerten Gehäuseteilen 76 ist jeweils ein Doppelführungssystem verbunden. Jedes dieser Doppelführungssysteme ist als Doppelschwalbenschwanzführungsschiene 83,84 ausgebildet. Diese Führungsschienen 83,84 sind den beiden stirnseitigen Enden des Haltearms 74 gegenüberliegend angeordnet und werden zusammen mit den Gehäuseteilen 76 verfahren. Die beiden Führungsschienen 83,84 ragen zu beiden Seiten (Objektträgerseite und Verbindung mit dem Haltearm 65) über den Haltearm 74, wobei sie parallel zum Haltearm 65 verlaufen. Die einander zugewandten innenliegenden Seiten sind mit optischen Elementen 85,86 zur Vorfokussierung des von den halbdurchlässigen Spiegeln bzw. Strahlteilern 72,73 kommenden Laserlichts. An den einander abgewandten Seiten der beiden Führungsschienen 83,84 sind weitere optische Elemente (Linsen, Blenden, Filter u.dgl.) angeordnet, um das vom Meßvolumen kommende Licht zu beeinflussen. Bei 88 handelt es sich um die Lochblenden (Pinhole) und 87 bezeichnet bikonvexe Linsen zur Abbildung der Lochblenden auf die Detektoren zur Erfassung der Fluoreszenzstrahlung. Ferner sind an den einander abgewandten Außenseiten der Führungsschienen 83,84 Reflexionsspiegel 89 angeordnet, die unter einem Winkel von 45° stehen und das vom Meßvolumen 62 kommende Licht in Richtung auf die optischen Elemente 87,88 umlenken. Ferner befinden sich auf diesen Seiten der Führungsschienen 83,84 die eigentlichen Detektoren 90,91 (Lawinenphotodioden), die aus dem empfangenden Laserlicht die zur Weiterverarbeitung in der Kreuzkorrelation erforderliche Information in elektrische Signale umsetzen.

Die Arbeitsweise des in Fig. 25 gezeigten Doppelmikroskops ist wie folgt. Die beiden überlagerten Laserstrahlen (70,71) unterschiedlicher Wellenlängen gelangen durch die Lagerachse 68 hindurch in den Haltearm 65, wo der eine Laserstrahl 71 durch das Strahlteilerelement 66 um 90° zur einen Seite und der andere Laserstrahl 70 nach Durchdringen des Strahlteilers 66 über den Spiegel 67 um 90° zur entgegengesetzten Seite reflektiert wird. Die aus den Öffnungen 69 des Haltearms 65 austretenden Laserstrahlen 70,71 treffen auf die Strahlteiler bzw. halbdurchlässigen Spiegel 72,73, von denen sie aus die optischen Elemente 86 passieren. Im Anschluß daran durchdringen die Laserstrahlen den Haltearm 74, wozu dieser mit Langlöchern 92 an seinen dem Ständerfuß 63 und dem Objektivträger 79 zugewandten Seiten ausgestattet ist (in Fig. 25 sind lediglich die dem Ständerfuß 63 zugewandten Langlöcher 92 dargestellt). Die Laserstrahlen 70,71 verlaufen dann weiter durch die Gehäuseteile 76 hindurch, wo sie auf ebenfalls halbdurchlässige Spiegel 93 treffen, um von diesen durch die Revolver 77 und die Objektivlinsen 78 hindurch auf das Meßvolumen 62 treffen. Das vom Meßvolumen 62 reflektierte Licht durchdringt die halbdurchlässigen Spiegel 93 ohne Ablenkung und wird an den Reflexionsspiegeln 89 zu den optischen Elementen 87,88 an den Außenseiten der Führungsschienen 83,84 hindurchgeschickt. Im Anschluß daran trifft es auf die Detektoren 90,91.

Um in Abhängigkeit von den verwendeten Objektivlinsen 78, die identisch sind, die Brennpunkte dieser Linsen auf das Meßvolumen 62 einstellen zu können, lassen sich, wie bereits oben dargelegt, die Gehäuseteile 76, und mit diesen die Führungsschienen 83,84 verfahren. Da die halbdurchlässigen Spiegel 72,73 wie die optischen Elemente 86 an den einander zugewandten Seiten der Führungsschienen 83,84 gehalten sind, verändert sich also beim Verschieben der Gehäuseteile 76 und der Führungsschienen 83,84 der Abstand der halbdurchlässigen Spiegel 72,73 zu dem Reflexionsspiegel 67 bzw. halbdurchlässigen Spiegel (Strahlteiler 66). Die Laserstrahlen 70,71 verändern in ihren sich an die halbdurchlässigen Spiegel 72,73 anschließenden Bereichen, wo sie parallel zum Haltearm 65 verlaufen, ihren Abstand zu diesen. Demzufolge ändert sich ihre relative Lage innerhalb der Langlöcher 92 des Haltearms 74. Daraus wird deutlich, daß sämtliche außerhalb des zentralen Haltearms 65 angeordnete Optiken bewegt werden, wenn die Brennpunkte der beiden identischen Objektivlinsen 78 verändert werden, wobei die beiden möglichen Bewegungsrichtungen mit den Austrittsrichtungen der Laserstrahlen 70,71 aus dem zentralen Haltearm 65 heraus zusammenfallen.

Das gesamte Doppelmikroskop weist einen extrem kompakten Aufbau auf. Sämtliche Elemente sind derart angeordnet, daß die Gewichte "im wesentlichen gleichmäßig" verteilt sind. Der dem Objekttisch 79 zugewandte Bediener des Doppelmikroskops ist in seinem Arbeitsfeld durch optische Elemente und Einrichtungen des Mikroskops nicht beeinträchtigt. Der zentrale Haltearm 65 und damit die gesamten optischen Einheiten des Doppelmikroskops lassen sich drehen (s. Pfeil 94). Durch zwei axial gegeneinander gespannte Lager ist der zentrale Haltearm biegesicher an dem Ständer 63 gelagert. Die Position einer der beiden Objektivlinsen 78 läßt sich mit einem (nicht dargestellten) piezoelektrischen oder in sonstiger Weise betriebenen und arbeitenden Stellelement extrem genau positionieren, um einen Offset des gemeinsamen Brennpunkts beider Objektivlinsen 78 vom Ort, an dem sich das Meßvolumen 62 auf dem Objektträger 79 befindet, ausgleichen zu können.

Zusätzlich zu den hier beschriebenen und dargestellten optischen Elementen wie Linsen, Filter, Reflexionsspiegel, halbdurchlässige Spiegel können noch weitere optische Elemente im Strahlengang der Laserstrahlen 70,71 angeordnet werden, wenn dies aufgrund der durchzuführenden Untersuchungen erforderlich oder zweckmäßig ist.

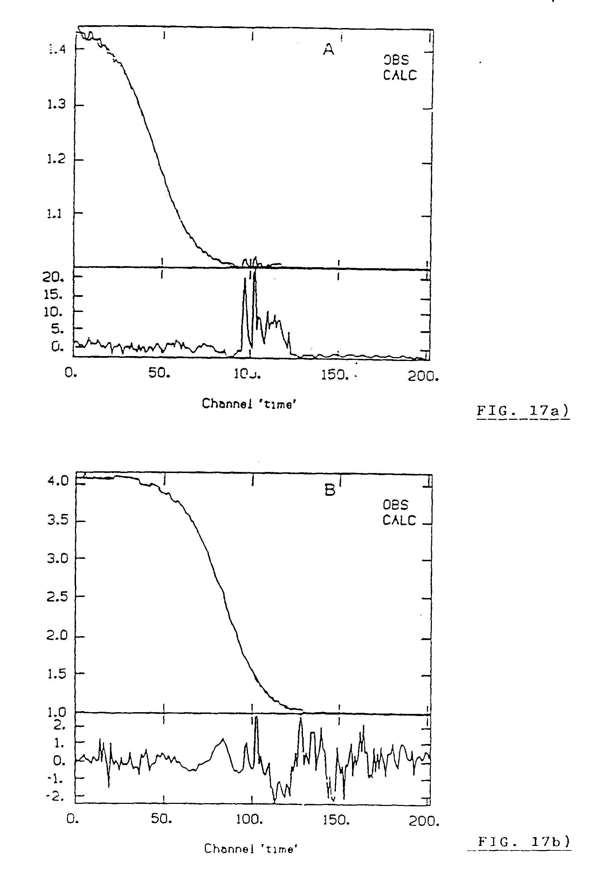

Die Figur 17 zeigt eine mit rhodamin-markierte Desoxyribonukleinsäure. Die Koordinate zeigt die normierte Intensitäts-, Korrelationsfunktion. Die Abszisse ist eine logarithmische Zeitachse. Die Konzentrationen sind angegebenen als Zahl markierter Moleküle pro Volumenelement ($2 \times 10^{-16}$ l). Die Figur 17 a) zeigt das Mononukleotid Uracil, zwei Moleküle pro Volumeneinheit, dessen Diffusionszeit 0,067 Millisekunden beträgt. Die Figur 17 b) zeigt eine DNA mit 500 Basenpaaren entsprechend 0,3 Molekülen pro Volumeneinheit mit einer Diffusionszeit von 1,8 Millisekunden.

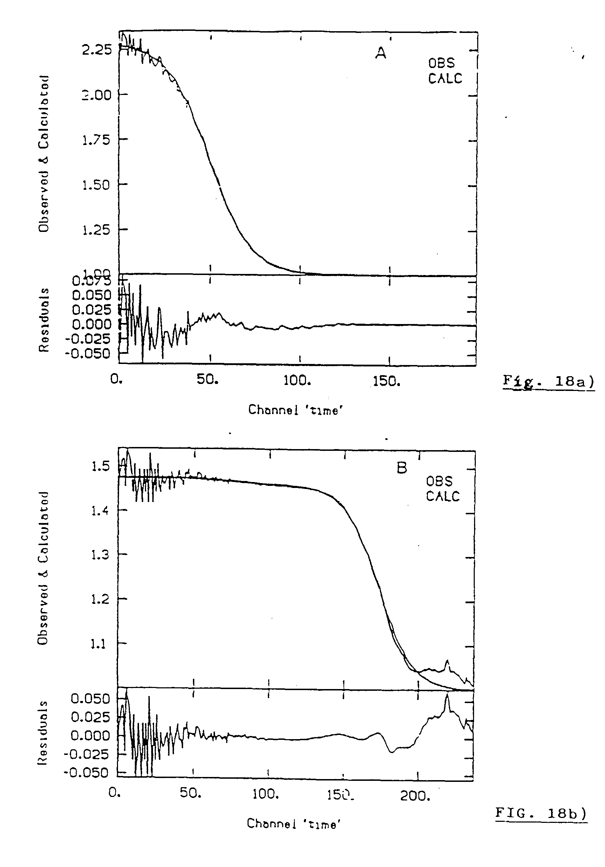

Die Figur 18 zeigt die Wechselwirkung eines fluoreszenzmarkierten Rezeptor-Liganden mit zellgebundenen Rezeptoren (β-adrenergischen Rezeptoren) in menschlichen Lymphozyten. Die Achsen des Koordinatensystems sind wie in Figur 17 oben beschrieben. Die Figur 18 a) zeigt den markierten Liganden in BSS, 10,7 Moleküle pro Volumeneinheit mit einer Diffusionszeit von 1,1 Millisekunden.

Die Figur 18 b) zeigt die Lymphozytenrezeptoren, die mit Ligand markiert sind in BSS, 72 Moleküle pro Volumeneinheit, Diffusionszeit 13 sec.

Figur 18 c) zeigt die Situation von zu 76% freien und 24% am Lymphozytenrezeptor gebundenen Liganden.

Da Fluoreszenz-Korrelationsfunktionen innerhalb von 10 - 100 ms zu erhalten sind, lassen sich 1000 Bildpunkte in 10 bis 100 Sekunden kodieren. Jeder Bildpunkt des erfindungsgemäßen Verfahrens entspricht insbesondere einem Poisson'schen Raumelement von typischerweise 0,1 - 1 μm Radius und 1 - 3 μm Länge. Die Korrelationsfunktion wird in jedem Bildpunkt für eine bestimmte Zeitspanne berechnet und mit der zugehörigen Koordinate x,y,z abgespeichert. Danach wird das Präparat vorzugsweise mit einem piezo-Trieb zum neuen Koordinatenpunkt verschoben, usw. Anstelle der Präparatverschiebung kann z.B. auch der Laserstrahl durch geeignete Spiegel-Einrichtung in bestimmten Grenzen verschoben werden (siehe Figur 9). Die dynamischen Bildpunkte werden dann zu einem Bild im Rechner zusammengesetzt.

Die Figur 6 beschreibt die bevorzugte Anordnung der optischen Detektionseinheit mit elektrischer Molekülfalle in Bezug zum Probenvolumen und Meßvolumen. Ein oder zwei Detektoren (Detektor 1/2) registrieren die emittierten Fluoreszenzsignale aus dem Meßvolumen, die ebenfalls über ein oder zwei optische Einheiten, wie sie im Text beschrieben sind, konfokal abgebildet werden. Die wäßrige Probe steht entweder direkt mit der Oberfläche der Austrittslinse in Kontakt oder wird wie in Figur 3 dargestellt durch eine dünne Folie von dem Objektiv getrennt.

Die Probe wird zwischen mindestens zwei Kapillaren mit einer lichten Weite des Kapillarendes von ca. 1 μm gehalten. Die Kapillaren sind im Falle der Funktion als Molekülfalle für ionische Moleküle mit einer leitenden Oberfläche beschichtet, vorzugsweise Gold auf Chrom-Grundierung, an die ein gleichgerichtetes Feld oder ein Wechselfeld angelegt werden kann. Die Steuerung des Feldes geschieht vorzugsweise durch einen Rechner, der mit der optischen Detektionseinheit verknüpft ist und die Felder bei Eintritt eines interessierenden Moleküls in bestimmter Weise regeln kann.

Die Figur 3 beschreibt eine bevorzugte Ausführung der erfindungsgemäßen Anordnung zum Screening großer Mutantenzahlen nach bestimmten Fitnessparametern. Unter Verwendung einer optischen Detektionseinheit gemäß Figur 6 können Proben untersucht werden. Dabei befinden sich die Proben in Form von Tröpfchen unter einer folienartigen Oberfläche, die ihrerseits vorzugsweise mit dem Objektiv in wäßriger Immersion in Kontakt steht. Die Folie kann bestimmte Beschichtungen tragen, die es erlauben, gezielt Moleküle aus den jeweiligen Proben an der Oberfläche zu binden. Die Proben können regulär an bestimmten Positionen aufgebracht sein, z.B. durch Verwendung eines Mikrodispensiersystems oder in statistischer Verteilung. Um ein Verdampfen des Lösungsmittels in den Proben zu verhindern, können die Tropfen durch eine schützende Matrix umgeben werden, z.B. Polymerstrukturen oder Öl.

Figur 7 zeigt schematisch die FCS-Markierung der selektierten Genotypen. Wenn bestimmte Proben gemäß der Figur 3 vorgewählten Fitness-Parametern entsprechen, kann ein Zugriff auf die jeweiligen Volumensegmente dadurch erleichtert werden, daß die Oberfläche mit einer photoaktivierbaren Beschichtung versehen ist, die z.B. optisch die Position markiert und einen anschließenden Zugriff auf die Probe erlaubt.

Der Zugriff auf ein selektiertes Volumensegment bzw. auf darin enthaltene Moleküle wie kodierende Nukleinsäuren, wie in Figur 8 schematisch gezeigt, läßt sich auch dadurch erreichen, daß lösliche Reaktanden im Volumenelement photoaktiviert werden, um z.B. mit einer Nukleinsäure zu reagieren. Derart markierte Nukleinsäuren lassen sich anschließend relativ einfach isolieren, um sie weiteren Reaktionen zu unterwerfen, beispielsweise einer PCR-Reaktion.

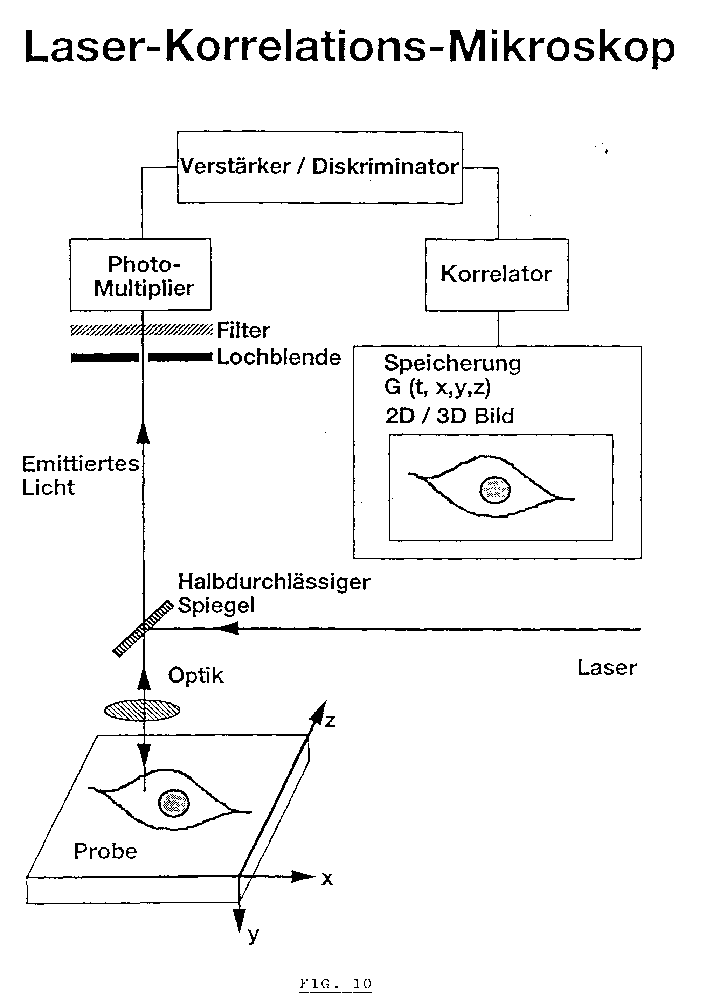

Figur 11 zeigt eine Auswahl möglicher erfindungsgemäßer Assays "Ag" steht für Antigen, bezeichnet jedoch den Analyten in allgemeiner Form wie z.B. auch Nukleinsäure-Moleküle für den Nachweis in Doppelstrangstrukturen.

"Ak" steht für Antikörper, bezeichnet jedoch in allgemeiner Form ein spezifisches Nachweisreagenz für einen Analyten, wie Antikörperfragmente, Bindedomänen oder analyt-komplementäre Nukleinsäuren.

"F" steht für einen Lumineszenz-Farbstoff, insbesondere einen Fluoreszenz-Farbstoff.

(A) Spezifische erfindungsgemäße Komplexierung eines Analyten "Ag" durch ein fluoreszenz-markiertes Nachweisreagenz, wobei das fluoreszenz-markierte Nachweisreagenz in komplexierter Form von der freien Form erfindungsgemäß unterschieden wird. Die Konstellation erlaubt einen bis zu tausendfachen Überschuß gegenüber dem Analyten.

(B) Wie (A), jedoch wird die Bindung eines im Überschuß zugegebenen zweiten Nachweisreagens in unmarkierter Form dazu ausgenutzt, einen zu geringen Unterschied der Größe von Komplex und unkomplexiertem, markierten Nachweisreagenz zu vergrößern.

(C) Kompetitiver, RIA-analoger Assay mit einem Unterschuß von Nachweisreagenz und Zusatz von fluoreszenz-markiertem Kompetitor-Analyt.

(D) Assay mit großem Überschuß an Nachweisreagenz, wobei mindestens zwei unterschiedliche Nachweisreagenzien eingesetzt werden, deren Farbstoffmarker über Energietransfer eine spezifische Komplexbildung anzeigen.

(E) Wie (D), wobei die unterschiedlichen Farbstoffe erfindungsgemäß unabhängig registriert werden und die gemeinsame Komplexbildung durch zeitliche Korrelation der unterschiedlichen optischen Signale bestimmt werden.

Die Fig. 19 beschreibt schematisch, wie sich das Dissoziationsverhalten von Komplexen aus n Rezeptormolekülen in n Reaktionsansätzen und farbstoff-markiertem Liganden in parallelen Experimenten darstellen kann. Verschiedene Reaktionsansätze werden in definierten Zeitabständen wiederholt analysiert. Dabei wird zum Beginn dem Gemisch ein Überschuß eines unmarkierten Liganden zugesetzt, so daß jeder dissoziierte Komplex erneut in einen Komplex mit nicht-markiertem Liganden überführt wird. Aus Kurvenverläufen 1,3,n lassen sich einzelne Dissoziationsgeschwindigkeitskonstanten abschätzen, Kurvenverlauf 2 und n-1 lassen zwei unterscheidbare Dissoziationsprozesse erkennen und deuten auf unterscheidbare Rezeptoren hin.

Die Fig. 20 zeigt verschiedene erfindungsgemäße Ausführungsformen der elektrischen Falle. (a) a,b,c,d stellen Quadrupol-Elektroden dar (metall-beschichtete Neher-Kapillaren oder metall-bedampfte Elektroden auf Mikrostrukturen auf flächigen Probenträgern (Silikon, Glas und andere Basismaterialien); e,f als Sextupol-Elektroden (z.B. als metall-bedampfte Austrittslinse eines oder zweier Objektive). Die Justierung erfolgt über x,y,z Justierung. (b) Verwendung flächiger Träger mit geätzten Elektrodenkanälen oder LIGA-Technik hergestellten Formen, über die geladene Moleküle in ihrer Bewegung im elektrischen Feld gesteuert werden können. Die Bodenplatten zu e und f können als Sextupolelektroden beschichtete Objektive sein oder metall-bedampfte Abdeckungen. (c) Verwendung von (b) in Kombination mit einem Probengebersystem, bestehend aus einer Kapillare aus mineralischen Materialien (z.B. Glas, Silicium etc. oder Kunststoff wie Teflon zur Verhinderung elektroosmotischer Kapillareffekte) zur großvolumigen Probenaufnahme mit Elektrode am Kapillarende (ca. +/- 0 -100 V) und mit Sammelelektrode auf Erdpotential (0 V).

Die Fig. 21 verdeutlicht die Möglichkeit zur Detektion geladener Moleküle mit Hilfe elektrischer Fallen. (a) Wenn sich Zielmoleküle innerhalb des Quadrupol- oder Sextupolfeldes befinden, lassen sich durch ein zufälliges Wechselfeld über die Elektroden a,b,c,d die Moleküle in erzwungene Bewegungen versetzen. Sie werden somit erfindungsgemäß zählbar. (b) Ein Molekül wird durch einen Mehrelement-Detektor in seiner Lage in der Falle erkannt. Durch aktive Rückkopplung wird das Quadrupol-/Sextupol-Feld so gestellt, daß das Molekül in einem bestimmten Flächen-/Volumenelement in seiner Lage fixiert wird.

Die Fig. 22 zeigt schematisch die Analyse auf epidemiologisch konservierte Gensegmente auf einem Virusgenom. Ein DNA/RNA-Gemisch von verschiedenen Virusstämmen wird segmentweise mit jeweils einer markierten Gegenstrangsonde markiert und einem Verdrängungsexperiment durch Überschuß unmarkierter Sonde unterworfen. Das rasche Auftreten freier markierter Sonde unterhalb der Schmelztemperatur signalisiert, daß viele Stämme mit der Sonde Komplexe mit vielen Fehlpaarungen eingegangen sind. In diesen Bereichen sind die Stämme offensichtlich stark heterogen.

In der Fig. 23 ist ein Verfahren dargestellt, mit dem es erfindungsgemäß möglich ist, über Kreuzkorrelation gleichzeitig auf die Anwesenheit mindestens einer von mehreren möglichen Mutationen auf einem Genomabschnitt zu schließen. Dem zu analysierenden DNA oder RNA-Gemisch wird eine Mischung von markierten Fragmenten zugesetzt. Die Hybridisierung der Sonde p mit dem Farbstoff F2 muß korrelieren mit der gleichzeitigen Hybridisierung von mindestens einer Sonde ml-m6, die mit dem Farbstoff F1 markiert sind, wenn eine der gesuchten Mutationen vorliegt. Die Sonden ml-m6 sind jeweils komplementär zu den mutierten Sequenzen und können unter stringenten Bedingungen nicht effizient mit Wildtyp-Sequenzen Doppelstrangstrukturen ausbilden. Bevorzugte Konzentrationen sind für die zu analysierende Nukleinsäure $10^{-10}$ M bis $10^{-14}$ M, während die Sonden in einer Konzentration von vorzugsweise $10^{-8}$ M bis $10^{-11}$ M angeboten werden.

Die Fig. 24 stellt schematisch die Bedeutung erfindungsgemäß kleiner Anregungsvolumina (a), kleiner Meßvolumina (b) und kleine Volumina bei parallelen Messungen (c) dar. (a) Gezeigt ist ein Ausschnitt aus einem Anregungslichtbündel ohne Vorfokussierung mit erfindungsgemäße Abbildung eines kleinen Meßvolumens. Es entsteht ein Bereich, in dem es zur Photoinaktivierung eines Farbstoffmarkers vor Eintritt in das eigentliche Meßvolumen kommen kann, so daß die effektive Konzentration im Meßvolumen kleiner als die tatsächliche Konzentration ist. Dies wird bei erfindungsgemäßem Ausleuchten mit vorfokussiertem Anregungslicht und Abbildung durch eine Lochblende in Bildebene weitgehend verhindert. So entsteht ein Gauss'sches Volumen mit Gauss'scher Verteilung der Lichtintensität (b). (c) zeigt einen Ausschnitt aus parallel eingestrahlten Anregungslichtbündeln mit Vorfokussierung mit bevorzugten Abbildungen kleiner Meßvolumina bzw. zeitlich aufeinanderfolgenden Ausleuchtungen und Messungen unterschiedlicher Volumenelemente mit unterschiedlichen Raumkoordinaten im Probevolumen.

## Patentansprüche

1. Verfahren zur Identifizierung von einem oder wenigen Molekülen in einem Meßvolumen, das Teil eines Probenvolumens ist, insbesondere in einer Verdünnung von ≤ 1 μM, durch Verwendung der laserangeregten Korrelationsfluoreszenz-Spektroskopie (FCS) bei kurzen Diffusionswegen der zu analysierenden Moleküle, wobei die Messung in mindestens einem kleinen Meßvolumen von vorzugsweise ≤ $10^{-14}$ l oder einer Vielzahl soldier Meßvolumina in dem Probenvolumen durchgeführt wird, durch Bestimmung stoffspezifischer Parameter, die durch Lumineszenzmessungen an zu untersuchenden Molekülen ermittelt werden, dadurch gekennzeichnet, daß das mindestens eine Meßvolumen in einem Arbeitsabstand von ≤ 1000 μm von einer Fokussiervorrichtung angeordnet ist, wobei die Fokussiervorrichtung entweder direkt mit dem Probenvolumen in Kontakt steht oder wobei das Probenvolumen durch eine optisch durchlässige Folie von der Fokussiervorrichtung getrennt ist.

2. Verfahren gemäß Anspruch 1, wobei Translationsdiffusionskoeffizienten, Rotationsdiffusionskoeffizienten, die Excitations-, Emissionswellenlänge, die Lebensdauer des jeweils angeregten Zustandes eines lumineszierenden Substituenten oder Kombinationen dieser Meßgrößen als stoffspezifische Parameter bestimmt werden.

3. Verfahren gemäß mindestens einem der Ansprüche 1 und 2, dadurch gekennzeichnet, daß die Ortskoordinaten des Meßvolumens relativ zu den Ortskoordinaten des Probenvolumens während der Analyse verändert werden, um stationäre oder sehr langsam diffundierende lumineszierende Komplexe zu analysieren, indem das Probenvolumen relativ zum Meßvolumen bewegt wird und/oder indem die Position des Laserstrahls und/oder die Position des Fokus der registrierenden Optik zeitlich verändert wird, wobei die gemessenen Translationsdiffusionskoeffizienten einer Kombination der tatsächlichen Translationsdiffusionskoeffizienten und der überlagerten relativen räumlichen Veränderung der Koordinaten des Meßvolumens entsprechen.

4. Verfahren gemäß Anspruch 3, dadurch gekennzeichnet, daß die zeitliche Veränderung der Koordinaten des Meßvolumens eine scheinbare Diffusionszeit eines stationären oder sehr langsam diffundierenden, lumineszierenden Komplexes definiert.

5. Verfahren gemäß einem der Ansprüche 1 bis 4, dadurch gekennzeichnet, daß die Lumineszenz eines Substituenten mit dem zu bestimmenden Molekül in direkter Wechselwirkung steht, wobei der Substituent ein luminophorer Ligand oder ein Ligandenkomplex ist, dessen spektroskopische Parameter mit der Art oder Funktion des zu bestimmenden Moleküls korreliert sind.

6. Verfahren gemäß mindestens einem der Ansprüche 1 bis 5, wobei über die Messung der Translationsdiffusion und/oder Rotationsdiffusion mit Auswertung der Korrelation die funktionale Bewertung insbesondere durch die Bestimmung der absoluten Zahl vorhandener Moleküle und/oder deren zeitlicher Variation und/oder durch die Bestimmung der spezifischen Konzentrationen strukturell unterschiedlicher Liganden und/oder der Ligandenkomplexe und die daraus abzuleitenden thermodynamischen Bindekonstanten spezifischer Wechselwirkungen und/oder die Geschwingigkeitskonstanten spezifischer Erkennungsreaktionen oder enzymatischer Prozesse unter Beteiligung liganden-gekoppelter Moleküle durchgeführt wird.

7. Verfahren gemäß mindestens einem der Ansprüche 1 bis 6, wobei die gemessenen Moleküle oder Molekülkomplexe ionischer oder nicht-ionischer Natur sind.

8. Verfahren gemäß mindestens einem der Ansprüche 1 bis 7, dadurch gekennzeichnet, daß die Messung in einem überlagerten konstanten oder zeitlich variierenden elektrischen oder magnetischen Feld stattfindet.

9. Verfahren gemäß Anspruch 8, wobei die ionischen Moleküle oder Molekülkomplexe eines Probenvolumens mit Hilfe eines gleichgerichteten elektrischen Feldes oder eines elektrischen Wechselfeldes zum Durchtritt durch das Meßvolumen und/oder kurzfristigen Verbleib im Meßvolumen gezwungen werden.

10. Verfahren gemäß mindestens einem der Ansprüche 8 und/oder 9, dadurch gekennzeichnet, daß bei Verwendung einer elektrischen Molekülfalle der markierte Ligand eine geringere oder entgegengesetzte Ladung trägt als das zu komplexierende Zielmolekül.

11. Verfahren gemäß mindestens einem der Ansprüche 1 bis 10, dadurch gekennzeichnet, daß die Analyse mit einem elektrophoretischen Trennverfahren gekoppelt wird, um freie farbstoff-markierte Liganden, insbesondere Nukleinsäuresonden, von spezifisch komplexierten Liganden, insbesondere Nukleinsäurehybride, räumlich zu trennen, wobei vorzugsweise Liganden mit mehreren gekoppelten Fluoreszenz-Farbstoffen eingesetzt werden.

12. Verfahren gemäß mindestens einem der Ansprüche 1 bis 11, dadurch gekennzeichnet, daß die nachzuweisenden Komplexe aus markiertem Nachweisreagenz und Analyt und gegebenenfalls freiem Analyt in einem ersten Elektrophoreseschritt vorkonzentriert werden und die nachzuweisenden Komplexe in einem zweiten Elektrophoreseschritt in das Meßvolumen transportiert werden.

13. Verfahren gemäß mindestens einem der Ansprüche 1 bis 12, dadurch gekennzeichnet, daß der luminophore Ligand und/oder der luminophore Ligandenkomplex einen Extinktionskoeffizienten $\geq$ 30.000 bei einer Quantenausbeute $\geq$ 0,1 aufweist und/oder als chromophorer Ligand ein oder mehrere Farbstoff-Oligomere zur Verkürzung der effektiven Meßzeit eingesetzt werden.

14. Verfahren gemäß mindestens einem der Ansprüche 1 bis 13, dadurch gekennzeichnet, daß definierte Moleküle und/oder Gleichgewichtsgemische von Molekülen und/oder kinetische Reaktionsverläufe in mindestens einem Probenvolumen analysiert werden, wobei im Falle mehrerer Probenvolumina diese auf einem flächigen Träger in zweidimensionaler Anordnung, insbesondere einer Membran oder Folie und/oder einer Wafer-Oberfläche, oder in linearer Weise, vorzugsweise in einem kapillaren System, angeordnet werden, wobei in bevorzugter Weise die Probenvolumina in oder auf natürlichen oder in vitro modifizierten Zellen und/oder in künstlich hergestellten vesikulären Strukturen vorliegen, insbesondere Vesikel auf Basis von Liposomen oder auf Basis löslicher Polymere mit vesikel-bildenden Eigenschaften.

15. Verfahren gemäß mindestens einem der Ansprüche 1 bis 14, dadurch gekennzeichnet, daß die einzelnen Probenvolumina durch Verwendung eines Mikrodispensiersystems generiert werden.

16. Verfahren gemäß mindestens einem der Ansprüche 1 bis 15, dadurch gekennzeichnet, daß der Zugriff auf phänotypisch selektierte Genotypen auf DNA- oder RNA-Ebene ermöglicht wird durch photochemische Markierung entsprechender Meßpositionen, indem entweder die lokale Position des zugehörigen Meßvolumens gekennzeichnet wird, vorzugsweise durch Einsatz des zur Phänotyp-Analyse eingesetzten Lasersystems unter Verwendung photochemisch aktivierbarer Substanzen zur optischen Kennzeichnung, oder indem durch photochemisch aktivierbare Reagenzien, die in löslicher oder oberflächen-gebundener Form mit dem Inhalt des selektierten Meßvolumens in Kontakt stehen und mit Strukturelementen des selektierten Genotyps- in eine stabile chemische Wechselwirkung treten können, insbesondere durch Psoralenderivate, und über eine spezifische Bindungsreaktion zu einem gekoppelten Strukturelement eine gezielte Abtrennung des selektierten Genotyps ermöglicht wird, insbesondere aktivierbare Substanzen, die mit Oligonukleotiden oder Biotin oder Avidin oder Streptavidin oder Oligopeptide oder Metallkomplexbildner oder Kombinationen davon verknüpft sind.

17. Verfahren gemäß mindestens einem der Ansprüche 1 bis 16, dadurch gekennzeichnet, daß in einem Screening pharmakologisch potentiell aktive Substanzen über die Wechselwirkung mit spezifischen Rezeptoren analysiert werden, indem die Wechselwirkung mit der Bindung eines lumineszenz-markierten Liganden an Rezeptoren untersucht wird, wobei sowohl natürliche Rezeptoren auf ihren Trägerzellen eingesetzt werden oder Rezeptoren auf rezeptorüberexprimierenden Trägerzellen oder Rezeptoren in Form exprimierter Moleküle oder Molekülkomplexe.

18. Verfahren gemäß mindestens einem der Ansprüche 1 bis 17, dadurch gekennzeichnet, daß bei der Analyse auf Wechselwirkung potentieller Wirkstoffe mit spezifischen Rezeptoren und einem bestimmten markierten physiologischen Liganden mindestens zwei Rezeptortypen eingesetzt werden, deren differentielles Bindungspotential über interferierende Bindung von Varianten und einem markierten natürlichen Liganden ermittelt wird.

19. Verfahren gemäß mindestens einem der Ansprüche 1 bis 18, dadurch gekennzeichnet, daß bei der Analyse der Wechselwirkung potentieller Wirkstoffe mit spezifischen Rezeptoren oder intrazellulären Substanzen von lebenden Zellen in einem Probenvolumen die Zellen mehrheitlich teilungsfähig oder stoffwechselaktiv bleiben.

20. Verfahren gemäß mindestens einem der Ansprüche 1 bis 19, dadurch gekennzeichnet, daß die potentiellen Wirkstoffe zum Nachweis von spezifischen Erkennungsreaktionen in komplexen natürlichen, synthetischen oder halbsynthetischen Gemischen vorliegen und diese vor der Analyse einer chromatographischen Trennung unterworfen werden, wobei vorzugsweise der in der spezifischen Erkennungsreaktion konkurrierende markierte Ligand den getrennten Fraktionen nach der chromatographischen Trennung zugesetzt wird und nachfolgend die Konkurrenzreaktion bei der spezifischen Wechselwirkung mit einem Zielmolekül analysiert wird.

21. Verfahren gemäß mindestens einem der Ansprüche 1 bis 20, dadurch gekennzeichnet, daß anstelle der Chromatographie-Einheit eine Probengabe-Einheit eingesetzt wird.

22. Verfahren gemäß mindestens einem der Ansprüche 1 bis 21, dadurch gekennzeichnet, daß mit mindestens einer markierten Nukleinsäure-Sonde die Art und/ oder Anzahl homolog komplementärer Nukleinsäuremoleküle in einem Probenvolumen über Hybridisierung analysiert wird, wobei die sondengekoppelten Farbstoffmarker entweder bevorzugt nicht mit einer möglichen Sekundärstruktur der Sonde in Wechselwirkung treten oder vorzugsweise zur spezifischen Interkalation fähig sind und dabei ihr spektrales Fluoreszenzverhalten ändern, insbesondere durch Verwendung substituierter Thiazol-orange Farbstoffe.

23. Verfahren gemäß Anspruch 22, dadurch gekennzeichnet, daß als markierte Sonden zum Nachweis von Nukleinsäuren vorzugsweise einzelsträngige Nukleinsäuren als Überschußkomponenten mit einer bestimmten Polarität ((+) oder (-)Strang) in Form synthetischer oder zellulärer RNAs oder DNAs eingesetzt werden.

24. Verfahren gemäß mindestens einem der Ansprüche 22 und/oder 23, dadurch gekennzeichnet, daß die Reaktionsgeschwindigkeit der Komplexbildung in der Hybridisierung beschleunigt wird, indem der Assay in einem Milieu durchgeführt wird, das chaotrope Salze enthält, und/oder organische Lösungsmittel, insbesondere Phenole.

25. Verfahren gemäß mindestens einem der Ansprüche 22 bis 24, dadurch gekennzeichnet, daß der Grad der Komplementarität der hybridisierenden Nukleinsäure über die thermodynamische Stabilität des Komplexes analysiert wird.

26. Verfahren gemäß mindestens einem der Ansprüche 22 bis 25, dadurch gekennzeichnet, daß der Nachweis einer komplementären Nukleinsäure über die Verwendung eines internen Standards quantifiziert wird, wobei der interne Standard sich in mindestens einer Punktmutation von der Sequenz der zu quantifizierenden Nukleinsäure unterscheidet und die Analyse bei einer Temperatur durchgeführt wird, bei der die unterschiedlichen Konformationen der Komplexe aus Sonde mit internem Standard und Sonde mit dem zu analysierenden Nukleinsäuremolekül sich in Hinblick auf die Translationsdiffusion und/oder die Rotationsdiffusion des Farbstoffmoleküls unterscheiden.

27. Verfahren gemäß mindestens einem der Ansprüche 1 bis 26, dadurch gekennzeichnet, daß die Sensitivität für eine Komplexbildung mit farbstoff-markiertem Liganden durch Erhöhung der effektiven Assoziationsgeschwindigkeit gesteigert wird, indem dem Reaktionsmedium spezifische Reaktanden zugesetzt werden, die ein effektives Reaktionsvolumen verkleinern und/oder die Hydrathülle um die Reaktanden verändern und/oder durch Phasentrennungen zur effektiven Konzentrierung der Reaktanden führen, insbesondere durch Einsatz von Polymeren und/oder Oligomeren, vorzugsweise Polyethylenglykolen, Dextranen, Proteinen, Polyvinylpyrrolidon, chaotropen Reagenzien, organischen Lösemitteln.

28. Verfahren gemäß mindestens einem der Ansprüche 1 bis 27, dadurch gekennzeichnet, daß der nachzuweisende Komplex durch mindestens einen weiteren Liganden, der bevorzugt im Überschuß zugegeben wird, zur Reaktion gebracht wird, um den Größen- und/oder Formunterschied zwischen Nachweisreagenz und nachzuweisendem Komplex mit dem Analyten zu erhöhen.

29. Verfahren gemäß mindestens einem der Ansprüche 1 bis 28, dadurch gekennzeichnet, daß die Spezifität der Nachweisreaktion dadurch vergrößert wird, daß die Bildung eines mindestens ternären Komplexes mit einer Kombination von Nachweisreagenzien, vorzugsweise im Überschuß gegenüber dem Analyten, durchgeführt wird, wobei mindestens ein Nachweisreagenz mit mindestens einem Farbstoffliganden markiert ist, dessen Emissionswellenlänge zur Anregung eines Fluoreszenzfarbstoffes an einem zweiten Nachweisreagenz geeignet ist, der mindestens als Monomer gekoppelt ist und dessen Fluoreszenz nachgewiesen wird.

30. Verfahren gemäß mindestens einem der Ansprüche 1 bis 29, dadurch gekennzeichnet, daß mindestens zwei Analyten nebeneinander in einer Probe in einem Assay analysiert werden durch Reaktion von zwei unterschiedlichen Nachweisreagenzien, die mit mindestens zwei voneinander unabhängigen und unterschiedlichen Farbstoffen markiert sind und entweder mit Licht unterschiedlicher Wellenlänge angeregt oder durch Licht unterschiedlicher Emissionswellenlänge unabhängig registriert werden.

31. Verfahren gemäß mindestens einem der Ansprüche 1 bis 30, dadurch gekennzeichnet, daß ein bestimmter Analyt gleichzeitig mit mindestens zwei Nachweisreagenzien komplexiert wird, die mit mindestens zwei optisch unterscheidbaren Fluoreszenzmolekülen markiert sind, wobei die gleichzeitige Komplexbildung entweder über die Bildung eines Energie-Transfer-Komplexes nachgewiesen wird und/ oder über die zeitliche Korrelation der Signale unterschiedlicher Wellenlänge der Anregung und/ oder Emission nachgewiesen wird.

32. Verfahren gemäß mindestens einem der Ansprüche 1 bis 31, dadurch gekennzeichnet, daß Proben auf Gemische von Vesikelstrukturen analysiert werden, insbesondere auf lipid-tragende Vesikel, insbesondere Vesikel vom Typ VLDL, LDL und/oder HDL, indem die Vesikel mit fluoreszenz-markierten Antikörpern angefärbt werden und/oder, indem fluorophore Markermoleküle spezifisch und fest in die Vesikel-strukturen inkorporiert werden.

33. Verfahren gemäß mindestens einem der Ansprüche 1 bis 32, dadurch gekennzeichnet, daß Produkte einer in vitro-Proteinbiosynthese auf spezifische Bindeeigenschaften oder enzymatische Eigenschaften analysiert werden.

34. Verfahren gemäß mindestens einem der Ansprüche 1 bis 33, dadurch gekennzeichnet, daß Oligo- oder Polymer-Verteilungen auf mittlere Translationsdiffusionskoeffizienten und/oder mittlere Rotations-diffusionskoeffizienten und ihre jeweiligen Halbwertsbreiten in der Verteilung analysiert werden.

35. Verfahren gemäß mindestens einem der Ansprüche 1 bis 34, dadurch gekennzeichnet, daß in einem immobilisiert strukturierten Probenvolumen, vorzugsweise bestehend aus fixierten Zellen oder Zellassoziaten, Gewebe, Organellen, Gelstrukturen und anderen 3D-kompartimentierten Probenvolumina, mehrere Meßvolumina bezüglich der Dynamik oder Reaktionskinetik bestimmter Moleküle erfaßt werden, wobei die Ortskoordinaten der Meßvolumina ebenfalls erfaßt werden und anschließend die Meßvolumina zu einem zwei- oder dreidimensionalen Bild zusammengesetzt werden.

36. Verfahren gemäß mindestens einem der Ansprüche 1 bis 35, dadurch gekennzeichnet, daß die Komplexbildung zwischen Rezeptormolekülen und möglicherweise in einer Probe vorhandenen Liganden in Kompetition mit farbstoff-markierten Liganden in Lösung oder unter Einbeziehung von festphasen-gekoppelten Molekülen oder unter Einbeziehung von zell-assoziierten Molekülen analysiert wird, wobei die biologischen Proben in Folien vorgelegt werden, so daß die zu analysierenden Meßvolumina in einem bevorzugten Abstand von maximal 1000 μm analysiert werden.

37. Verfahren gemäß mindestens einem der Ansprüche 1 bis 36, wobei Kit-Systeme verwendet werden, die für Assays zur Erfassung der Fluoreszenz-Depolarisation entwickelt wurden.

38. Verfahren gemäß mindestens einem der Ansprüche 1 bis 37 zur Detektion und/oder Identifizierung einzelner Mikroorganismen, insbesondere Bakterien, suspendierte Zellen oder Viren, wobei spezifische Wechselwirkungen oder enzymatische Aktivitäten fluoreszenz-markierter Zielmoleküle mit oberflächenexprimierten Strukturelementen natürlicher oder genetisch rekombinierter Membranproteine detektiert werden.

39. Verfahren gemäß Anspruch 1 zur Identifizierung von einem oder wenigen Molekülen in mehreren kleinen Volumeneinheiten, dadurch gekennzeichnet, daß mehrere kleine Volumeneinheiten als Meßvolumina aus einem gemeinsamen größeren Auregungsvolumen oder mehreren kleinen Anregungsvolumina analysiert werden und/oder zeitlich aufeinanderfolgend mit oder ohne Veränderung der Raumkoordinaten des Meßvolumens oder der Meßvolumina innerhalb der Probe analysiert werden.

40. Verfahren gemäß mindestens einem der Ansprüche 1 bis 39, dadurch gekennzeichnet, daß die Meßzeiten im Bereich von Millisekunden bis Sekunden liegen und insbesondere ≤ 500 ms betragen.

41. Verfahren gemäß mindestens einem der Ansprüche 1 bis 40, dadurch gekennzeichnet, daß eine Einrichtung (20) zur Vorfokussierung des Laserstrahls, welche eine Anordnung (23) zur Variation des Durchmessers des vorfokussierten Laserstrahls enthält, sowie eine innerhalb des Strahlengangs der Fluoreszenzstrahlung in der Bildebene konfokal zum Meßvolumen angeordnete Lochblende zur Begrenzung der Menge an von einer Detektorvorrichtung zu erfassenden Fluoreszenzstrahlung, wobei die Öffnungsgröße der Lochblende in Abhängigkeit des Abbildungsmaßstabes und der Größe des in der Bildebene abzubildenden Meßvolumens wählbar ist und ihr Durchmesser insbesondere ≤ 100 μm und vorzugsweise ≤ 20 bis 30 μm beträgt, oder eine die Lochblende ersetzende konfokale Anordnung des Detektors verwendet werden.

42. Verwendung eines Verfahrens gemäß Anspruch 35 zur zwei- oder dreidimensionalen Abbildung dynamischer Prozesse oder reaktionskinetischer Prozesse in einem dreidimensional strukturierten Probenvolumen, vorzugsweise bestehend aus fixierten Zellen oder Zellassoziaten, Geweben, Organellen, Gelstrukturen.

43. Verwendung des Verfahrens gemäß mindestens einem der Ansprüche 1 bis 37 zur in situ-Analytik von oberflächen-fixierten Präparaten, insbesondere von makromolekularen Komplexen wie Chromosomen, Transkriptionskomplexen, Translationskomplexen oder Zellen oder Gewebestrukturen mit dem Ziel der Lokalisation bestimmter Zielmoleküle und/oder der räumlichen Korrelation zu Referenzpositionen, vorzugsweise durch die Verwendung von mindestens zwei erfindungsgemäß markierten Liganden.

44. Verwendung des Verfahrens gemäß mindestens einem der Ansprüche 1 bis 37, zur Bestimmung der Reaktionseffizienz einer spezifischen Stoffumwandlung oder einer Bindungsreaktion eines farbstoff-liganden-tragenden Moleküls, indem zu bewertende Volumenelemente simultan oder sequentiell Reaktionsbedingungen ausgesetzt werden und nach definierter Reaktionsdauer eine Analyse der Reaktionsprodukte durchgeführt wird.

45. Verwendung des Verfahrens gemäß mindestens einem der Ansprüche 1 bis 37 zur qualitativen und/oder quantitativen Erfassung spezifischer Moleküle und/oder Molekülkomplexe und/oder der molekularen Umgebung der Moleküle und/oder Molekülkomplexe, insbesondere zur Messung und/oder Bewertung physiologisch aktiver Rezeptoren, insbesondere Oberflächenrezeptoren oder zur Bewertung rezeptor-bindender Liganden oder Ligandenkomplexe.

46. Verwendung des Verfahrens gemäß mindestens einem der Ansprüche 1 bis 37 als Alternative zu Radioimmunoassays oder Enzymimmunoassays, indem die kompetitive Bindung eines gesuchten Moleküls mit einem luminophor-tragenden Liganden an ein Rezeptormolekül gemessen wird.

47. Verwendung des Verfahrens gemäß mindestens einem der Ansprüche 1 bis 37 zur Analyse komplexer Molekülkollektive wie replikativer Moleküle, insbesondere Nukleinsäuren und davon abgeleitetete Proteine oder Peptide, komplexer chemischer Reaktionsprodukte, komplexer Systeme von Syntheseprodukten aus chemischen Reaktionen oder komplexer Gemische von Sekundärmetaboliten als zelluläre Syntheseprodukte.

**48.** Verwendung des Verfahrens gemäß mindestens einem der Ansprüche 1 bis 37, wobei die Analyse komplexer Substanzgemische on line mit einer analytischen Fraktionierung erfolgt.

**49.** Verwendung des Verfahrens gemäß mindestens einem der Ansprüche 1 bis 37 zur Bestimmung der Beweglichkeit von Molekülen, Molekül-Komplexen oder Zellen, insbesondere von Spermien, monozytären Zellen, kontraktilen Elementen, aktiv oder passiv transportierten Molekülen und Membranmolekülen.

**50.** Verwendung des Verfahrens gemäß Anspruch 38 zur Detektion und präparativen Gewinnung mindestens eines spezifischen Gens eines Mikroorganismus, dessen mindestens ein Genprodukt auf der inneren oder äußeren Membran oder Hülle präsentiert ist.

**51.** Verwendung des Verfahrens gemäß Anspruch 38 zur Funktionsbestimmung von Genprodukten definierter Gensegmente.

**52.** Vorrichtung zur Detektion von einem oder mehreren Molekülen, Molekülkomplexen und/oder Molekülbruchstücken, insbesondere in einer Verdünnung von ≤ 1 µM, in mindestens einem kleinen Meßvolumen von vorzugsweise ≤ $10^{-14}$ l das Teil eines Probenvolumens ist, mittels Fluoreszenz-Spektroskopie, mit

- einer Laserstrahl-Erzeugungsvorrichtung zur Erzeugung eines Laserstrahls mit einer ersten Wellenlänge,
- einer Fokussiervorrichtung zur Fokussierung des Laserstrahls auf das Meßvolumen, wobei der Laserstrahl im Meßvolumen derart stark gebündelt ist, daß er im wesentlichen ausschließlich das Meßvolumen erfaßt,
- einer Detektorvorrichtung zur Erfassung von infolge der Laserlichtanregung eines oder mehrerer Moleküle, Molekülkomplexe und/oder Molekülbruchstücke erzeugter Fluoreszenzstrahlung und
- einer innerhalb des Strahlengangs der Fluoreszenzstrahlung in der Bildebene konfokal zum Meßvolumen angeordneten Lochblende zur Begrenzung der Menge an von der Detektorvorrichtung zu erfassender Fluoreszenzstrahlung, wobei die Lochblende einen Durchmesser von insbesondere ≤ 100 µm und vorzugsweise ≤ 20 bis 30 µm aufweist, oder einer die Lochblende ersetzenden konjokalen Anordnung des Detektors, dadurch gekennzeichnet, daß das Meßvolumen um bis zu 1.000 µm von der Fokussiervorrichtung beabstandet ist.

**53.** Vorrichtung nach Anspruch 52, dadurch gekennzeichnet, daß bei einem Abbildungsmaßstab von 1 : 100, 1 : 60 oder 1 : 40 zwischen dem Meßvolumen und der Bildebene und bei einem Meßvolumen mit einer Ausdehnung von ≤ 0,1 µm in jeder Dimension die Lochblende einen Durchmesser von etwa 10 µm, 6 µm bzw. 4 µm aufweist.

**54.** Vorrichtung nach Anspruch 52 oder 53, dadurch gekennzeichnet, daß die Optik für den Laserstrahl und/oder die Optik für die Fluoreszenzstrahlung eine hohe numerische Apertur von vorzugsweise ≥ 1,2 N.A. aufweist.

**55.** Vorrichtung nach einem der Ansprüche 52 bis 54, dadurch gekennzeichnet, daß die Fokussiervorrichtung eine Vorfokussiervorrichtung zur Vorfokussierung des Laserstrahls und eine Fokussier-Objektivlinse zur Fokussierung des vorfokussierten Laserstrahls auf das Meßvolumen aufweist.

**56.** Vorrichtung nach Anspruch 55, dadurch gekennzeichnet, daß der Abstand zwischen der Fokussier-Objektivlinse und dem Meßvolumen bis zu 1.000 µm beträgt.

**57.** Vorrichtung nach Anspruch 55, dadurch gekennzeichnet, daß zwischen der Vorfokussiervorrichtung und der Fokussier-Objektivlinse ein halbdurchlässiger Spiegel zur Umlenkung des vorfokussierten Laserstrahls auf die Fokussier-Objektivlinse angeordnet ist.

**58.** Vorrichtung nach Anspruch 57, dadurch gekennzeichnet, daß die Lochblende auf der der Fokussier-Objektivlinse abgewandten Seite des halbdurchlässigen Spiegels angeordnet ist.

**59.** Vorrichtung nach einem der Ansprüche 52 bis 58, dadurch gekennzeichnet, daß die Detektorvorrichtung mindestens einen und vorzugsweise mehrere Detektoren zur Erfassung der Fluoreszenzstrahlung aufweist.

**60.** Vorrichtung nach einem der Ansprüche 52 bis 58, dadurch gekennzeichnet, daß zwischen der Lochblende und der Detektorvorrichtung mindestens ein optischer Filter und/oder mindestens eine Abbildungslinse und/oder mindestens ein halbdurchlässiger Spiegel und/oder mindestens ein Reflektionsspiegel angeordnet ist bzw. sind.

**61.** Vorrichtung nach einem der Ansprüche 52 bis 60, gekennzeichnet durch eine weitere Laserstrahl-Erzeugungsvorrichtung zur Erzeugung eines weiteren Laserstrahls mit einer von der ersten Wellenlänge verschiedenen Wellenlänge, eine weitere Fokussiervorrichtung zur Fokussierung des weiteren Laserstrahls auf das Meßvolumen mit einer derart starken Bündelung, daß der weitere Laserstrahl im wesentlichen ausschließlich das Meßvolumen erfaßt, eine weitere Detektorvorrichtung zur Erfassung von infolge der Anregung eines oder mehrerer Moleküle, Molekülkomplexe und/oder Molekülbruchstücke erzeugter Fluoreszenzstrahlung und eine Korrelatoreinheit, die mit den beiden Detektorvorrichtungen verbunden ist.

62. Vorrichtung nach Anspruch 61, gekennzeichnet durch

   - einen T-förmigen Träger mit einem ersten Tragarm (65) und einem mit diesem verbundenen und quer zum ersten Tragarm (65) verlaufenden zweiten Tragarm (74),
   - an den stirnseitigen Enden des zweiten Tragarms (74) angeordneten Halterungsvorrichtungen (83, 84) zum axialen Führen und Halten von optischen Elementen (Linse, Filter, Spiegel, Detektor) für die beiden Laserstrahlen und die beiden Fluoreszenzstrahlungen, wobei die fokussierten Laserstrahlen auf einen Objektträger auftreffen, der das Meßvolumen trägt und vorzugsweise in der Mitte zwischen den beiden stirnseitigen Enden des zweiten Tragarms (74) von diesen gehalten lösbar angeordnet ist,
   - wobei die beiden Halterungsvorrichtungen (83, 84) synchron relativ zu den ihnen jeweils zugeordneten stirnseitigen Enden des zweiten Tragarms (74) in Richtung von dessen Längserstreckung bewegbar sind, die beiden Halterungsvorrichtungen (83,84) sich in Richtung der Erstreckung des ersten Tragarms (65) erstrecken und die beiden Laserstrahlen über Umlenkspiegel und/oder halbdurchlässige Spiegel (66,67,72,73) über optische Durchlässe (Öffnungen 69) aus dem Innern des ersten Tragarms (65) heraus auf die an den Halterungsvorrichtungen (83,84) gehaltenen optischen Elemente für die Laserstrahlen umlenkbar sind.

63. Vorrichtung nach Anspruch 62, dadurch gekennzeichnet, daß die optischen Elemente für die Laserstrahlen an den einander zugewandten Innenseiten der beiden Halterungsvorrichtungen (83,84) und die optischen Elemente für die Fluoreszenzstrahlung an den einander abgewandten Außenseiten der beiden Halterungsvorrichtungen (83,84) angeordnet sind.

64. Vorrichtung nach Anspruch 62 oder 63, dadurch gekennzeichnet, daß zur Kompensation eines Offsets der Brennpunkte der Fokussier-Objektivlinsen eine von diesen von einem insbesondere piezoelektrisch betriebenen Stellglied positionierbar ist.

65. Vorrichtung nach Anspruch 52 mit einer an sich bekannten Mikroskopoptik für die Laserfokussierung zur Fluoreszenzanregung in einem kleinen Meßvolumen einer sehr verdünnten Lösung und zur konfokalen Abbildung des emittierten Fluoreszenzlichtes für eine nachfolgende Messung, dadurch gekennzeichnet, daß die Mikroskopoptik mindestens eine Optik hoher numerischer Apertur von vorzugsweise $\geq 1,2$ N.A. enthält, die Lichtmenge durch eine konfokal angeordnete Lochblende in der Bildebene nach dem Ausgangsobjektiv begrenzt wird und das Meßvolumen in einem Abstand bis zu 1000 µm vom Ausgangsobjektiv entfernt positioniert ist.

66. Vorrichtung nach Anspruch 65 zur Erzeugung einer beugungslimitierenden Fokussierung eines Laserstrahls mit einer meßsignalerzeugenden Einheit und einer Beobachtungseinheit, wobei auf der meßsignalerzeugenden Seite eine Einrichtung (20) zur Vorfokussierung eines Laserstrahls (21), ein dichroitischer Spiegel (30) zur Ablenkung des Laserstrahls (21) und eine weitere Linse (40) zur Fokussierung des Laserstrahls auf das Meßvolumen vorgesehen sind und wobei die Beobachtungseinheit Photonenzähleinrichtungen (52), eine Korrelatoreinrichtung (71), eine Mehrkanal-Scaler-Einrichtung (72) aufweist und das Meßsignal gegebenenfalls computergestützt bearbeitet und/oder ausgewertet wird.

67. Vorrichtung nach Anspruch 66, wobei die Einrichtung (20) zur Vorfokussierung mit einer Linse (22) und einer Mikroskop-Optik entsprechenden Anordnung (23) versehen ist, wobei ein kollimierter Laserstrahl (21) durch die Linse (22) auf die Bildebene $B_1$ fokussiert und durch die Anordnung (23) auf die Bildebene $B_2$ (Zwischenbild) fokussiert wird.

68. Vorrichtung nach Anspruch 67, wobei die Anordnung (23) mit einer wechselbaren Linsenanordnung versehen ist zur Variation des Durchmessers des vorfokussierten Laserstrahls (21).

69. Vorrichtung nach mindestens einem der Ansprüche 66 bis 68, wobei eine Detektionseinheit aus zwei Detektoren (52,53) gebildet wird, mit Strahlenteiler (60), der das aus der Probe emittierte Licht (55) auf die Detektoren (52,53) verteilt.

70. Vorrichtung nach Anspruch 69, wobei der emittierte Lichtstrahl (55) vor den Detektoren (52,53) jeweils Abbildungslinsen (56,57) und Filterelemente (58,59) passiert.

71. Vorrichtung nach mindestens einem der Ansprüche 66 bis 70, wobei die Detektoren (52,53) Licht unterschiedlicher Wellenlängen detektieren.

**72.** Vorrichtung nach mindestens einem der Ansprüche 66 bis 71, wobei ein oder mehrere Detektorelemente gegebenenfalls in Form eines Detektor-Arrays in der Bildebene plaziert werden.

**73.** Vorrichtung nach mindestens einem der Ansprüche 66 bis 72, wobei im Strahlengang (55) eine Lochblende (50) angeordnet ist.

**74.** Vorrichtung nach mindestens einem der Ansprüche 65 bis 73, dadurch gekennzeichnet, daß zwei Objektive verwendet werden, die einen Winkel > 90° zueinander bilden.

**75.** Vorrichtung gemäß mindestens einem der Ansprüche 65 bis 74, dadurch gekennzeichnet, daß als Lichtquelle kontinuierliche Laser mit emittierenden Wellenlängen > 200 nm eingesetzt werden, insbesondere Argon- , Krypton-, Helium-Neon-, Helium-Cadmium-Laser oder hochfrequent gepulste Laser $\geq$ 20 MHz mit einer Leistung $\geq$ 0,5 mW.

**76.** Vorrichtung gemäß mindestens einem der Ansprüche 65 bis 75, dadurch gekennzeichnet, daß Einrichtungen für die Einzelphotonenzählung, wie Lawinendiodendetektoren, im Strahlengang des emittierten Lichtes angeordnet sind, vorzugsweise in der Ebene der Lochblende, zur Registrierung des emittierten Lichtes, und wobei die Signalanalyse durch einen digitalen Korrelator oder Vielkanalzähler erfolgt.

**77.** Vorrichtung gemäß mindestens einem der Ansprüche 65 bis 76, dadurch gekennzeichnet, daß das Meßvolumen in einem Probenvolumen zwischen zwei Kapillaren fixiert wird, wobei die Kapillaren auf der Außenseite mit einer chemisch inerten, leitfähigen Beschichtung versehen sind, insbesondere einer Metallbedampfung, insbesondere einer Goldbedampfung auf einem Chromgrund und wobei die leitfähigen Beschichtungen mit einem rechner-geregelten gleichgerichteten Feld oder einem elektrischen Wechselfeld verbunden sind und über das Meßvolumen leitend miteinander verbunden sind.

**78.** Vorrichtung gemäß mindestens einem der Ansprüche 65 bis 77, dadurch gekennzeichnet, daß zwei einander gegenüberstehende Mikroskopoptiken das Meßvolumen einschließen.

**79.** Vorrichtung gemäß mindestens einem der Ansprüche 65 bis 78, dadurch gekennzeichnet, daß eine elektrophoretische Zusatzvorrichtung vorgesehen ist, die mindestens eine Elektrophoresezelle mit mindestens einer Öffnung für die Zugabe/Entnahme der zu analysierenden Probe und/oder einer Waschlösung, eine Wand-Elektrode, eine Ring-Elektrode, eine Neher-Kapillare, eine Elektrode an der Kapillarspitze und einen Tropfen-Austritt aufweist.

**80.** Vorrichtung gemäß Anspruch 79, gekennzeichnet durch eine elektrische Falle mit einem Quadrupol-Element mit mindestens vier Elektroden, vorzugsweise Nadel-Elektroden oder aufgedampften Elektroden in einer Wafer-Konfiguration, wobei vorzugsweise ein Loch < 1 mm umsäumt wird, vorzugsweise in Kombination mit mindestens zwei weiteren Elektroden in mindestens einer Sextupol-Anordnung, wobei vorzugsweise das Quadrupol-Element mit einer Wechselspannung versorgt wird und die Sextupol-Elektroden mit einer Gleichspannung angesteuert werden, die der Ladung der zu analysierenden Moleküle entgegengerichtet ist.

**81.** Vorrichtung gemäß mindestens einem der Ansprüche 79 und 80, dadurch gekennzeichnet, daß die Folie zur Aufnahme der Proben durch eine molekulare Derivatisierung spezifische Bindungseigenschaften für Moleküle aufweist, insbesondere in Form von Ionenaustauscher-Liganden oder Affinitätsliganden, insbesondere Oligopeptide, Polypeptide, Proteine, Antikörper oder Chelatbildner, insbesondere Iminodiessigsäure- oder Nitrilotriessigsäure-Liganden, insbesondere Folien, die ortsspezifisch unterschiedliche Molekülstrukturen unterschiedlicher Bindungsspezifität als Liganden aufweisen.

**82.** Vorrichtung gemäß mindestens einem der Ansprüche 79 bis 81, dadurch gekennzeichnet, daß das Probenvolumen auf einer zwei- oder dreidimensional steuerbaren Probenaufnahme-Vorrichtung fixiert ist, wobei die Probe vorzugsweise durch den Einsatz zwei- oder dreidimensionaler Piezo-Triebe in bestimmten Raumkoordinaten relativ zur Meßoptik fixierbar ist.

**83.** Vorrichtung gemäß mindestens einem der Ansprüche 79 bis 82, dadurch gekennzeichnet, daß die Vorrichtung mit einer Einrichtung ausgestattet ist, die den Laserstrahl in definierten Koordinaten ablenkt und/ oder die Position der Fokussierung definiert festlegen kann.

**84.** Vorrichtung nach Anspruch 52 unter Verwendung eines Multiarray-Detektors mit einer Optik zur Ausleuchtung eines alle oder mehrere Meßvolumina umfassenden Anregungsvolumens oder einem optischen System zur parallelen Ausleuchtung mehrerer Anregungsvolumina.

**85.** Vorrichtung nach mindestens einem der Ansprüche 52 bis 84 mit einer Einrichtung (20) zur Vorfokussierung des Laserstrahls, welche eine Anordnung (23) zur Variation des Durchmessers des vorfokussierten Laserstrahls enthält und wobei die Öffnungsgröße der Lochblende in Abhängigkeit des Abbildungsmaßstabes und der Größe des in der Bildebene abzubildenden Meßvolumens wählbar ist.

86. Vorrichtung nach mindestens einem der Ansprüche 52 bis 85 mit zwei Detektoren oder Detektorelementen zur Erfassung von infolge der Laserlichtanregung eines oder mehrerer Moleküle, Molekülkomplexe und/oder Molekülbruchstücke erzeugter Fluoreszenzstrahlung, wobei die Detektoren oder Detektorelemente jeweils Licht unterschiedlicher Wellenlänge detektieren.

87. Vorrichtung nach Anspruch 86 mit einer Einrichtung zur zeitlichen Kreuzkorrelation der registrierten Fluoreszenzsignale.

**Claims**

1. A method for identifying one or a small number of molecules in a measuring volume which is part of a sample volume, especially in a dilution of $\leq 1$ $\mu$M, using laser excited correlation fluorescence spectroscopy (FCS) with short diffusion paths of the molecules to be analyzed, wherein the measurement is performed in at least one small measuring volume of preferably $\leq 10^{-14}$ l or in a plurality of such measuring volumes wihtin the sample volume, by determining material-specific parameters which are determined by luminescence measurements of molecules to be examined, characterized in that at least one measuring volume is arranged at an operating distance of $\leq 1000$ $\mu$m from a focusing means, said focusing means either being directly in contact with the sample volume, or the sample volume being separated from the focusing means by an optically transparent sheet.

2. The method according to claim 1, in which translational diffusion coefficients, rotational diffusion coefficients, excitation and emission wavelengths, the life of the respective excited state of a luminescent substituent, or combinations of these measuring quantities are determined as said material-specific parameters.

3. The method according to at least one of claims 1 and 2, characterized in that the space coordinates of the measuring volume are changed with respect to the space coordinates of the sample volume during analysis in order to analyze stationary or very slowly diffusing luminescent complexes by moving the sample volume with respect to the measuring volume and/or by changing the position of the laser beam and/or the position of the focus of the detecting optics with time wherein the measured translational diffusion coefficients correspond to a combination of the actual translational diffusion coefficients and the superimposed relative positional change of the coordinates of the measuring volume.

4. The method according to claim 3, characterized in that the change of the coordinates of the measuring volume with time defines an apparent diffusion time of a stationary or very slowly diffusing luminescent complex.

5. The method according to any of claims 1 to 4, characterized in that the luminescence of a substituent is directly interacting with the molecule to be determined wherein the substituent is a luminophorous ligand or a ligand complex the spectroscopic parameters of which are correlated with the type or function of the molecule to be determined.

6. The method according to at least one of claims 1 to 5 wherein the functional evaluation through the measurement of translational diffusion and/or rotational diffusion with evaluation of the correlation is performed particularly by determining the absolute number of molecules present and/or the variation thereof with time and/or by determining the specific concentrations of structurally distinct ligands and/or the ligand complexes and, derived therefrom, through the thermodynamic binding constants of specific interactions and/or the rate constants of specific recognition reactions or enzymatic processes involving ligand-coupled molecules.

7. The method according to at least one of claims 1 to 6 wherein the measured molecules or molecular complexes are ionic or non-ionic in nature.

8. The method according to at least one of claims 1 to 7, characterized in that the measurement takes place within a superimposed electric or magnetic field which is constant or varying with time.

9. The method according to claim 8, wherein the ionic molecules or molecular complexes of a sample volume are forced to pass through the measuring volume and/or to shortly remain in the measuring volume by means of a rectified electric field or an alternating electric field.

10. The method according to at least one of claims 8 and/or 9, characterized in that if an electric molecular trap is used, the labeled ligand bears a smaller charge than or a charge opposite to that of the target molecule to be complexed.

11. The method according to at least one of claims 1 to 10, characterized in that the analysis is coupled with an electrophoretic separation method to spatially separate free dye-labeled ligands, especially nucleic acid probes, from specifically complexed ligands, especially nucleic acid hybrides wherein ligands with a multitude of coupled fluorescent dyes are preferably employed.

12. The method according to at least one of claims 1 to 11, characterized in that the complexes of labeled test reagent and analyte and possibly free analyte to be detected are preconcentrated in a first electrophoresis step and the complexes to be detected are transported into the measuring volume in a second electrophoresis step.

13. The method according to at least one of claims 1 to 12, characterized in that the luminophorous ligand and/or the luminophorous ligand complex have an extinction coefficient of $\geq 30,000$ with a quantum yield of $\geq 0.1$ and/or one or more dye oligomers are used as the chromophorous ligand to shorten the effective measuring time.

14. The method according to at least one of claims 1 to 13, characterized in that defined molecules and/or equilibrium mixtures of molecules and/or kinetic reaction processes are analyzed in at least one sample volume wherein in the case of several sample volumes said volumes are provided on a two-dimensional support in a two-dimensional arrangement, in particular on a membrane or sheet and/or wafer surface, or in a linear way, preferably in a capillary system, wherein the sample volumes are preferably present in or on natural cells or cells modified in vitro and/or in artificially prepared vesicular structures, in particular vesicles based on liposomes or based on soluble polymers having vesicle forming properties.

15. The method according to at least one of claims 1 to 14, characterized in that the individual sample volumes are generated by using a microdispensing system.

16. The method according to at least one of claims 1 to 15, characterized in that the access to phenotypically selected genotypes on DNA or RNA level is made possible by photochemical labeling of corresponding measuring positions, either by marking the local position of the respective measuring volume, preferably by employing the laser system used for the phenotype analysis using photochemically activatable substances for optical marking, or by enabling selective separation of the selected genotype by photochemically activatable reagents which are in contact with the contents of the selected measuring volume in a soluble or surface-bound form and can enter a stable chemical interaction with structural elements of the selected genotype, especially by psoralen derivatives, and through a specific binding reaction to a coupled structural element, in particular activatable substances which are linked to oligonucleotides or biotin or avidin or streptavidin or oligopeptides or metal complexing agents or combinations thereof.

17. The method according to at least one of claims 1 to 16, characterized in that potentially pharmacologically active substances are analyzed in a screening procedure through their interaction with specific receptors by examining said interaction through the binding of a luminescence labeled ligand to receptors wherein natural receptors on their carrier cells as well as receptors on receptor-overex-pressing carrier cells or receptors in the form of expressed molecules or molecular complexes are used.

18. The method according to at least one of claims 1 to 17, characterized in that in the analysis of interaction of potentially active substances with specific receptors and a particular labeled physiological ligand at least two types of receptors are employed whose differential binding potential is determined through interfering binding of variants and a labeled natural ligand.

19. The method according to at least one of claims 1 to 18, characterized in that in the analysis of interaction of potentially active substances with specific receptors or intracellular substances of living cells within a sample volume the major part of the cells remain capable of dividing or metabolically active.

20. The method according to at least one of claims 1 to 19, characterized in that for the detection of specific recognition reactions the potentially active substances are present in complex natural, synthetic or semisynthetic mixtures and said mixtures are subjected to chromatographic separation prior to analysis wherein the labeled ligand competing in the specific recognition reaction preferably is added to the separated fractions after the chromatographic separation and subsequently the competition reaction is analyzed in the specific interaction with a target molecule.

21. The method according to at least one of claims 1 to 20, characterized in that a sample dispensing unit is employed instead of the chromatographic unit.

22. The method according to at least one of claims 1 to 21, characterized in that the type and/or number of homologously complementary nucleic acid molecules in a sample volume is analyzed with at least one labeled nucleic acid probe through hybridization wherein the probe-coupled dye labels either preferably will not interact with a possible secondary structure of the probe or are preferably capable of specific intercalation and thereby change their spectral fluorescence behavior, especially by using substituted thiazole orange dyes.

23. The method according to claim 22, characterized in that single-stranded nucleic acids as excess components with a particular polarity ((+) or (-) strand) in the form of synthetic or cellular RNAs or DNAs are preferably used as said labeled probes for the detection of nucleic acids.

24. The method according to at least one of claims 22 and/or 23, characterized in that the reaction rate of complex formation in the hybridization is accelerated by performing the assay in a medium containing chaotropic salts and/or organic solvents, in particular phenols.

25. The method according to at least one of claims 22 to 24, characterized in that the degree of complementarity of the hybridized nucleic acid is analyzed through the thermodynamic stability of the complex.

26. The method according to at least one of claims 22 to 25, characterized in that the detection of a complementary nucleic acid is quantified through using an internal standard, said internal standard differing from the sequence of the nucleic acid to be quantified in at least one point mutation and the analysis being performed at a temperature at which the different conformations of the complexes of the probe with the internal standard and of the probe with the nucleic acid molecule to be analyzed are distinct with respect to translational diffusion and/or rotational diffusion of the dye molecule.

27. The method according to at least one of claims 1 to 26, characterized in that the sensitivity for complex formation with the dye-labeled ligand is enhanced by an increase of the effective association rate by adding to the reaction medium specific reactants which reduce an effective reaction volume and/or change the hydration shell around the reactants and/or result in effective concentration of the reactants by phase separations, in particular by employing polymers and/or oligomers, preferably polyethylene glycols, dextranes, proteins, polyvinylpyrrolidone, chaotropic reagents, organic solvents.

28. The method according to at least one of claims 1 to 27, characterized in that the complex to be detected is made to react by at least one additional ligand which is preferably added in excess in order to increase the difference in size and/or shape between the test reagent and the complex with the analyte to be detected.

29. The method according to at least one of claims 1 to 28, characterized in that the specificity of the detecting reaction is increased by performing the formation of an at least ternary complex with a combination of test reagents, preferably in excess with respect to the analyte, wherein at least one test reagent is labeled with at least one dye ligand the emission wavelength of which is apt for excitation of a fluorescent dye at a second test reagent which dye is coupled at least as a monomer and the fluorescence of which dye is detected.

30. The method according to at least one of claims 1 to 29, characterized in that at least two analytes are analyzed in one sample together in one assay through the reaction of two different test reagents which are labeled with at least two independent and different dyes and are either excited with light of different wavelengths or independently detected by light of different emission wavelengths.

31. The method according to at least one of claims 1 to 30, characterized in that a particular analyte is complexed with at least two test reagents simultaneously which are labeled with at least two optically distinct fluorescent molecules wherein the simultaneous complex formation is detected either through the formation of an energy transfer complex and/or through the correlation in time of the signals having different wavelengths of excitation and/or emission.

32. The method according to at least one of claims 1 to 31, characterized in that samples are analyzed for mixtures of vesicular structures, in particular for lipid bearing vesicles, especially vesicles of the VLDL, LDL and/or HDL types, by staining the vesicles with fluorescence labeled antibodies and/or by incorporating fluorophorous label molecules specifically and permanently into the vesicular structures.

33. The method according to at least one of claims 1 to 32, characterized in that products of an in vitro protein biosynthesis are analyzed for specific binding properties or enzyme properties.

34. The method according to at least one of claims 1 to 33, characterized in that oligomer or polymer distributions are analyzed for average translational diffusion coefficients and/or average rotational diffusion coefficients and their respective half widths in the distribution.

35. The method according to at least one of claims 1 to 34, characterized in that in a sample volume with immobilized structure, preferably consisting of fixed cells or cell associates, tissues, organells, gel structures and other three-dimensionally compartmented sample volumes, several measuring volumes are covered with respect to dynamics or reaction kinetics of particular molecules wherein the positional coordinates of the measuring volumes are considered as well and the measuring volumes are subsequently combined to a two- or three-dimensional image.

36. The method according to at least one of claims 1 to 35, characterized in that the complex formation between receptor molecules and the ligands which are possibly present in a sample is analyzed in competition with dye-labeled ligands in solution or involving solid phase coupled molecules or involving cell-associated molecules, the biological samples being provided in sheets so that the measuring volumes to be analyzed are analyzed in a preferred distance of no greater than 1000 μm.

37. The method according to at least one of claims 1 to 36, wherein kit systems are used which have been developed for assays for the detection of fluorescence depolarization.

38. The method according to at least one of claims 1 to 37 for the detection and/or identification of single microorganisms, in particular bacteria, suspensed cells or viruses, wherein specific interactions or enzymatic activities of fluorescence labeled target molecules with surface-expressed structural elements of natural or genetically recombined membrane proteins are detected.

39. The method according to claim 1 for the identification of one or more molecules in several small volume units, characterized in that several small volume units are analyzed as the measuring volumes out of a common larger excitation volume or several small excitation volumes and/or are analyzed successively with or without changing the space coordinates of the measuring volume or volumes within the sample.

40. The method according to at least one of claims 1 to 39, characterized in that the measuring times are in the range of from milliseconds to seconds and are, in particular, ≤ 500 ms.

41. The method according to at least one of claims 1 to 40, characterized by using a means (20) for prefocusing the laser beam containing an array (23) for varying the diameter of the prefocused laser beam, and a pinhole aperture arranged in the image plane within the beam path of the fluorescent radiation confocally with respect to the measuring volume to limit the quantity of fluorescent radiation to be detected by the detector means wherein the aperture of said pinhole can be selected depending on the image scale and the size of the measuring volume to be imaged in the image plane and its diameter is, in particular, ≤ 100 μm and preferably ≤ 20 to 30 μm, or a confocal arrangement of the detector replacing said pinhole aperture.

42. Use of the method according to claim 35 for the two- or three-dimensional imaging of dynamic processes or reaction kinetic processes in a three-dimensionally structured sample volume, preferably consisting of fixed cells or cell associates, tissues, organells, gel structures.

43. Use of the method according to at least one of claims 1 to 37 for in situ analysis of surface fixed preparations, in particular macromolecular complexes such as chromosomes, transcription complexes, translation complexes, or cells or tissue structures with the object of localizing particular target molecules and/or of spatial correlation to reference positions, preferably by using at least two ligands labeled according to the invention.

44. Use of the method according to at least one of claims 1 to 37 for the determination of the reaction efficiency of a specific material conversion or a binding reaction of a dye/ligand bearing molecule by simultaneously or successively exposing to reaction conditions volume elements to be evaluated and by performing an analysis of the reaction products after a defined reaction period.

45. Use of the method according to at least one of claims 1 to 37 for qualitatively and/or quantitatively covering specific molecules and/or molecular complexes and/or the molecular environment of the molecules and/or molecular complexes, in particular for the measurement and/or evaluation of physiologically active receptors, especially surface receptors, or for the evaluation of receptor binding ligands or ligand complexes.

46. Use of the method according to at least one of claims 1 to 37 as an alternative for radioimmunoassays or enzyme immunoassays by measuring the competitive binding to a receptor molecule of a sought molecule with a luminophor bearing ligand.

47. Use of the method according to at least one of claims 1 to 37 for the analysis of complex molecular collectives such as replicative molecules, in particular nucleic acids and proteins or peptides derived therefrom, complex chemical reaction products, complex systems of products synthesized in chemical reactions, or complex mixtures of secondary metabolites as products of cellular synthesis.

48. Use of the method according to at least one of claims 1 to 37 wherein the analysis of complex mixtures of substances is performed on line with analytical fractionation.

49. Use of the method according to at least one of claims 1 to 37 for the determination of the mobilities of molecules, molecular complexes, or cells, in particular of spermatozoa, monocytes, contractile elements, actively or passively transported molecules and membrane molecules.

50. Use of the method according to claim 38 for the detection and preparative recovering of at least one specific gene of a microorganism whose at least one gene product is presented at the inner or outer membrane or envelope.

51. Use of the method according to claim 38 for the determination of the functions of gene products of defined gene segments.

52. A device for the detection of one or more molecules, molecular complexes and/or molecular fragments, in particular in a dilution of $\leq 1 \mu M$, in at least one small measuring volume of preferably $\leq 10^{-14}$ l which is part of a sample volume by means of fluorescence spectroscopy which device comprises

- a laser beam generation means for the generation of a laser beam having a first wavelength,
- a focusing means for the focusation of said laser beam onto the measuring volume wherein the laser beam is such highly focused within the measuring volume that in essence it exclusively covers the measuring volume,
- a detector means for detecting fluorescent radiation generated due to the laser light excitation of one or more molecules, molecular complexes and/or molecular fragments, and
- a pinhole aperture arranged in the image plane within the beam path of the fluorescent radiation confocally with respect to the measuring volume to limit the quantity of fluorescent radiation to be detected by the detector means wherein said pinhole aperture has a diameter of especially 5 100 $\mu m$ and preferably < 20 to 30 $\mu m$, or a confocal arrangement of the detector replacing said pinhole aperture, characterized in that said measuring volume is arranged at a distance of up to 1000 $\mu m$ from said focusing means.

53. The device according to claim 52, characterized in that with an image scale of 1 : 100, 1 : 60, or 1 : 40 between the measuring volume and the image plane and with a measuring volume having dimensions of $\leq 0.1 \mu m$ in each direction, said pinhole aperture has a diameter of about 10 $\mu m$, 6 $\mu m$, or 4 $\mu m$, respectively.

54. The device according to claim 52 or 53, characterized in that the optics for the laser beam and/or the optics for the fluorescent radiation has a high numerical aperture of preferably $\geq 1.2$ N.A.

55. The device according to any of claims 52 to 54, characterized in that said focusing means comprises a prefocusing means to prefocus the laser beam and a focusing objective lens to focus the prefocused laser beam onto the measuring volume.

56. The device according to claim 55, characterized in that the distance between said focusing objective lens and the measuring volume is up to 1000 $\mu m$.

57. The device according to claim 55, characterized in that a semitransparent mirror is arranged between said prefocusing means and said focusing objective lens to deflect the prefocused laser beam onto the focusing objective lens.

58. The device according to claim 57, characterized in that said pinhole aperture is arranged on the side of the semitransparent mirror facing away from the focusing objective lens.

59. The device according to any of claims 52 to 58, characterized in that said detector means comprises at least one and preferably more detectors for detecting the fluorescent radiation.

60. The device according to any of claims 52 to 58, characterized in that between said pinhole aperture and said detector means, there is arranged at least one optical filter and/or at least one imaging lens and/or at least one semitransparent mirror and/or at least one reflecting mirror.

61. The device according to any of claims 52 to 60, characterized by an additional laser beam generation means for the generation of an additional laser beam having a wavelength different from the first wavelength, an additional focusing means for focusing said additional laser beam onto the measuring volume in such high an extent that the additional laser beam in essence exclusively covers the measuring volume, an additional detector means for the detection of fluorescent radiation generated due to the excitation of one or more molecules, molecular complexes and/or molecular fragments, and a correlator unit which is connected with the two detector means.

62. The device according to claim 61, characterized by

- a T-shaped support with a first supporting arm (65) and a second supporting arm (74) connected therewith and running perpendicular to the first supporting arm (65),

- holding means (83, 84) arranged at the ends at the faces of the second supporting arm (74) for axial guiding and holding of optical elements (lens, filter, mirror, detector) for the two laser beams and the two fluorescent radiations wherein the focused laser beams impinge on a glass slide bearing the measuring volume and being separably arranged preferably halfway between the two ends at the faces of the second supporting arm (74) and held by them,

- wherein the two holding means (83, 84) can be moved synchronously relative to their respective ends at the faces of the second supporting arm (74) in the direction of the longitudinal extension thereof, the two holding means (83, 84) are extended in the direction of extension of the first supporting arm (65), and the two laser beams can be deflected by deflecting mirrors and/or semitransparent mirrors (66, 67, 72, 73) through optical openings (69) out of the inside of the first supporting arm (65) onto the optical elements for the laser beams held at the holding means (83, 84).

63. The device according to claim 62, characterized in that the optical elements for the laser beams are arranged at the inner sides, facing each other, of the two holding means (83, 84) and the optical elements for the fluorescent radiation are arranged at the outer sides, facing away from each other, of the two holding means (83, 84).

64. The device according to claim 62 or 63, characterized in that one of the focusing objective lenses can be positioned by a positioning element which is in particular piezoelectrically driven for compensation of an offset of the focuses of said focusing objective lenses.

65. The device according to claims 52 with microscope optics known per se for laser focusing for the excitation of fluorescence in a small measuring volume of a very dilute solution and for confocal imaging of the emitted fluorescent light for subsequent measurement, characterized in that said microscope optics contains at least one system of optics with high numerical aperture of preferably $\geq 1.2$ N.A., the light quantity is limited by a confocally arranged pinhole aperture in the image plane behind the initial objective, and the measuring volume is positioned at a distance of up to 1000 $\mu$m from the initial objective.

66. The device according to claim 65 for the generation of diffraction limiting focusing of a laser beam with a unit generating the measuring signal and an observation unit wherein at the side of generation of the measuring signal a means (20) for prefocusing a laser beam (21), a dichroitic mirror (30) for deflecting said laser beam (21), and an additional lens (40) for focusing the laser beam onto the measuring volume are provided and wherein the observation unit comprises photon counting means (52), a correlation means (71), and a multichannel scaler means (72), and the measuring signal is optionally processed and/or evaluated with the aid of a computer.

67. The device according to claim 66, wherein said means (20) for prefocusing is provided with a lens (22) and an array (23) corresponding to microscope optics wherein a collimated laser beam (21) is focused on image plane $B_1$ by lens (22) and on image plane $B_2$ (first image) by said array (23).

68. The device according to claim 67, wherein said array (23) is provided with an exchangeable arrangement of lenses for the variation of the diameter of the prefocused laser beam (21).

69. The device according to at least one of claims 66 to 68, wherein a detection unit is constituted by two detectors (52, 53) with a beam splitter (60) partitioning the light (55) emitted from the sample to detectors (52, 53).

70. The device according to claim 69, wherein the emitted light beam (55) passes imaging lenses (56, 57) and filter elements (58, 59) prior to each of the detectors (52, 53).

71. The device according to at least one of claims 66 to 70, wherein said detectors (52, 53) detect light of different wavelengths.

72. The device according to at least one of claims 66 to 71, wherein one or more detector elements are placed in the image plane optionally in the form of a detector array.

73. The device according to at least one of claims 66 to 72, wherein a pinhole aperture (50) is arranged in the beam path (55).

74. The device according to at least one of claims 65 to 73, characterized in that two objectives are used which form an angle of > 90° between them.

75. The device according to at least one of claims 65 to 74, characterized in that continuous lasers having emitted wavelengths of > 200 nm are used as the light source, in particular argon, krypton, helium-neon, helium-cadmium lasers or lasers pulsed with high frequency of $\geq 20$ MHz with a power of $\geq 0.5$ mW.

76. The device according to at least one of claims 65 to 75, characterized in that means for single photon counting, such as avalanche diode detectors, are arranged in the beam path of the emitted light, preferably in the plane of the pinhole aperture, for detecting the emitted light wherein signal analysis is performed by a digital correlator or multichannel counter.

77. The device according to at least one of claims 65 to 76, characterized in that the measuring volume is fixed in a sample volume between two capillaries, said capillaries being provided with a chemically inert conductive coating at the outside thereof, in particular a metal vapor deposited coating, especially gold vapor deposited coating on a chromium base, wherein the conductive coatings are connected with a computer controlled rectified field or an alternating electric field and are conductively connected with each other through the measuring volume.

78. The device according to at least one of claims 65 to 77, characterized in that two microscope optics facing each other enclose the measuring volume.

79. The device according to at least one of claims 65 to 78, characterized in that an electrophoretic additional device is provided having at least one electrophoresis cell having at least one opening for charging/discharging of the sample to be analyzed and/or a washing solution, a wall electrode, a ring electrode, a Neher capillary, an electrode at the tip of the capillary and a droplet outlet.

80. The device according to claim 79, characterized by an electric trap having a quadrupole element with at least four electrodes, preferably pin electrodes or vapor-deposited electrodes in a wafer configuration, wherein preferably a hole of < 1 mm is surrounded, preferably in combination with at least two additional electrodes in at least a sextupole arrangement wherein the quadrupole element is preferably provided with alternating voltage and a direct voltage is applied to the sextupole electrodes which is opposed to the charge of the molecules to be analyzed.

81. The device according to at least one of claims 79 and 80, characterized in that the sheet for receiving the samples has specific binding properties for molecules due to molecular derivatization, in particular in the form of ionexchange ligands or affinity ligands, especially oligopeptides, polypeptides, proteins, antibodies or chelating agents, especially iminodiacetic acid or nitrilotriacetic acid ligands, in particular sheets having different molecular structures of different binding specificity as ligands in different positions.

82. The device according to at least one of claims 79 to 81, characterized in that the sample volume is fixed on a sample receiving means which is two- or three-dimensionally controllable wherein the sample preferably can be fixed in defined space coordinates with respect to the measuring optics by using two- or three-dimensional piezo drives.

83. The device according to at least one of claims 79 to 82, characterized in that said device is equipped with a means which deflects the laser beam in defined coordinates and/or can definitely determine the position of focusing.

84. The device according to claim 52 using a multiarray detector having optics for illuminating an excitation volume comprising all or several measuring volumes or having an optical system for the parallel illumination of several excitation volumes.

85. The device according to at least one of claims 52 to 84, comprising a means (20) for prefocusing the laser beam containing an array (23) for the variation of the diameter of the prefocused laser beam wherein the aperture of said pinhole can be selected depending on the image scale and the size of the measuring volume to be imaged in the image plane.

86. The device according to at least one of claims 52 to 85, comprising two detectors or detector elements for the detection of fluorescent radiation generated due to the excitation by laser light of one or more molecules, molecular complexes and/or molecular fragments, wherein said detectors or detector elements detect light of different wavelengths.

87. The device according to claim 86, comprising a means for the time cross correlation of the detected fluorescence signals.

**Revendications**

1. Procédé pour identifier une ou quelques molécules dans un volume de mesure qui est une partie d'un volume échantillon, en particulier à une dilution $\leq 1$ µM, par utilisation de la spectroscopie par fluorescence de corrélation à excitation par laser (FCS), en présence de chemins de diffusion courts des molécules à analyser, la mesure étant réalisée dans au moins un petit volume de mesure, de préférence $\leq 10^{-14}$ l, ou dans un grand nombre de tels volumes de mesure dans le volume échantillon, par détermination de paramètres spécifiques de la substance, qui sont déterminés par une mesure de la luminescence effectuée sur les molécules à étudier, caractérisé en ce qu'au moins un volume de mesure est disposé à une distance de travail ≤ 1000 μm d'un appareil de focalisation, l'appareil de focalisation étant directement en contact avec le volume échantillon, ou le volume échantillon étant séparé de l'appareil de focalisation par une feuille optiquement transparente.

2. Procédé selon la revendication 1, dans lequel on détermine, en tant que paramètres spécifiques de substance, les coefficients de diffusion par translation, les coefficients de diffusion par rotation, la longueur d'onde d'excitation, la longueur d'onde d'émission, la durée de vie de l'état, excité dans chaque cas, d'un substituant luminescent, ou des combinaisons de ces grandeurs de mesure.

3. Procédé selon au moins l'une des revendications 1 et 2, caractérisé en ce que les coordonnées locales du volume de mesure sont modifiées pendant l'analyse par rapport aux coordonnées locales du volume échantillon, pour analyser des complexes luminescents, stationnaires ou à diffusion très lente, le volume échantillon étant déplacé par rapport au volume de mesure, et/ou la position du faisceau laser et/ou la position du foyer de l'optique d'enregistrement étant modifiée dans le temps, où les coefficients de diffusion par translation tels que mesurés correspondent à une combinaison des coefficients de diffusion par translation effectifs et de la variation spatiale relative, superposée, des coordonnées du volume de mesure.

4. Procédé selon la revendication 3, caractérisé en ce que la modification dans le temps des coordonnées du volume de mesure définit un temps de diffusion apparent d'un complexe luminescent, stationnaire ou à très lente diffusion.

5. Procédé selon l'une des revendications 1 à 4, caractérisé en ce que la luminescence d'un substituant présente une interaction directe avec la molécule à déterminer, le substituant étant un ligand luminophore ou un complexe de ligands dont les paramètres spectroscopiques présentent une corrélation avec la nature ou la fonction de la molécule à doser.

6. Procédé selon au moins l'une des revendications 1 à 5, dans lequel, par l'intermédiaire de la mesure de la diffusion par translation et/ou de la diffusion par rotation avec exploitation de la corrélation, on procède à l'évaluation fonctionnelle, en particulier par la détermination du nombre absolu des molécules présentes et/ou de leur variation dans le temps et/ou par la détermination des concentrations spécifiques de ligands ayant des structures différentes et/ou des complexes de ligands, ainsi que les constantes de liaison thermodynamique, qui en résultent, des interactions spécifiques, et/ou les constantes de vitesse de réactions spécifiques de reconnaissance ou de processus enzymatiques, avec participation de molécules couplées aux ligands.

7. Procédé selon au moins l'une des revendications 1 à 6, dans lequel les molécules ou les complexes moléculaires mesurés sont de nature ionique ou non-ionique.

8. Procédé selon au moins l'une des revendications 1 à 7, caractérisé en ce que la mesure est effectuée dans un champ électrique ou magnétique superposé constant, ou variant dans le temps.

9. Procédé selon la revendication 8, dans lequel les molécules ou complexes moléculaires ioniques d'un volume échantillon sont, à l'aide d'un champ électrique redressé ou d'un champ électrique alternatif, forcés de traverser le volume de mesure et/ou de rester pendant un bref laps de temps dans le volume de mesure.

10. Procédé selon au moins l'une des revendications 8 et/ou 9, caractérisé en ce que, quand on utilise un piège électrique à molécules, le ligand marqué porte une charge plus petite que celle de la molécule cible à complexer, ou opposée à cette charge.

11. Procédé selon au moins l'une des revendications 1 à 10, caractérisé en ce que l'analyse est couplée à un procédé de séparation électrophorétique, pour assurer une séparation spatiale de ligands libres marqués par un colorant, en particulier des sondes à acides nucléiques, d'avec des ligands spécifiquement complexés, en particulier des hybrides d'acides nucléiques, en utilisant de préférence des ligands avec plusieurs colorants fluorescents couplés.

12. Procédé selon au moins l'une des revendications 1 à 11, caractérisé en ce que les complexes à détecter, constitués d'un réactif de détection marqué et d'un analyte, et éventuellement d'un analyte libre, sont préconcentrés dans une première étape d'électrophorèse, et les complexes à détecter sont, dans une deuxième étape d'électrophorèse, transportés dans le volume de mesure.

13. Procédé selon au moins l'une des revendications 1 à 12, caractérisé en ce que le ligand luminophore et/ou le complexe de ligands luminophores présentent un coefficient d'extinction ≥ 30 000 pour un rendement quantique ≥ 0,1, et/ou on utilise en tant que ligand chromophore un ou plusieurs oligomères colorants pour raccourcir le temps effectif de mesure.

**14.** Procédé selon au moins l'une des revendications 1 à 13, caractérisé en ce qu'on analyse des molécules parfaitement définies et/ou des mélanges à l'équilibre de molécules, et/ou des processus réactionnels cinétiques dans au moins un volume échantillon, où, dans le cas de plusieurs volumes échantillon, ces derniers sont disposés sur un support plan avec une disposition bidimensionnelle, en particulier sur une membrane ou une feuille et/ou une surface de galette, ou encore d'une manière linéaire, de préférence dans un système capillaire, auquel cas, les volumes échantillon se trouvant de préférence dans ou sur des cellules naturelles ou modifiées in vitro et/ou dans ou sur des structures vésiculaires artificiellement fabriquées, en particulier des vésicules à base de liposomes ou à base de polymères solubles présentant des propriétés de formation de vésicules.

**15.** Procédé selon au moins l'une des revendications 1 à 14, caractérisé en ce que les différents volumes échantillon sont générés par utilisation d'un système microdistributeur.

**16.** Procédé selon au moins l'une des revendications 1 à 15, caractérisé en ce que l'accès à des génotypes sélectionnés d'une manière phénotypique, sur le plan de l'ADN ou de l'ARN, est rendu possible par le marquage photochimique des positions de mesure correspondantes, par le fait que la position locale du volume de mesure correspondant est caractérisée, de préférence par utilisation du système laser utilisé pour l'analyse du phénotype, en faisant appel à des substances pouvant subir une activation photochimique pour permettre le marquage optique, ou encore par le fait que, sous l'effet de réactifs pouvant subir une activation photochimique, qui sont en contact, sous forme soluble ou liée à la surface, avec le contenu du volume de mesure sélectionné, et peuvent entrer en interaction chimique stable avec les éléments structuraux du génotype sélectionné, en particulier par des dérivés du psoralène, et en ce que par l'intermédiaire d'une réaction de liaison spécifique conduisant à un élément structural couplé, il est possible d'avoir une séparation ciblée du génotype sélectionné, en particulier des substances activables qui sont liées à des oligonucléotides ou de la biotine ou de l'avidine ou de la streptavidine ou des oligopeptides ou des complexants de métaux, ou des combinaisons de ces derniers.

**17.** Procédé selon au moins l'une des revendications 1 à 16, caractérisé en ce que, dans le cadre d'une sélection, des substances ayant d'un point de vue pharmacologique une activité potentielle sont analysées par l'intermédiaire de l'interaction avec des récepteurs spécifiques, par le fait que l'interaction est étudiée avec la liaison d'un ligand marqué par luminescence sur des récepteurs, en utilisant tant des récepteurs naturels sur leurs cellules supports, que des récepteurs sur des cellules supports surexprimant les récepteurs, ou encore des récepteurs sous forme de molécules ou de complexes moléculaires exprimés.

**18.** Procédé selon au moins l'une des revendications 1 à 17, caractérisé en ce que, lors de l'analyse portant sur l'interaction de principes actifs potentiels avec des récepteurs spécifiques et un certain ligand physiologique marqué, on utilise au moins deux types de récepteurs, dont le potentiel de liaison différentielle est déterminé par l'intermédiaire de la liaison interférente de variants et d'un ligand naturel marqué.

**19.** Procédé selon au moins l'une des revendications 1 à 18, caractérisé en ce que, lors de l'analyse de l'interaction de principes actifs potentiels avec des récepteurs spécifiques ou des substances intracellulaires de cellules vivantes dans un volume échantillon, les cellules restent multiples, aptes à se diviser ou métaboliquement actives.

**20.** Procédé selon au moins l'une des revendications 1 à 19, caractérisé en ce que les principes actifs potentiels sont présents, pour détecter des réactions de reconnaissance spécifiques, dans des mélanges complexes naturels, synthétiques ou semi-synthétiques, et ces derniers sont soumis, avant analyse, à une séparation chromatographique, le ligand marqué, qui entre en compétition avec la réaction de reconnaissance spécifique, étant de préférence ajouté aux fractions séparées après la séparation chromatographique, puis la réaction de concurrence est analysée avec une molécule cible lors de l'interaction spécifique.

**21.** Procédé selon au moins l'une des revendications 1 à 20, caractérisé en ce que, au lieu de l'unité de chromatographie, on utilise une unité d'injection d'échantillon.

**22.** Procédé selon au moins l'une des revendications 1 à 21, caractérisé en ce que, à l'aide d'au moins une sonde à acide nucléique marqué, on analyse la nature ou le nombre de molécules d'acide nucléique à complémentarité homologue dans un volume échantillon, en utilisant une hybridation, les marqueurs colorés couplés à la sonde ou bien n'entrent de préférence pas en interaction avec une structure secondaire éventuelle de la sonde, ou bien étant de préférence à même de subir une intercalation spécifique, en modifiant à cette occasion leur comportement de fluorescence spectrale, en particulier par utilisation de colorants à l'orange de thiazole substitués.

**23.** Procédé selon la revendication 22, caractérisé en ce qu'on utilise en tant que sondes marquées, pour détecter des acides nucléiques, de préférence des acides nucléiques simple brin en tant que constituants en excès avec une polarité définie (brin (+) ou (-)) sous forme d'ARN ou d'ADN synthétiques ou cellulaires.

**24.** Procédé selon au moins l'une des revendications 22 et/ou 23, caractérisé en ce que la vitesse de la réaction de complexation est accélérée lors de l'hybridation, par le fait que l'analyse est mise en oeuvre dans un milieu qui contient des sels chaotropes et/ou des solvants organiques, en particulier des phénols.

**25.** Procédé selon au moins l'une des revendications 22 à 24, caractérisé en ce que le degré de complémentarité de l'acide nucléique à hybrider est analysé par l'intermédiaire de la stabilité thermodynamique du complexe.

**26.** Procédé selon au moins l'une des revendications 22 à 25, caractérisé en ce que la détection d'un acide nucléique complémentaire est quantifiée par l'intermédiaire de l'utilisation d'un étalon interne, l'étalon interne se distinguant par au moins une mutation ponctuelle de la séquence de l'acide nucléique à quantifier, et l'analyse étant mise en oeuvre à une température à laquelle les différentes conformations des complexes constitués d'une sonde à étalon interne et d'une sonde portant la molécule d'acide nucléique à analyser, se distinguent pour ce qui concerne la diffusion par translation et/ou la diffusion par rotation des molécules de colorant.

**27.** Procédé selon au moins l'une des revendications 1 à 26, caractérisé en ce que la sensibilité vis-à-vis d'une complexation avec des ligands marqués par un colorant est renforcée par augmentation de la vitesse d'association effective, par le fait que l'on ajoute au milieu réactionnel des réactifs spécifiques qui diminuent le volume de réaction effectif et/ou modifient la gaine d'hydrate autour des réactifs et/ou, grâce à des séparations de phase, conduisent à une concentration effective des réactifs, en particulier par utilisation de polymères et/ou d'oligomères, de préférence des polyéthylèneglycols, des dextranes, des protéines, de la polyvinylpyrrolidone, des réactifs chaotropes, des solvants organiques.

**28.** Procédé selon au moins l'une des revendications 1 à 27, caractérisé en ce que le complexe à détecter est mis à réagir, par l'intermédiaire d'au moins un ligand supplémentaire qui de préférence est ajouté en excès, pour augmenter la différence de taille et/ou de forme entre le réactif de détection et le complexe à détecter, et l'analyte.

**29.** Procédé selon au moins l'une des revendications 1 à 28, caractérisé en ce qu'on augmente la spécificité de la réaction de détection en mettant en oeuvre la formation d'un complexe au moins ternaire avec une combinaison de réactifs de détection, de préférence en excès par rapport à l'analyte, au moins un réactif de détection étant marqué par au moins un ligand à colorant, dont la longueur d'onde d'émission convient à l'excitation d'un colorant par fluorescence au niveau d'un deuxième réactif de détection, qui est couplé au moins en tant que monomère et dont on détecte la fluorescence.

**30.** Procédé selon au moins l'une des revendications 1 à 29, caractérisé en ce qu'au moins deux analytes sont analysés l'un à côté de l'autre dans un échantillon dans le cadre d'une analyse, par réaction de deux réactifs de détection différents, qui sont marqués par au moins deux colorants différents et indépendants l'un de l'autre, et qui sont excités par de la lumière ayant des longueurs d'onde différentes, ou encore sont enregistrés d'une manière indépendante par de la lumière ayant des longueurs d'onde d'émission différentes.

**31.** Procédé selon au moins l'une des revendications 1 à 30, caractérisé en ce qu'un analyte donné est complexé en même temps qu'au moins deux réactifs de détection, qui sont marqués par au moins deux molécules fluorescentes pouvant être optiquement distinguées, la complexation simultanée étant détectée par l'intermédiaire de la formation d'un complexe de transfert d'énergie, et/ou étant détectée par l'intermédiaire de la corrélation temporelle des signaux de longueurs d'onde différentes de l'excitation et/ou de l'émission.

**32.** Procédé selon au moins l'une des revendications 1 à 31, caractérisé en ce qu'on analyse des mélanges de structures vésiculaires dans des échantillons, en particulier les vésicules portant des lipides, en particulier les vésicules du type VLDL, LDL et/ou HDL, par coloration des vésicules avec des anticorps marqués par fluorescence et/ou par incorporation spécifique et à demeure, dans les structures vésiculaires, de molécules marqueuses fluorophores.

**33.** Procédé selon au moins l'une des revendications 1 à 32, caractérisé en ce que les produits d'une biosynthèse de protéines in vitro font l'objet d'une analyse pour déterminer leurs propriétés de liaison spécifique ou leurs propriétés enzymatiques.

**34.** Procédé selon au moins l'une des revendications 1 à 33, caractérisé en ce qu'on détermine sur les répartitions d'oligomères ou de polymères leur coefficient moyen de diffusion par translation et/ou leur coefficient moyen de diffusion par rotation, ainsi que la largeur à mi-hauteur de chacune des répartitions.

35. Procédé selon au moins l'une des revendications 1 à 34, caractérisé en ce que, dans un volume échantillon structuré et immobilisé, constitué de préférence de cellules ou d'associations cellulaires fixées, de tissus, d'organelles, de structures en gel et d'autres volumes échantillon à compartiments tridimensionnels, on détermine dans plusieurs volumes de mesure la dynamique ou la cinétique de réaction de certaines molécules, les coordonnées locales des volumes de mesure étant elles aussi déterminées, puis les volumes de mesure sont réunis pour donner une image bidimensionnelle ou tridimensionnelle.

36. Procédé selon au moins l'une des revendications 1 à 35, caractérisé en ce que la formation d'un complexe entre les molécules réceptrices et les ligands éventuellement présents dans un échantillon est analysée en compétition avec des ligands indiqués par un colorant en solution, ou en prenant en compte des molécules couplées en phase solide, ou en prenant en compte des molécules associées à des cellules, les échantillons biologiques étant placés dans des feuilles, de façon que les volumes de mesure à analyser soient analysés à une distance préférée au plus égale à 1000 μm.

37. Procédé selon au moins l'une des revendications 1 à 36, dans lequel on utilise des systèmes de trousses qui ont été mis au point pour les analyses destinées à déterminer la dépolarisation par fluorescence.

38. Procédé selon au moins l'une des revendications 1 à 37, pour détecter et/ou identifier des micro-organismes individuels, en particulier des bactéries, des cellules en suspension ou des virus, on détecte des interactions spécifiques ou des activités enzymatiques de molécules cibles marquées par fluorescence, étant détectées avec des éléments structuraux exprimés en surface de protéines membranaires naturelles ou génétiquement recombinées.

39. Procédé selon la revendication 1 pour identifier une ou quelques molécules dans plusieurs petites unités de volume, caractérisé en ce qu'on analyse plusieurs petites unités de volume, en tant que volumes de mesure, constitués d'un grand volume d'excitation commun ou de plusieurs petits volumes d'excitation, et/ou on les analyse, successivement dans le temps, avec ou sans modification des coordonnées spatiales du volume de mesure ou des volumes de mesure à l'intérieur de l'échantillon.

40. Procédé selon au moins l'une des revendications 1 à 39, caractérisé en ce que les temps de mesure sont de l'ordre de quelques millisecondes à quelques secondes, et sont en particulier ≤ 500 ms.

41. Procédé selon au moins l'une des revendications 1 à 40, caractérisé en ce qu'on utilise un dispositif (20) pour préfocaliser le faisceau laser, qui comporte un montage (23) destiné à faire varier le diamètre du faisceau laser préfocalisé, ainsi qu'un diaphragme, disposé en position confocale par rapport au volume de mesure, dans le plan image à l'intérieur du trajet des rayons du rayonnement fluorescent, pour délimiter la quantité du rayonnement fluorescent devant être détecté par un appareil détecteur, les dimensions de l'ouverture du diaphragme pouvant être choisies en fonction de l'échelle de formation d'image et de la taille du volume de mesure devant former une image dans le plan image, son diamètre étant en particulier ≤ 100 μm et de préférence ≤ 20 μm et allant jusqu'à 30 μm, ou encore un montage confocal du détecteur, qui remplace le diaphragme.

42. Utilisation d'un procédé selon la revendication 35 pour la représentation bidimensionnelle ou tridimensionnelle de processus dynamiques ou de processus de cinétique réactionnelle dans un volume échantillon à structure tridimensionnelle, constitué de préférence de cellules ou associations de cellules fixes, de tissus, organelles, ou structures en gel.

43. Utilisation du procédé selon au moins l'une des revendications 1 à 37, pour l'analyse in situ de préparations fixées en surface, en particulier de complexes macromoléculaires tels que les chromosomes, les complexes de transcription, les complexes de traduction ou les cellules ou structures tissulaires, avec pour objectif la localisation de certaines molécules cibles et/ou de la corrélation spatiale avec des positions de référence, de préférence grâce à l'utilisation d'au moins deux ligands marqués selon l'invention.

44. Utilisation du procédé selon au moins l'une des revendications 1 à 37, pour déterminer le rendement de réaction d'une réaction spécifique de conversion de matière ou d'une réaction de liaison d'une molécule portant un ligand de colorant, les éléments volumiques à évaluer étant simultanément ou successivement exposés aux conditions de la réaction, et en ce que, après une durée de réaction prédéfinie, on met en oeuvre une analyse des produits de la réaction.

45. Utilisation du procédé selon au moins l'une des revendications 1 à 37, pour le dosage qualitatif et/ou quantitatif de molécules spécifiques et/ou de complexes moléculaires et/ou de l'environnement moléculaire des molécules et/ou des complexes moléculaires, en particulier pour doser et/ou évaluer des récepteurs physiologiquement actifs, en particulier les récepteurs de surface, ou pour évaluer les ligands ou complexes de ligands se liant à des récepteurs.

**46.** Utilisation du procédé selon au moins l'une des revendications 1 à 37, en tant que solution de remplacement aux analyses radio-immunologiques ou enzymo-immunologiques, par le fait que la liaison compétitive d'une molécule recherchée est mesurée à l'aide d'un ligand portant un luminophore au niveau d'une molécule réceptrice.

**47.** Utilisation du procédé selon au moins l'une des revendications 1 à 37, pour analyser des collectifs moléculaires complexes tels que des molécules obtenues par réplication, en particulier des acides nucléiques et les protéines ou peptides qui en dérivent, des produits de réaction chimique complexes, des systèmes complexes de produits de synthèse provenant de réactions chimiques ou des mélanges complexes de métabolites secondaires, en tant que produits de synthèse cellulaire.

**48.** Utilisation du procédé selon au moins l'une des revendications 1 à 37, l'analyse de mélanges complexes de substances s'effectuant en ligne avec un fractionnement analytique.

**49.** Utilisation du procédé selon au moins l'une des revendications 1 à 37, pour déterminer la mobilité de molécules, de complexes moléculaires ou de cellules, en particulier de spermatozoïdes, de cellules monocytaires, d'éléments contractiles, de molécules à transport actif ou passif et de molécules membranaires.

**50.** Utilisation du procédé selon la revendication 38 pour la détection et l'obtention préparative d'au moins un gène spécifique d'un micro-organisme, dont au moins un produit génique est présenté sur la membrane ou la gaine intérieure ou extérieure.

**51.** Utilisation du procédé selon la revendication 38 pour déterminer la fonction de produits géniques de segments géniques prédéfinis.

**52.** Appareil pour détecter une ou plusieurs molécules, complexes moléculaires et/ou fractions de molécules, en particulier selon une dilution $\leq 1\ \mu M$, dans au moins un volume de mesure, de préférence $\leq 10^{-14}$ l, qui fait partie d'un volume échantillon, à l'aide d'une spectroscopie par fluorescence, et comportant :

- un appareil de production d'un faisceau laser pour produire un faisceau laser ayant une première longueur d'onde,
- un appareil de focalisation pour focaliser le faisceau laser sur le volume de mesure, le faisceau laser dans le volume de mesure étant fortement concentré de façon à occuper essentiellement et exclusivement le volume de mesure,
- un appareil détecteur pour détecter le rayonnement fluorescent produit en conséquence de l'excitation par la lumière laser d'une ou plusieurs molécules, complexes moléculaires et/ou fractions de molécules,
- un diaphragme, disposé d'une manière confocale par rapport au volume de mesure, à l'intérieur du trajet des rayons du rayonnement fluorescent dans le plan image, pour limiter la quantité du rayonnement fluorescent devant être détecté par l'appareil détecteur, le diaphragme ayant un diamètre en particulier $\leq 100\ \mu m$ et de préférence $\leq 20$ et allant jusqu'à $30\ \mu m$, ou encore un montage confocal du détecteur, qui remplace le diaphragme, caractérisé en ce que le volume de mesure se trouve à une distance de l'appareil de focalisation allant jusqu'à $1000\ \mu m$.

**53.** Appareil selon la revendication 52, caractérisé en ce que, pour une échelle de formation d'image de 1:100, 1:60 ou 1:40 entre le volume de mesure et le plan image, et pour un volume de mesure ayant une extension $\leq 0,1\ \mu m$ dans chaque dimension, le diaphragme a un diamètre respectivement d'environ $10\ \mu m$, $6\ \mu m$ et $4\ \mu m$.

**54.** Appareil selon la revendication 52 ou 53, caractérisé en ce que l'optique destinée au faisceau laser et/ou l'optique destinée au rayonnement fluorescent a une grande ouverture numérique, de préférence $\geq 1,2$.

**55.** Appareil selon l'une des revendications 52 à 54, caractérisé en ce que l'appareil de focalisation comporte un appareil de préfocalisation pour préfocaliser le faisceau laser et un objectif de focalisation pour focaliser le faisceau laser préfocalisé sur le volume de mesure.

**56.** Appareil selon la revendication 55, caractérisé en ce que la distance entre l'objectif de focalisation et le volume de mesure peut aller jusqu'à $1000\ \mu m$.

**57.** Appareil selon la revendication 55, caractérisé en ce qu'entre l'appareil de préfocalisation et l'objectif de focalisation est disposé un miroir semi-réfléchissant destiné à faire dévier sur l'objectif de focalisation le faisceau laser préfocalisé.

**58.** Appareil selon la revendication 57, caractérisé en ce que le diaphragme est disposé sur la face du miroir semi-réfléchissant opposée à celle de l'objectif de focalisation.

**59.** Appareil selon l'une des revendications 52 à 58, caractérisé en ce que l'appareil détecteur comporte au moins un et de préférence plusieurs détecteurs pour détecter le rayonnement fluorescent.

**60.** Appareil selon l'une des revendications 52 à 58, caractérisé en ce qu'entre le diaphragme et l'appareil détecteur est ou sont disposés au moins un filtre optique et/ou au moins une lentille de formation d'image et/ou au moins un miroir semi-réfléchissant et/ou un miroir réfléchissant.

**61.** Appareil selon l'une des revendications 52 à 60, caractérisé par un appareil supplémentaire de production d'un faisceau laser, destiné à produire un faisceau laser supplémentaire ayant une longueur d'onde différente de la première longueur d'onde, un appareil de focalisation supplémentaire destiné à focaliser le faisceau laser supplémentaire sur le volume de mesure, avec une forte concentration, telle que le faisceau laser supplémentaire occupe pour l'essentiel exclusivement le volume de mesure, un appareil détecteur supplémentaire pour détecter le rayonnement fluorescent produit en conséquence de l'excitation d'une ou plusieurs molécules, complexes moléculaires et/ou fractions de molécule, et une unité de corrélateur, qui est connectée aux deux appareils détecteurs.

**62.** Appareil selon la revendication 61, caractérisé par:

- un support en forme de T, comportant un premier bras porteur (65) et un deuxième bras porteur (74), relié au premier et courant perpendiculairement au premier bras porteur (65),
- des dispositifs de fixation (83, 84), disposés aux extrémités côté frontal du deuxième bras porteur (74), pour le guidage et le maintien axiaux d'éléments optiques (lentille, filtre, miroir, détecteur) pour les deux faisceaux laser et les deux rayonnements fluorescents, les faisceaux laser focalisés tombant sur un porte-objet, qui porte le volume de mesure et de préférence est disposé en position centrale entre les deux extrémités côté frontal du deuxième bras porteur (74), en étant maintenu de façon à pouvoir être détaché de ces dernières,
- les deux dispositifs de fixation (83, 84) étant mobiles d'une manière synchrone par rapport aux extrémités côté frontal, dont chacune est dirigée vers eux, du deuxième bras porteur (74) dans la direction de son étendue longitudinale, les deux dispositifs de fixation (83, 84) s'étendant dans la direction de l'extension du premier bras porteur (65), et les deux faisceaux laser pouvant être déviés par des miroirs de renvoi et/ou des miroirs semi-réfléchissants (66, 67, 72, 73) par l'intermédiaire de passages optiques (ouvertures 69), en sortant de l'intérieur du premier bras porteur (65) pour arriver sur les éléments optiques, destinés aux faisceaux laser, maintenus sur les dispositifs de fixation (83, 84).

**63.** Appareil selon la revendication 62, caractérisé en ce que les éléments optiques destinés aux faisceaux laser sont disposés contre les faces intérieures, dirigées l'une vers l'autre, des deux dispositifs de fixation (83, 84), et en ce que les éléments optiques destinés au rayonnement fluorescent sont disposés contre les faces extérieures, opposées l'une à l'autre, des deux dispositifs de fixation (83, 84).

**64.** Appareil selon la revendication 62 ou 63, caractérisé en ce que, pour compenser un décalage des foyers des objectifs de focalisation, l'un de ces derniers peut être positionné à l'aide d'un organe de réglage, en particulier à commande piézo-électrique.

**65.** Appareil selon la revendication 52, comportant une optique de microscope connue en soi pour la focalisation laser destinée à l'excitation par fluorescence dans un petit volume de mesure d'une solution très diluée, et pour la formation d'une image, avec foyer commun, de la lumière fluorescente émise, pour permettre une mesure ultérieure, caractérisé en ce que l'optique de microscope comprend au moins une optique ayant une grande ouverture numérique, de préférence $\geq 1,2$, la quantité de lumière est limitée par un diaphragme en disposition confocale dans le plan de l'image après l'objectif de sortie, et le volume de mesure est positionné à une distance allant jusqu'à 1000 µm par rapport à l'objectif de sortie.

**66.** Appareil selon la revendication 65, pour produire une focalisation, à effet limiteur de diffraction, d'un faisceau laser, comportant une unité de production de signaux de mesure et une unité d'observation, ainsi que sur le côté de production du signal de mesure un dispositif (20) pour préfocaliser un faisceau laser (21), un miroir dichroïque (30) pour dévier le faisceau laser (21), et une autre lentille (40) pour focaliser le faisceau laser sur le volume de mesure, l'unité d'observation comportant des dispositifs compteurs de photons (52), un dispositif corrélateur (71), un compteur (72) à plusieurs canaux, le signal de mesure étant éventuellement traité et/ou évalué à l'aide d'un ordinateur.

**67.** Appareil selon la revendication 66, dans lequel le dispositif (20) de préfocalisation est pourvu d'une lentille (22) et d'un montage (23) correspondant à une optique de microscope, le faisceau laser (21) collimaté étant focalisé à l'aide de la lentille (22) sur le plan image $B_1$ et focalisé sur le plan image $B_2$ (image intermédiaire) par le montage (23).

**68.** Appareil selon la revendication 67, dans lequel le montage (23) est pourvu d'un groupe de lentilles amovibles, pour faire varier le diamètre du faisceau laser préfocalisé (21).

**69.** Appareil selon au moins l'une des revendications 66 à 68, dans lequel une unité de détection est constituée de deux détecteurs (52, 53), avec un diviseur de faisceau (60), qui répartit la lumière (55) émise par l'échantillon sur les détecteurs (52, 53).

**70.** Appareil selon la revendication 69, dans lequel le faisceau lumineux émis (55) passe, en amont des détecteurs (52, 53), par des lentilles (56, 57) de formation d'image et des éléments filtrants (58, 59).

**71.** Appareil selon au moins l'une des revendications 66 à 70, dans lequel les détecteurs (52, 53) détectent de la lumière ayant différentes longueurs d'onde.

**72.** Appareil selon au moins l'une des revendications 66 à 71, dans lequel au moins un ou plusieurs éléments détecteurs sont placés éventuellement sous forme d'une matrice de détecteurs dans le plan image.

**73.** Appareil selon au moins l'une des revendications 66 à 72, dans lequel un diaphragme (50) est disposé dans le trajet (55) des rayons.

**74.** Appareil selon au moins l'une des revendications 65 à 73, caractérisé en ce qu'on utilise deux objectifs, qui forment entre eux un angle > 90°.

**75.** Appareil selon au moins l'une des revendications 65 à 74, caractérisé en ce qu'on utilise en tant que source lumineuse un laser continu ayant des longueurs d'onde d'émission > 200 nm, en particulier un laser à argon, à krypton, à hélium-néon, à hélium-cadmium, ou encore un laser à impulsions haute fréquence ≥ 20 MHz, ayant une puissance ≥ 0,5 mW.

**76.** Appareil selon au moins l'une des revendications 65 à 75, caractérisé en ce que des dispositifs pour le comptage des photons individuels, tels que des détecteurs à diodes à avalanche, sont disposés sur le trajet des rayons de la lumière émise, de préférence dans le plan du diaphragme, pour enregistrer la lumière émise, l'analyse du signal s'effectuant à l'aide d'un corrélateur numérique ou d'un compteur à plusieurs canaux.

**77.** Appareil selon au moins l'une des revendications 65 à 76, caractérisé en ce que le volume de mesure est fixé dans un volume échantillon entre deux capillaires, les capillaires étant, sur leur face extérieure, pourvus d'une enduction conductrice et chimiquement inerte, en particulier d'un dépôt par métallisation sous vide, en particulier d'un dépôt d'or sur fond de chrome, les enductions conductrices étant reliées à un champ redressé, régulé par ordinateur, ou à un champ électrique alternatif, et connectées l'une à l'autre d'une manière conductrice par l'intermédiaire du volume de mesure.

**78.** Appareil selon au moins l'une des revendications 65 à 77, caractérisé en ce que deux optiques de microscope opposées entourent le volume de mesure.

**79.** Appareil selon au moins l'une des revendications 65 à 78, caractérisé en ce qu'il comprend un appareil additionnel d'électrophorèse, qui comporte au moins une cellule d'électrophorèse avec au moins une ouverture pour l'introduction/le prélèvement de l'échantillon à analyser et/ou d'une solution de lavage, une électrode de paroi, une électrode annulaire, un capillaire de Neher, une électrode à l'extrémité du capillaire et une sortie de goutte à goutte.

**80.** Appareil selon la revendication 79, caractérisé par un piège électrique avec un élément quadripolaire comportant au moins quatre électrodes, de préférence des électrodes en aiguille ou des électrodes à métallisation sous vide dans une configuration en galette, en bordant de préférence un trou < 1 mm, de préférence en combinaison avec au moins deux autres électrodes selon un montage au moins sextupolaire, l'élément quadripolaire étant de préférence alimenté par une tension alternative, et les électrodes sextupolaires étant attaquées par une tension continue, qui est dirigée dans le sens inverse de la charge de la molécule à analyser.

**81.** Appareil selon au moins l'une des revendications 79 et 80, caractérisé en ce que la feuille destinée à recevoir les échantillons grâce à une dérivatisation moléculaire présente des propriétés de liaison spécifique vis-à-vis de molécules, en particulier sous forme de ligands échangeurs d'ions ou de ligands d'affinité, en particulier des oligopeptides, des polypeptides, des protéines, des anticorps ou des chélatants, en particulier des ligands à base d'acide iminodiacétique ou nitrilotriacétique, en particulier des feuilles qui présentent en tant que ligands des structures moléculaires différentes du point de vue de la spécificité locale, ayant différentes spécificités de liaison.

**82.** Appareil selon au moins l'une des revendications 79 à 81, caractérisé en ce que le volume échantillon est fixé sur un appareil de prélèvement d'échantillons pouvant être commandé dans deux ou trois dimensions, l'échantillon pouvant être fixé de préférence par utilisation de commandes piézo-électriques bidimensionnelles ou tridimensionnelles dans certaines coordonnées spatiales par rapport à l'optique de mesure.

**83.** Appareil selon au moins l'une des revendications 79 à 82, caractérisé en ce que l'appareil est équipé d'un dispositif qui dévie le faisceau laser selon des coordonnées prédéfinies et/ou peut fixer d'une manière prédéfinie la position de la focalisation.

**84.** Appareil selon la revendication 52, qui utilise un détecteur à plusieurs matrices, avec une optique pour éclairer un volume d'excitation qui englobe la totalité des volumes de mesure ou plusieurs d'entre eux, ou encore un système optique pour l'éclairement parallèle de plusieurs volumes d'excitation.

**85.** Appareil selon au moins l'une des revendications 52 à 84, comportant un dispositif (20) pour la préfocalisation du faisceau laser, qui contient un montage (23) pour faire varier le diamètre du faisceau laser préfocalisé, l'ouverture du diaphragme pouvant être choisie en fonction de l'échelle de formation d'image et de la taille du volume de mesure devant former une image dans le plan image.

**86.** Appareil selon au moins l'une des revendications 52 à 85, comportant deux détecteurs ou éléments détecteurs pour détecter un rayonnement fluorescent produit en conséquence de l'excitation par une lumière laser d'une ou plusieurs molécules, complexes moléculaires et/ou fractions de molécule, où les détecteurs ou éléments détecteurs détectent chacun de la lumière ayant une longueur d'onde différente.

**87.** Appareil selon la revendication 86, comportant un dispositif pour la corrélation croisée dans le temps des signaux de fluorescence enregistrés.

# Rezeptor Assay (1)

+ potentieller Wirkstoff

2x

- antagonistischer Aktivator
- antagonistischer Blocker
- allosterer Blocker

- allosterer Komplex-Stabilisator
  (Blocker oder Aktivator)•

FIG. 1

# Rezeptor Assay (2)

FIG. 2

# FCS-Analyse mit Multi Well-Folien

H$_2$O — Probe — Multi-Well-Trägerfolien — Optik — Laser — Multiplier / Korrelator

FIG. 3

EP 0 679 251 B1

# FCS - Fitness Bestimmung von Mutanten

Emittierte Fluoreszenz

Korrelator

Laser-Strahl

- Molekül-Detektion
- Konzentration
- Gleichgewichtskonstante
- Geschwindigkeits- konstante
- Produkt-Bestimmung
- Mobilitätsassay
- Konformationsänderung

$10^4$ - $10^6$ Proben pro $cm^2$

y

x

Tubus

- Folie
- Kapillarwandung
- Wafer
- etc.

$H_2O$

Querschnitt

100 - 1000 μm

$10^{-14}$ - $10^{-16}$ l Volumen-Element

wäßrige Probe mit (nicht-) adressierter Position
- Tröpfchen
- Zelle
- Vesikel
- Gelpore
- Kapillarsegment
- AFFYMAX-Element
- etc.

Chemische Beschichtung
- Metallchelat
- Ionenaustauscher
- photoreaktiver Ligand

Schutzmatrix
- Gasphase
- hydrophobe Flüssigkeit
- Lipidmantel
- polymere Matrix

FIG. 4

# Detektion von Molekülen
# an stationären Strukturen
# durch relative zeitliche Veränderung der
# Ortskoordinaten des Meßvolumens

Laserstrahl

konfokal
abgebildetes
Meßvolumen

y

z

x

FIG. 5

# Einzelmolekül-Detektion in der elektrischen Falle

Detektor 2

konfokale Optik
großer Apertur

Laser

− +

Mikrokapillaren mit
außen aufgebrachter
Chrom/Gold-
Bedampfung fixieren das
Probenvolumen mit
eingeschlossenem
Meßvolumen

Laser

Detektor 1

FIG. 6

# FCS - Markierung der selektierten Genotypen

a) physikalischer Zugriff auf optisch markierte Volumenelemente

b) Licht-induzierte Verknüpfung der Nukleinsäure selektierter Volumenelemente mit Affinitätsliganden
- an der Trägeroberfläche
– mit löslichen Liganden

FIG. 7

# Präparation der DNA/RNA von FCS-selektierten Genotypen

Gemisch aller Nukleinsäuren nach der Phänotyp-Bewertung:

| | |
|---|---|
| Plasmid DNA<br>zelluläre DNA<br>r-/t-/mRNA | Überschuß aus nicht markierten<br>Volumenelementen |
| Plasmid DNA<br>zelluläre DNA<br>r-/t-/mRNA<br>(enthaltend<br>Sequenzen mit<br>selektierter<br>Phänotyp<br>Kodierung) | Unterschuß aus markierten<br>Volumenelementen, in denen<br>Affinitätsliganden (L) photochemisch<br>(Laser-induziert) an die im jeweiligen<br>Volumenelement vorhandenen<br>Nukleinsäuren gekoppelt wurden. |

N. a. — L — B - - S ——(M)

cDNA-Synthese oder
enzymatische Amplifikation

N. a.: Nukleinsäure.
L: Ligand mit spezifischer Nukleinsäureaffinität, der sich photochemisch kovalent und vorzugsweise reversibel mit einer Nukleinsäure koppeln läßt (z.B. ein Psoralen-Derivat). Der Ligand ist vorzugsweise mit einem Substituenten verknüpft, der die nachfolgende Anreicherung der Nukleinsäuren ermöglicht. Dies können beispielsweise hydrophobe Substituenten sein, um Nukleinsäuren chromatographisch über reversed phase-Chromatographie zu reinigen. Für die Affinitätschromatographie bieten sich Substituenten wie Biotin an (B), so daß sich die Nukleinsäuren über (Strept-)Avidin-Komplexierung (S) mit entsprechend modifizierten Magnetobeads (M) oder Oberflächen anreichern lassen.

FIG. 8

# FLUCS-Analyse komplexer Substanzgemische nach chromatographischer Trennung in Fraktionen

FIG. 9

# Laser-Korrelations-Mikroskop

FIG. 10

# Auswahl möglicher Assays

FIG. 11

# Elektrophoresezelle

FIG. 12

Laser

oberes
Sextupol
(gleichgerichtetes
Feld)

U = -100 V

Quadrupol
(Wechselfeld)

U = 0 V

unteres
Sextupol
(gleichgerichtetes
Feld)

U = -100 V

FIG. 13

FIG. 14

FIG. 15

FIG. 16

FIG. 17a)

FIG. 17b)

Fig. 18a)

FIG. 18b)

FIG. 18c)

**Bestimmung des Dissoziationsverhaltens von komplexen in parallel geführten Experimenten durch FCS**

Reaktionsansatz    1      2      3      n-1      n

t     t     t     t     t

FIG. 19

# Verschiedene erfindungsgemäße Ausführungsformen der elektrischen Falle

(a) a, b, c, d als Quadrupol-Elektroden (Metall-beschichtete Neher-Spitzen oder Metall-bedampfte Elektroden auf Mikrostrukturen auf flächigen Probenträgern (Silikon, Glas und andere Basismaterialien).
e, f als Sextupol-Elektroden (z.B. als Metall-bedampfte Austrittslinse eines oder zweier Objektive.
Die Justierung erfolgt über x, y, z-Justierung.

(b) Verwendung flächiger Träger mit geätzten Elektrodenkanälen (oder LIGA-Technik-hergestellten Formen), über die geladene Moleküle in ihrer Bewegung im elektrischen Feld gesteuert, zugeführt oder abgezogen werden können. Die Bodenplatten zu e und f können als Sextupolelektroden beschichtete Objektive sein oder Metall-bedampfte Abdeckungen.

Elektrode +/- 0-100 V

Kapillare mit Probevolumen

(c)

Verwendung von (b) in Kombination mit einem Probengebersystem, bestehend aus einer Kapillare aus mineralichen Materialien (z.B. Glas, Slicium etc. oder Kunststoff z.B. Teflon) zur großvolumigen Probenaufnahme mit Elektrode am Kapillarenende (ca. +/- 0-100Volt) und mit Sammelelektrode auf Erdpotential (0 Volt).

Sammelelektrode mit Erdung (Potential 0 Volt) und Pinhole zum Durchtritt von Ionen in das Quadrupol-Feld.

FIG. 20

# Moleküldetektion

(a)

Wenn sich Zielmoleküle innerhalb des Quadrupol- oder Sextupolfeldes befinden lassen sich durch ein zufälliges Wechselfeld über die Elektroden a, b, c, d die Moleküle in erzwungene Bewegungen versetzen. Sie werden somit erfindungsgemäß zählbar.

(b) Ein Molekül wird durch einen Mehrelement-Detektor in seiner Lage in der Falle erkannt. Durch aktive Rückkopplung wird das Quadrupol/Sextupol-Feld so gestellt, daß das Molekül in einem bestimmten Flächen-/Volumenelement in seiner Lage fixiert wird.

FIG. 21

50 bp

FIG.22

FIG. 23

# Kleine Anregungsvolumina (a) und kleine Meßvolumina (b) und kleine Volumina bei parallelen Messungen (c)

(a)

Meßvolumen

Anregungsvolumen

Ausschnitt aus einem Anregungslichtbündel ohne Vorfokussierung mit erfindungsgemäßer Abbildung eines kleinen Meßvolumens durch eine Lochblende. Bereich der Photoinaktivierung von Fluoreszenzmarkern vor Eintritt in das Meßvolumen.

Erfindungsgemäßes kleines Meßvolumen

$c_{eff} = {}^{c}Fluoreszenzmarker$     $c_{eff} < {}^{c}Fluoreszenzmarker$

(b)

Ausschnitt aus einem Anregungslichtbündel mit Vorfokussierung mit erfindungsgemäßer Abbildung eines kleinen Meßvolumens durch eine Lochblende (3D-Gauss-Volumen).

Erfindungsgemäßes kleines Meßvolumen

$c_{eff} = {}^{c}Fluoreszenzmarker$     $c_{eff} = {}^{c}Fluoreszenzmarker$

(c)

Ausschnitt aus parallel eingestrahlten Anregungslichtbündeln mit Vorfokussierung mit erfindungsgemäßen Abbildungen kleiner Meßvolumina bzw. zeitlich aufeinanderfolgenden Ausleuchtungen und Messungen unterschiedlicher Volumenelementen mit unterschiedlichen Raumkoordinaten im Probevolumen.

FIG. 24

FIG. 25

FIG. 26

Kanalzeit

FIG. 27

Autokorrelationsfunktion (willkürliche Einheiten)

Zeit(kanal)

FIG. 28a

Legend:
— 0
– – 0.5
–·– 1
–··– 2
····· 4
– – 8
–·– 16
····· 32
– – 64
—— 128
– – – 192
····· 256

FIG. 28b

FIG. 28c

FIG. 29

RDV10.DAT (Rho-dUTP mit Stahlspitzen)

Amplitude: 2V, Frequenz: 4 Hz

Zählrate (kHz) (Konzentrationsmaß)

Zeit (s)

FIG. 30

Vielkanal-Registrierung von Rhodamin 6G (Einzelmoleküle)

FIG. 31